# EUROPEAN PATENT APPLICATION

(11) **EP 1 508 993 A1**
(43) Date of publication of application: **23.02.2005**
(21) Application number: 03728022.9
(22) Date of filing: 02.05.2003
(51) Int. Cl.: H04L 9/32, G09C 1/00

(54) **INFORMATION PROCESSING SYSTEM AND METHOD, INFORMATION PROCESSING DEVICE AND METHOD, RECORDING MEDIUM, AND PROGRAM**

(30) Priority: 24.05.2002 JP 2002149925; 14.03.2003 JP 2003069304
(71) Applicant: Sony Corporation, Tokyo 141-0001 (JP)
(72) Inventor: Iino, Yoichiro, Shinagawa-ku, Tokyo 141-0001 (JP); Tanaka, Naoki, Shinagawa-ku, Tokyo 141-0001 (JP)
(74) Representative: Pilch, Adam John Michael
(86) International application number: PCT/JP2003/005605
(87) International publication number: WO 2003/101042

(57) **Abstract**

The present invention pertains to an information processing system and method, an information processing apparatus and method, a recording medium, and a program designed such that a service provider can enhance the efficiency and security of its authentication when authenticating a user. A first cryptographic key and a second cryptographic key to be paired with the first cryptographic key which are utilized when a service provider terminal 13 authenticates a key holding apparatus 22 of a user apparatus 11 based on a predetermined authentication technique, are generated by a key allotter terminal 12, and the first cryptographic key is sent to the service provider terminal 13 via a network 14, and the second cryptographic key is sent to the key holding apparatus 22 via the network 14 and a user terminal 21. The present invention is applicable to a system in which each of a plurality of service providers authenticates a user when each of the plurality of service providers provides a corresponding service to the user via communication such as the Internet.

## Description

### Technical Field

The present invention relates to an information processing system and method, an information processing apparatus and method, a recording medium, and a program, and particularly to an information processing system and method, an information processing apparatus and method, a recording medium, and a program designed such that a service provider can enhance the efficiency and security of its authentication when authenticating a user.

### Background Art

Generally, a person who provides a pay service collects its charge from the other party to whom he/she provides the service.

For instance, a person who provides a service to the other party face-to-face with the party often collects cash from the other party at the time when he/she provides the service.

By contrast, a person who provides a pay service via communication such as the Internet often provides the service either by collecting the charge of the service later as a "credit" to the other party or after checking that the other party acquires the right to utilize the service by paying the charge, since electronic cash exchangeable via communication has not yet been commercialized. Therefore, the person who provides a pay service via communication needs to identify, i.e., to authenticate the other party to whom he/she provides the service, before providing the service.

When this authentication is performed, the authenticating party and the party to be authenticated need to have mutually corresponding information.

Note that when such authentication is performed, the party who has such mutually corresponding information and identifies the other party will be called as a verifier, whereas the party who is identified will be called as a certifier, hereinafter. Further, a technique used to have the certifier authenticated by the verifier will be called as an authentication technique.

Conventionally, password authentication, common key authentication, and public key authentication are known as authentication techniques.

Each of these authentication techniques, i.e., the password authentication, the common key authentication, and the public key authentication will be described below respectively.

### (Password authentication)

First, the password authentication will be described.

In the password authentication, a certifier registers a login name unique to each certifier, with a verifier beforehand, to fix his/her password. Further, the certifier and the verifier exchanges an agreement not to leak the password to anyone except themselves.

In this case, the person who knows the correspondence between the specific login name and the password is limited only to the certifier authenticated by that login name and the verifier, in principle. Therefore, the verifier judges that the person who is able to show the specific login name and the password corresponding thereto is the certifier who has made registration under that login name.

That is, the password authentication is a system in which the authentication is performed by the certifier directly showing the verifier the knowledge which only the verifier and the certifier know.

Therefore, it has a shortcoming that the password is susceptible to leakage at the time of authentication, but the login name and the password can be memorized directly by a person (certifier), and thus has a feature that no special apparatus is required for authentication. Hence, the password authentication is widely utilized.

In the password authentication, the verifier and the certifier have the same information, and thus it is possible to exchange their roles between the verifier and the certifier. Such authentication will hereinafter be called as bidirectional authentication. Provided that, in the password authentication, the bidirectional property is not usually used.

### (Common key authentication)

Next, the common key authentication will be described.

Note that "Challenge & Response authentication" using common key cryptography will herein be called as common key authentication.

The common key cryptography is also called as symmetric cryptography, and is a cryptographic algorithm having a property that a cryptographic key for use in encrypting data and a cryptographic key for use in decryption are identical (or a property that even when the cryptographic keys are different, one of the cryptographic keys can be easily calculated from the other cryptographic key) . As the common key cryptography, the DES (Data Encryption Standard) and the Triple DES adopted by the National Institute of Standards and Technology of the U.S. Department of Commerce, and FEAL (Fast Data Encipherment Algorithm) developed by NTT(Nippon Telegraph and Telephone Corporation (trade name)), and the like are known.

The common key authentication is a technique by which when each of a verifier and a certifier in authentication has an identical cryptographic key Kₙ for common key cryptography, the verifier checks that the certifier has the cryptographic key Kₙ without leaking that cryptographic key Kₙ to anybody other than the two parties having the cryptographic keys Kₙ.

A basic, specific example of the common key authentication will be described.

First, the verifier generates a random number r, and sends to the certifier (this step will hereinafter be written also as Challenge).

The certifier encrypts this random number r with a cryptographic key Kₙ, computes a value R = E(Kₙ, r) (wherein the E(Kₙ, r) means encryption of the random number r utilizing the key Kₙ), and returns to the verifier (this step will hereinafter be also written as Response).

The verifier decrypts the value R with the cryptographic key Kₙ, for comparison with the original random number r, and if the cryptographic key Kₙ matches with the original random number r, judges that the certifier has the cryptographic key Kₙ.

Therefore, when a person having a specific cryptographic key Kₙ is identified to be only one certifier other than the verifier, authentication of that certifier becomes possible by the cryptographic key Kₙ.

For such common key authentication, a standard technique is defined in, for instance, ISO(International Organization for Standardization)/IEC(International Electro technical Commission) 9798-2. In the common key authentication, the verifier and the certifier have the same information, and thus the common key authentication is a bidirectional authentication technique.

In the above-mentioned password authentication, the password kept secret only to the verifier and the certifier is directly compared, and thus has the shortcoming that the password is susceptible to leakage at the time of authentication as mentioned above. By contrast, in the common key authentication, the cryptographic key(s) for the common key cryptography is used in the Challenge & Response authentication as mentioned above, and thus has a feature that the cryptographic key (s) is hard to leak out. Therefore, the common key authentication is superior in terms of security than the password authentication.

Provided that, in the common key authentication, it would be difficult for a person to perform calculations necessary for the Challenge & Response authentication, and thus the cryptographic key is usually held by a special apparatus called an IC(Integrated Circuit) card. Note that the IC card holding the cryptographic key for common key cryptography will be written as a CKC-IC card whenever appropriate in order to distinguish it from an IC card holding keys for public key cryptography to be described later.

The 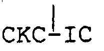 card internally has a function of performing calculations necessary for the common key authentication. Thus, as long as the common key authentication is performed by the CKC-IC card, there is only little possibility that the cryptographic key(s) will leak out. However, there is a possibility that the cryptographic key(s) will leak due to the CKC-IC card having been physically or logically analyzed, and there is also a possibility that the CKC-IC card itself will be stolen for abuse.

### (Public key authentication)

Next, the public key authentication will be described.

Note that Challenge & Response authentication utilizing the public key cryptography will herein be called as public key authentication.

The public key cryptography is also called as asymmetric cryptography, and is an algorithm in which a cryptographic key for use in encrypting data (hereinafter called as a public key whenever appropriate) and a cryptographic key for use in decrypting (hereinafter called as a private key whenever appropriate) are different, and which has a property that it is very difficult to calculate one cryptographic key from the other cryptographic key (to calculate the private key from the public key, or to calculate the public key from the private key).

The public key authentication is a technique by which when a certifier has a private key Sₖ and a verifier has a public key Pₖ paired with the private key Sₖ, the verifier can check that the certifier owns the private key Sₖ without knowledge of the private key Sₖ itself.

A specific example of a basic public key authentication technique will be described.

First, the verifier generates a random number r, encrypts it with a public key Pₖ, computes a value R = E (Pₖ, r) (wherein the E(Pₖ, r) means encryption of the r utilizing the public key Pₖ) , and sends to the certifier (Challenge) .

The certifier computes decrypted r' = D(Sₖ, R) of the value R (wherein the D (Sₖ, R) means decryption of the value R utilizing the private key Sₖ), and returns to the verifier (Response).

The verifier compares the random number r with the decrypted r' of the value R, and when the random number r matches with those, judges that the certifier has the private key Sₖ.

Therefore, if a person having a specific private key Sₖ is identified to be one certifier, the verifier can perform the authentication of that certifier by the above-mentioned procedure.

As to the common key cryptography, a standard technique is defined in, for instance, the IEEE(The Institute of Electrical and Electronic, Inc)-P1363.

Further, as to the public key authentication, a standard technique is defined in, for instance, the ISO/IEC9798-3.

The public key authentication has a feature that an indefinite number of verifiers could exist as will be described later (as will be described by a public key authentication infrastructure to be described later).

Further, in the public key authentication, each of the verifier and the certifier has different information, and their roles are not exchangeable, and thus it is not authentication having bidirectionality. Such an authentication technique will hereinafter be called as unidirectional authentication as compared to bidirectional authentication.

The public key authentication can keep a private key which a certifier has cryptographically secure, similarly to the common key authentication. Therefore, the public key authentication is also superior to the password authentication in terms of security.

Provided that, in the public key authentication, it would be difficult for a person to perform calculations necessary for the Challenge & Response authentication, and thus the cryptographic keys for the public key cryptography are usually held by a special apparatus called as an IC card. Note that the IC card holding the cryptographic keys for the public key cryptography will be written as a PKC-IC card whenever appropriate in order to distinguish it from the above-mentioned CKC-IC card (IC card holding the key for the common key cryptography).

The PKC-IC card internally has a function of performing calculations necessary for the public key authentication. Thus, as long as the public key authentication is performed by the PKC-IC card, there is only a remote possibility that the cryptographic keys will leak out. However, there is a possibility that the encryption keys will leak due to the PKC-IC card having been physically or logically analyzed, and there is also a possibility that the PKC-IC card itself will be stolen for abuse.

In the authentication technique such as mentioned above, in order to perform authentication of many certifiers efficiently and securely, a technique is needed in which information necessary for authentication is arranged beforehand and managed. Such a technique will hereinafter be called as an authentication infrastructure.

Further, a person identified by an authentication infrastructure will be called as a user; a person who manages the authentication infrastructure will be called as a manager; and a person who identifies the user by utilizing the authentication infrastructure and provides a service to the identified user will be called as a service provider, hereinafter.

Conventionally, an individual account system, a general-purpose account system, and a public key authentication infrastructure are known as the authentication infrastructures.

However, each of these authentication infrastructures, i.e., the individual account system, the general-purpose account system, and the public key authentication infrastructure has the following problems.

### (Problems of individual account system)

First, an outline of the individual account system and problems thereof will be described.

Among the authentication infrastructures, the most widely used conventionally is the individual account system. In the individual account system, authentication infrastructure is built for each service provider.

That is, a user makes an agreement on an authentication technique which he will utilize with the service provider either after registering information necessary for identifying and billing the user (e. g. , information including his/her address, name, or credit card number) with the service provider, or having paid for a service to be provided, before receiving the service from the service provider.

Note that the authentication technique agreed between the service provider and the user and various information (information about the service provider and the user who are identified based on the authentication) utilized by the authentication technique will hereinafter be called as an account.

In this case, the service provider is a manager of this authentication infrastructure and a verifier for authentication of the user.

As the authentication techniques, all the above-mentioned three authentication techniques (the password authentication, the common key authentication, and the public key authentication) are applicable. For instance, in a Suica (trademark) system of JR East Japan Railway Company (trade name), the common key authentication is utilized as the authentication technique.

Provided that, when a technique other than the password authentication is applied, an IC card or the like for holding the authentication information is needed, and thus costs for developing an authentication infrastructure would increase. For this reason, when service provision via communication is intended, the password authentication is typically utilized.

In the individual account system, user authentication could only be initiated on condition that correspondence between a user and a password, a common key, or a public key which the service provider knows is correct (here is neither erroneous recognition nor leakage).

Since the individual account system can be implemented by the service provider's own operation, and thus can easily be introduced.

However, the individual account system has the following three problems.

A first problem is that a user needs to register information for identifying himself/herself with each service provider in order to prepare his/her account. Therefore, the user must spend time and labor in registration, and must also register information susceptible to abuse, such as his/her credit card number, even with an untrustworthy service provider.

A second problem is that when one user prepares an account with each of many service providers, management of many accounts (management, such as the user having to memorize many passwords or holding many IC cards) burdens the user.

A third problem is that it costs the service provider much to manage authentication information and personal information. That is, the authentication information and personal information need to be updated continuously. Particularly, credit card numbers, passwords, or cryptographic keys need to be handled carefully so as not to be leaked out.

### (Problems of the general-purpose account system)

Next, an outline of the general-purpose account system and problems thereof will be described.

In order to solve the above-mentioned problems of the individual account system, a system in which each of many service providers performs user authentication by a single general-purpose account, i.e., a general-purpose account system is proposed. As the general-purpose account system, for instance, a Kerberos system RFC1510 and the like are known. The Kerberos is the name of a project conducted by Massachusetts Institute of Technology of the United States of America, and its standard is made open to the public as No. 1510 of the standard series called as RFC(Request For Comment). Note that the RFCs are provided by the IETF(Internet Engineering Task Force).

In the general-purpose account system, a person other than a service provider becomes a manager (such a manger will hereinafter be called as a general-purpose account manager).

When a service provider identifies a user, first, the general-purpose account manager authenticates the user, and the service provider authenticates the general-purpose account manager.

And the general-purpose account manager notifies the service provider of a result of the user authentication (identification of the user).

Thus, in the general-purpose account system, the service provider is not a verifier for user authentication, unlike in the individual account system.

For this reason, it is based on the following three points.

That is, as a first point, the service provider can authenticate the general-purpose account manager; as a second point, the general-purpose account manager is reliable (the authentication result to be notified is correct); and as a third point, the general-purpose account manager can authenticate the user.

In the general-purpose account system, the user is required to register his general-purpose account only once. Further, the account information is managed collectively by the general-purpose account manager. Therefore, the general-purpose account system can solve the above-mentioned problems of the individual account system.

However, the general-purpose account system has the following two problems, which are different from the above-mentioned problems of the individual account system.

That is, a first problem is that the importance of one authentication technique and the frequency of its use become excessive. As a result, chances for leakage of passwords and keys increase, and damage is likely to aggravate in case of their leakage.

A second problem is that authentication response deteriorates due to communication, since the communication with the general-purpose account manager needs to be involved at the time of authentication.

### (Problems of the public key authentication infrastructure)

Next, an outline of the public key authentication infrastructure and problems thereof will be described.

As mentioned above, in the password authentication and the common key authentication, the verifier is related to the certifier on a one-to-one basis, but in the public key authentication, anyone can be a verifier since it is quite difficult for the verifier to guess a private key which the certifier has from a public key which he/she has himself/herself.

A combination of the property of such public key authentication with a method of obtaining a correspondence relation between a user and a public key is called as a public key authentication infrastructure.

Therefore, in the public key authentication infrastructure, the correspondence relation between a user and a public key can be obtained, and thus a service provider himself/herself can become a verifier, thereby making it possible to solve the above-mentioned second problem of the general-purpose account system.

It is generally considered that a manager who distributes a public key-incorporated IC card to the user knows the correspondence relation between a user and a public key. Note that the manager will hereinafter be called as an authentication center.

The authentication center issues a certificate that guarantees a relation between a user and a public key to a person who desires to obtain the correspondence relation between the user and the public key without inquiry to the authentication center (a person who desires to become verifiers).

Here, information that identifies the public key and the user (such as an ID and a name) and digital data including its expiration date, to which a digital signature is added by the authentication center are called as a certificate.

The digital signature is a kind of an application of public key cryptography. Therefore, the digital signature will be described so as to be corresponded to the above-mentioned public key cryptography.

For instance, when holding digital data M, the authentication center computes a signature SG (M) = E (Sₖ, h (M) ) utilizing a private key Sₖ which the authentication center holds itself. Note that a function h() is supposed to be a unidirectional function, and is supposed to be a function having a property that it is very hard to know an input value from an output value. For instance, as the functions h(), functions called as MD5 and SHA-1 in ISO/IEC10118, FIPS180-1, and the like could be applied.

The authentication center sends a set of data (M, SG (M)) to a verifier.

When holding a public key Pₖ paired with the private key Sₖ which the authentication center holds, the verifier checks whether or not h (M) = D ( Pₖ, SG (M) ) is satisfied, whereby to check that the digital data M is not tampered, that the signature SG(M) is added by the owner of the private key Sₖ (authentication center). Note that such a verifier's procedure will hereinafter be called as authentication of a digital signature.

In this way, the verifier in authentication verifies a digital signature added by the authentication center, and obtains a relation between the user and the public key from its certificate.

As to the digital signature, a standard technique is defined in, for instance, IEEE-P1363.

The verifier, if he/she knows the public key of the authentication center correctly and once he/she succeeds in verifying its digital signature, can obtain a relation between the user and the public key from the certificate.

When the scale of the authentication infrastructure increases, it would be difficult for one authentication center to know the relation covering all users and public keys. In such a case, a hierarchical structure is built among a plurality of authentication centers. The verifier has a certificate issued independently from each of the authentication centers, but as to the public keys, he/she handles only public keys which a small number of authentication centers called as root authentication centers have, whereby he/she verifies all the certificates.

In this way, the public key authentication infrastructure is a system in which correspondence between many users and public keys can be obtained, and is specified in ITU(International Telecommunication Union)-T Recommendation X.509. The public key authentication infrastructure can manage information for user authentication in a distributed manner, and thus is an authentication method adapted for environments where user management is not intensive such as for the Internet.

However, the relation between the user and the public key changes with time due to, for instance, the user losing the IC card, or being disqualified. That is, invalidation of an issued certificate occurs. As a result, the public key authentication utilizing certificates operates in the following four assumptions.

That is, as a first point, the service provider can verify a digital signature (including those traced from root authentication centers) of an authentication center in a certificate; as a second point, a certificate (including those traced from the root authentication centers) is not revoked; as a third point, an authentication center is reliable (the content of a certificate is correct); and as a fourth point, the correspondence between a user and a public key which an authentication center knows is correct (there are neither erroneous recognition nor leakage).

A person who best knows the invalidation status of a certificate is an authentication center which distributes a card to the user and issues the certificate. As a result, the verifier may query the authentication center about it when verifying the certificate in order to obtain the latest invalidation status. A communication protocol for such a query is specified as OSCP in RFC (Request For Comments) 2560. However, in this case, the verifier needs to query the authentication center when authenticating the user. That is, the same problem as the second problem of the general-purpose account system occurs.

For this reason, a method of terminating use of a revoked certificate is known in which the authentication center issues data called as a certificate invalidation list to users of certificates (such as service providers), and a user of a certificate terminates use of the certificate when the certificate is found revoked by comparison with the certificate invalidation list. The certificate invalidation list is specified by ITU-T Recommendation X.509. Provided that, since it is difficult to predict where in the distributed environments the certificate is used, it would be difficult for the authentication center to publicly announce the invalidation to the user of the certificate even when the certificate is revoked. Particularly, in order to accommodate abrupt invalidation of a certificate, the user of the certificate needs to collect related certificate invalidation lists constantly.

From the foregoing, the public key authentication infrastructure has the following two problems.

That is, a first problem is that the importance of one authentication technique increases excessively as in the general-purpose account system.

A second problem is that handling of invalidation information increases authentication costs, or decreases response. This is because the verifier (e.g., a service provider) needs to be able to verify invalidation or non-invalidation by gathering related certificate invalidation lists or query about the invalidation status via OSCP.

In this way, each of the individual account system, the general-purpose account system, and the public key authentication infrastructure has its peculiar problems.

That is, the individual account system, due to having the above-mentioned three problems, finds difficulty developing itself into a large-scale authentication infrastructure.

The general-purpose account system has many applications and thus can be easily developed as mentioned above, but since a service provider is not a direct verifier for user authentication, it has a problem that authentication response is decreased. This problem becomes conspicuous in situations where authentication is performed frequently.

In the public key authentication infrastructure, the verifier gathers the invalidation status of certificates related to the authentication in order to secure reliability of authentication as mentioned above, or queries to an authentication center at the time of authentication, and thus it has a problem that its authentication costs or response deteriorate. This problem would also become conspicuous in situations where authentication is performed frequently.

### Disclosure of the Invention

The present invention is made in view of such circumstances, and is designed such that a service provider can enhance the efficiency and security of its authentication when authenticating a user.

A first information processing system of the present invention is characterized in that: a first information processing apparatus generates a first cryptographic key and a second cryptographic key to be paired with the first cryptographic key which can be utilized by a predetermined authentication technique, sends the generated first cryptographic key to a second information processing apparatus, and sends the generated second cryptographic key to a third information apparatus; the second information processing apparatus receives the first cryptographic key sent by the first information processing apparatus, and holds; the third information processing apparatus receives the second cryptographic key sent by the first information processing apparatus, and holds; and the second information processing apparatus authenticates the third information processing apparatus by utilizing the held first cryptographic key and the second cryptographic key held by the third information processing apparatus, based on the authentication technique.

It can be designed such that the authentication technique is common key authentication, and the first cryptographic key and the second cryptographic key are identical cryptographic keys.

It can be designed such that the authentication technique is public key authentication and the first cryptographic key and the second cryptographic key are different cryptographic keys.

An information processing method for the first information processing system of the present invention is characterized in that: a first information processing apparatus generates a first cryptographic key and a second cryptographic key to be paired with the first cryptographic key which can be utilized by a predetermined authentication technique, sends the generated first cryptographic key to a second information processing apparatus, and sends the generated second cryptographic key to a third information processing apparatus; the second information processing apparatus receives the first cryptographic key sent by the first information processing apparatus, and holds; the third information processing apparatus receives the second cryptographic key sent by the first information processing apparatus, and holds; and the second information processing apparatus authenticates the third information processing apparatus by utilizing the held first cryptographic key and the second cryptographic key held by the third information processing apparatus.

In the first information processing system and method of the present invention, a first cryptographic key and a second cryptographic key to be paired with the first cryptographic key which can be utilized by a predetermined authentication technique are generated by the first information processing apparatus, and the first cryptographic key is sent to the second information processing apparatus and the second cryptographic key is sent to the third information processing apparatus. And the first cryptographic key held by the second information processing apparatus and the second cryptographic key held by the third information processing apparatus are utilized by the second information processing apparatus to authenticate the third information processing apparatus based on the authentication technique.

A first information processing apparatus of the present invention is characterized by including: generation means for generating a first cryptographic key and a second cryptographic key to be paired with the first cryptographic key which are utilized when another first information processing apparatus authenticates another second information processing apparatus based on a predetermined authentication technique; and sending means for sending the first cryptographic key generated by the generation means to the another first information processing apparatus, and sending the second cryptographic key generated by the generation means to the another second information processing apparatus.

It can be designed such that the authentication technique is common key authentication, and the first cryptographic key and the second cryptographic key generated by the generation means are identical cryptographic keys.

It can be designed such that the authentication technique is public key authentication, and the first cryptographic key and the second cryptographic key generated by the generation means are different cryptographic keys.

It can be designed such that identification means is further provided which identifies, when information for authentication is inputted or a predetermined apparatus utilized for authentication is connected, to the another second information processing apparatus, a user who inputs the information or the connected apparatus, wherein the generation means generates the first and the second cryptographic keys when the user who inputs the information to the another second information processing apparatus or the apparatus connected to the another second information processing apparatus is identified by the identification means.

It can be designed such that the identification means identifies the user who inputs the information to the another second information processing apparatus or the apparatus connected to the another second information processing apparatus, by using SSL(Secure Socket Layer), or TLS(Transport Layer Security).

It can be designed such that billing means is further provided which fixes a fee for a service provided to the another second information processing apparatus to be authenticated by the another first information processing apparatus, which is other party to whom the first cryptographic key is sent by the sending means, by utilizing the first and the second keys when the first and the second cryptographic keys are generated by the generation means, and which bills the user who inputs the information to the another second information processing apparatus, identified by the identification means, or a user identified by the apparatus connected to the another second information processing apparatus, identified by the identification means, for the fee for the service.

It can be designed such that the billing means bills the another second information processing apparatus for the fee for the service, and further, for a fee for the first and the second cryptographic keys generated by the generation means.

An information processing method for the first information processing apparatus of the present invention is characterized by including: a generation step of generating a first cryptographic key and a second cryptographic key to be paired with the first cryptographic key which are utilized when another first information processing apparatus authenticates another second information processing apparatus based on a predetermined authentication technique; and a sending step of sending the first cryptographic key generated by the generation step to the another first information processing apparatus, and sending the second cryptographic key generated by the generation means to the another second information processing apparatus.

A program in a first recording medium of the present invention is characterized by including: a generation step of generating a first cryptographic key and a second cryptographic key to be paired with the first cryptographic key which are utilized when another first information processing apparatus authenticates another second information processing apparatus based on a predetermined authentication technique; and a sending step of sending the first cryptographic key generated by the generation step to the another first information processing apparatus, and sending the second cryptographic key generated by the generation means to the another second information processing apparatus.

A first program of the present invention is characterized by causing a computer to execute: a generation step of generating a first cryptographic key and a second cryptographic key to be paired with the first cryptographic key which are utilized when another first information processing apparatus authenticates another second information processing apparatus based on a predetermined authentication technique; and a sending step of sending the first cryptographic key generated by the generation step to the another first information processing apparatus, and sending the second cryptographic key generated by the generation means to the another second information processing apparatus.

In the first information processing apparatus and method, the first recording medium, and the first program of the present invention, a first cryptographic key and a second cryptographic key to be paired with the first cryptographic key which the another first information processing apparatus utilizes when authenticating the another second information processing apparatus based on a predetermined authentication technique are generated, and the generated first cryptographic key is sent to the another first information processing apparatus and the generated second cryptographic key is sent to the another second information processing apparatus.

A second information processing apparatus of the present invention is characterized by including: receiving means for receiving, of a first cryptographic key and a second cryptographic key to be paired with the first cryptographic key which are sent by another first information processing apparatus and which can be utilized by a predetermined authentication technique, at least the first cryptographic key; holding means for holding the first cryptographic key received by the receiving means; and authentication means for authenticating another second information processing apparatus by utilizing the first cryptographic key held by the holding means and the second cryptographic key held by the another second information processing apparatus, based on the authentication technique.

It can be designed such that the authentication technique is common key authentication, and the first cryptographic key and the second cryptographic key are identical cryptographic keys.

It can be designed such that the authentication technique is public key authentication, and the first cryptographic key and the second cryptographic key are different cryptographic keys.

An information processing method for the second information processing apparatus of the present invention is characterized by including: a receiving step of receiving, of a first cryptographic key and a second cryptographic key to be paired with the first cryptographic key which are sent by another first information processing apparatus and which can be utilized by a predetermined authentication technique, at least the first cryptographic key; a holding step of holding the first cryptographic key received by the receiving step; and an authentication step of authenticating another second information processing apparatus by utilizing the first cryptographic key held by the holding step and the second cryptographic key held by the another second information processing apparatus, based on the authentication technique.

A program in a second recording medium of the present invention is characterized by including: a receiving step of receiving, of a first cryptographic key and a second cryptographic key to be paired with the first cryptographic key which are sent by another first information processing apparatus and which can be utilized by a predetermined authentication technique, at least the first cryptographic key; a holding step of holding the first cryptographic key received by the receiving step; and an authentication step of authenticating another second information processing apparatus by utilizing the first cryptographic key held by the holding step and the second cryptographic key held by the another second information processing apparatus, based on the authentication technique.

A second program of the present invention is characterized by causing a computer to execute: a receiving step of receiving, of a first cryptographic key and a second cryptographic key to be paired with the first cryptographic key which are sent by another first information processing apparatus and which can be utilized by a predetermined authentication technique, at least the first cryptographic key; a holding step of holding the first cryptographic key received by the receiving step; and an authentication step of authenticating another second information processing apparatus by utilizing the first cryptographic key held by the holding step and the second cryptographic key held by the another second information processing apparatus, based on the authentication technique.

In the second information processing apparatus and method, the second recording medium, and the second program of the present invention, of a first cryptographic key and a second cryptographic key to be paired with the first cryptographic key which are sent by the another first information processing apparatus and which can be utilized by a predetermined authentication technique, at least the first cryptographic key is received and held. And another second information processing apparatus is authenticated by utilizing the held first cryptographic key and the second cryptographic key held by the another second information processing apparatus, based on the authentication technique

A third information processing apparatus of the present invention is characterized by including: receiving means for receiving, of a first cryptographic key and a second cryptographic key to be paired with the first cryptographic key which are sent by another first information processing apparatus and which can be utilized by a predetermined authentication technique, at least the second cryptographic key; holding means for holding the second cryptographic key received by the receiving means; and response means for sending a predetermined response to another second information processing apparatus by utilizing the second cryptographic key held by the holding means, when the third information processing apparatus itself is authenticated by the another second information processing apparatus which holds the first cryptographic key, based on the authentication technique.

It can be designed such that the authentication technique is common key authentication, and the first cryptographic key and the second cryptographic key are identical cryptographic keys.

It can be designed such that the authentication technique is public key authentication, and the first cryptographic key and the second cryptographic key are different cryptographic keys.

It can be designed such that input means is further provided which inputs information for authentication by the another second information processing.

It can be designed such that connection means is further provided which connects a predetermined apparatus which is utilized when it is authenticated by the another second information processing apparatus.

It can be designed such that the apparatus connected to the connection means is an IC card.

It can be designed such that the holding means is tamper-proof.

An information processing method for the third information processing apparatus of the present invention is characterized by including: a receiving step of receiving, of a first cryptographic key and a second cryptographic key to be paired with the first cryptographic key which are sent by another first information processing apparatus and which can be utilized by a predetermined authentication technique, at least the second cryptographic key; a holding control step of controlling holding of the second cryptographic key received by the receiving step; and a response step of sending a predetermined response to another second information processing apparatus by utilizing the second cryptographic key, holding of which is controlled by the holding control step, when the third information processing apparatus is authenticated by the another second information processing apparatus which holds the first cryptographic key, based on the authentication technique.

A program in a third recording medium of the present invention is characterized by including: a receiving step of receiving, of a first cryptographic key and a second cryptographic key to be paired with the first cryptographic key which are sent by another first information processing apparatus and which can be utilized by a predetermined authentication technique, at least the second cryptographic key; a holding control step of controlling holding of the second cryptographic key received by the receiving step; and a response step of sending a predetermined response to another second information processing apparatus by utilizing the second cryptographic key, holding of which is controlled by the holding control step, when the information processing apparatus is authenticated by the another second information processing apparatus which holds the first cryptographic key, based on the authentication technique.

A third program of the present invention is characterized by causing a computer to execute: a receiving step of receiving, of a first cryptographic key and a second cryptographic key to be paired with the first cryptographic key which are sent by another first information processing apparatus and which can be utilized by a predetermined authentication technique, at least the second cryptographic key; a holding control step of controlling holding of the second cryptographic key received by the receiving step; and a response step of sending a predetermined response to another second information processing apparatus by utilizing the second cryptographic key, holding of which is controlled by the holding control step, when the information processing apparatus is authenticated by the another second information processing apparatus which holds the first cryptographic key, based on the authentication technique.

In the third information processing apparatus and method, the third recording medium, and the third program of the present invention, of a first cryptographic key and a second cryptographic key to be paired with the first cryptographic key which are sent by the another first information processing apparatus and which can be utilized by a predetermined authentication technique, at least the second cryptographic key is received and held. And when the third information processing apparatus itself is authenticated by the another second information processing apparatus which holds the first cryptographic key based on the authentication technique, the predetermined response is sent to the second information processing apparatus by utilizing the held second cryptographic key.

A second information processing system of the present invention is characterized in that: a first information processing apparatus (it is not the above-mentioned first information processing apparatus, but is equivalent to a fourth information processing apparatus to be described later) generates request information for requesting generation of a first cryptographic key and a second cryptographic key to be paired with the first cryptographic key which can be utilized by a predetermined authentication technique, for sending to a second information processing apparatus (it is not the above-mentioned second information processing apparatus, but is equivalent to a sixth information processing apparatus to be described later) ; the second information processing apparatus generates, when receiving the request information from the first information processing apparatus, each of the first cryptographic key and the second cryptographic key, sends the generated first cryptographic key to a third information processing apparatus, and holds the generated second cryptographic key; the third information processing apparatus (it is not the above-mentioned third information processing apparatus, but is equivalent to a fifth information processing apparatus to be described later) receives the first cryptographic key sent by the second information processing apparatus, and holds; and the third information processing apparatus authenticates the second information processing apparatus by utilizing the held first cryptographic key and the second cryptographic key held by the second information processing apparatus, based on the above-mentioned authentication technique.

It can be designed such that the authentication technique is common key authentication, and the first cryptographic key and the second cryptographic key are different cryptographic keys.

It can be designed such that the authentication technique is public key authentication, and the first cryptographic key and the second cryptographic key are different cryptographic keys.

An information processing method for the second information processing system of the present invention is characterized in that: a first information processing apparatus generates request information for requesting generation of a first cryptographic key and a second cryptographic key to be paired with the first cryptographic key which can be utilized by a predetermined authentication technique, for sending to a second information processing apparatus; the second information processing apparatus generates, when receiving the request information from the first information processing apparatus, each of the first cryptographic key and the second cryptographic key, sends the generated first cryptographic key to a third information processing apparatus, and holds the generated second cryptographic key; the third information processing apparatus receives the first cryptographic key sent by the second information processing apparatus, and holds; and the third information processing apparatus authenticates the second information processing apparatus by utilizing the held first cryptographic key and the second cryptographic key held by the second information processing apparatus, based on the authentication technique.

In the second information processing system and method of the present invention, the request information for requesting generation of a first cryptographic key and a second cryptographic key to be paired with the first cryptographic key which can be utilized by a predetermined authentication technique is generated by the first information processing apparatus, and sent to the second information processing apparatus. Then, each of the first cryptographic key and the second cryptographic key is generated by the second information processing apparatus, and the generated first cryptographic key is sent to the third information processing apparatus, and the generated second cryptographic key is held. And the first cryptographic key sent by the second information processing apparatus is received and held by the third information processing apparatus. In this state, the second information processing apparatus is authenticated by the third information processing apparatus by utilizing the held first cryptographic key and the second cryptographic key held by the second information processing apparatus.

A fourth information processing apparatus of the present invention is characterized by including: generation means for generating request information for requesting generation of a first cryptographic key and a second cryptographic key to be paired with the first cryptographic key which are utilized when another first information processing apparatus authenticates another second information processing apparatus based on a predetermined authentication technique; and sending means for sending the request information generated by the generation means to the another second information processing apparatus.

It can be designed such that the authentication technique is public key authentication, and the first cryptographic key and the second cryptographic key generated by the generation means are different cryptographic keys.

It can be designed such that identification means is further provided which identifies, when information for authentication is inputted or a predetermined apparatus utilized for authentication is connected, to the another second information processing apparatus, a user who inputs the information or the connected apparatus, wherein the generation means generates the request information when the user who inputs the information to the another second information processing apparatus or the apparatus connected to the another second information processing apparatus is identified.

It can be designed such that the identification means identifies the user who inputs the information to the another second information processing apparatus or the apparatus connected to the another second information processing apparatus, by using SSL(Secure Socket Layer), or TLS(Transport Layer Security).

It can be designed such that billing means is further provided which fixes a fee for a service provided to the another second information processing apparatus to be authenticated by the another first information processing apparatus by utilizing the first key and the second key when the request information is sent to the another second information processing apparatus by the sending means, and which bills the user who inputs the information to the another second information processing apparatus, identified by the identification means, or a user identified by the apparatus connected to the another second information processing apparatus, identified by the identification means, for the fee for the service.

It can be designed such that the billing means bills the another second information processing apparatus for the fee for the service, and further, for a fee for the first and the second cryptographic keys generated by the another second information processing apparatus in response to the request information sent to the another second information processing apparatus by the sending means.

An information processing method for the fourth information processing apparatus of the present invention is characterized by including: a generation step of generating request information for requesting generation of a first cryptographic key and a second cryptographic key to be paired with the first cryptographic key which are utilized when another first information processing apparatus authenticates another second information processing apparatus based on a predetermined authentication technique; and a sending step of sending the request information generated by the generation step to the another second information processing apparatus.

A program in a fourth recording medium of the present invention is characterized by including a generation step of generating request information for requesting another second information processing apparatus to generate a first cryptographic key and a second cryptographic key to be paired with the first cryptographic key which are utilized when another first information processing apparatus authenticates the another second information processing apparatus based on a predetermined authentication technique.

A fourth program of the present invention is characterized by including: a generation step of generating request information for requesting another second information processing apparatus to generate a first cryptographic key and a second cryptographic key to be paired with the first cryptographic key which are utilized when another first information processing apparatus authenticates the another second information processing apparatus based on a predetermined authentication technique; and a sending step of sending the request information generated by the generation step to the another second information processing apparatus.

In the fourth information processing apparatus and method, the fourth recording medium, and the fourth program of the present invention, the request information for requesting generation of a first cryptographic key and a second cryptographic key to be paired with the first cryptographic key which the another first information processing apparatus utilizes when authenticating the another second information processing apparatus based on a predetermined authentication technique is generated, and the generated request information is sent to the another second information processing apparatus.

A fifth information processing apparatus of the present invention is characterized by including: receiving means for receiving, when another second processing apparatus generates a first cryptographic key and a second cryptographic key to be paired with the first cryptographic key which can be utilized by a predetermined authentication technique and sends the generated first cryptographic key at a request of another first information processing apparatus, the first cryptographic key; holding means for holding the first cryptographic key received by the receiving means; and authentication means for authenticating the another second information processing apparatus by utilizing the first cryptographic key held by the holding means and the second cryptographic key held by the another second information processing apparatus, based on the authentication technique.

It can be designed such that the authentication technique is public key authentication, and the first cryptographic key and the second cryptographic key are different cryptographic keys.

An information processing method for the fifth information processing apparatus of the present invention is characterized by including: a receiving step of receiving, when another second processing apparatus generates a first cryptographic key and a second cryptographic key to be paired with the first cryptographic key which can be utilized by a predetermined authentication technique and sends the generated first cryptographic key at a request of another first information processing apparatus, the first cryptographic key; a holding step of holding the first cryptographic key received by the receiving step; and an authentication step of authenticating the another second information processing apparatus by utilizing the first cryptographic key held by the holding step and the second cryptographic key held by the another second information processing apparatus, based on the authentication technique.

A program in a fifth recording medium of the present invention is a program for a computer that controls an information processing apparatus and is characterized by including an authentication step of authenticating another second information processing apparatus by utilizing, of a first cryptographic key and a second cryptographic key to be paired with the first cryptographic key which can be utilized by a predetermined technique and which are generated by the another second information processing apparatus based on a request by another first information processing apparatus, the first cryptographic key held by the information processing apparatus itself and the second cryptographic key held by the another second information processing apparatus, based on the authentication technique.

A fifth program of the present invention is a program for a computer that controls an information processing apparatus and is characterized by including an authentication step of authenticating another second information processing apparatus by utilizing, of a first cryptographic key and a second cryptographic key to be paired with the first cryptographic key which can be utilized by a predetermined technique and which are generated by the another second information processing apparatus based on a request by another first information processing apparatus, the first cryptographic key held by the information processing apparatus itself and the second cryptographic key held by the another second information processing apparatus, based on the authentication technique.

In the fifth information processing apparatus and method, the fifth recording medium, and the fifth program of the present invention, when the another second processing apparatus generates a first cryptographic key and a second cryptographic key to be paired with the first cryptographic key which can be utilized by the predetermined authentication technique and sends the generated first cryptographic key at the request of the another first information processing apparatus, the first cryptographic key is received and held by the fifth information processing apparatus. And the another second information processing apparatus is authenticated by utilizing the first cryptographic key held by the fifth information processing apparatus and the second cryptographic key held by the another second information processing apparatus, based on the above-mentioned authentication technique.

A sixth information processing apparatus of the present invention is characterized by including: receiving means for receiving request information, sent by another first information processing apparatus, for requesting generation of a first cryptographic key and a second cryptographic key to be paired with the first cryptographic key which can be utilized by a predetermined authentication technique; key generation means for generating the first cryptographic key and the second cryptographic key based, on the request information received by the receiving means; sending means for sending the first cryptographic key of the first cryptographic key and the second cryptographic key generated by the key generation means, to another second information processing apparatus; holding means for holding the second cryptographic key of the first cryptographic key and the second cryptographic key generated by the key generation means; and response means for generating a predetermined response by utilizing the second cryptographic key held by the holding means, when the information processing apparatus is authenticated by the another second information processing apparatus which holds the first cryptographic key sent by the sending means based on the authentication technique. The sending means sends the response generated by the response generation means to the another second information processing apparatus.

It can be designed such that the authentication technique is public key authentication, and the first cryptographic key and the second cryptographic key are different cryptographic keys.

It can be designed such that input means is further provided which inputs information for authentication by the another second information processing apparatus.

It can be designed such that connection means is further provided which connects a predetermined apparatus which is utilized when it is authenticated by the another second information processing apparatus.

It can be designed such that the apparatus connected to the connection means is an IC card.

It can be designed such that the holding means is tamper-proof.

An information processing method for the sixth information processing apparatus of the present invention is characterized by including: a receiving step of receiving request information, sent by another first information processing apparatus, for requesting generation of a first cryptographic key and a second cryptographic key to be paired with the first cryptographic key which can be utilized by a predetermined authentication technique; a key generation step of generating the first cryptographic key and the second cryptographic key based on the request information received by the receiving step; a key sending step of sending the first cryptographic key of the first cryptographic key and the second cryptographic key generated by the key generation step, to another second information processing apparatus; a holding step of holding the second cryptographic key of the first cryptographic key and the second cryptographic key generated by the key generation step; a response generation step of generating a predetermined response by utilizing the second cryptographic key held by the holding step, when the information processing apparatus is authenticated by the another second information processing apparatus which holds the first cryptographic key sent by the key sending step, based on the authentication technique; and a response sending step of sending the response generated by the response step, to the another second information processing apparatus.

A program in a sixth recording medium of the present invention is a program for a computer that controls an information processing apparatus and is characterized by including: a key generation step of generating, based on request information sent from another second information processing apparatus to the information processing apparatus for requesting generation of a first cryptographic key and a second cryptographic key to be paired with the first cryptographic key which can be utilized by a predetermined authentication technique, the first cryptographic key to be transmitted to another second information processing apparatus, and the second cryptographic key to be held by the information processing apparatus; and a response generation step of generating a predetermined response by utilizing the second cryptographic key held by the information processing apparatus, when the information processing apparatus is authenticated by the another second information processing apparatus which holds the transmitted first cryptographic key, based on the authentication technique.

A sixth program of the present invention is a program for a computer that controls an information processing apparatus and is characterized by including: a key generation step of generating, based on request information sent from another second information processing apparatus to the information processing apparatus for requesting generation of a first cryptographic key and a second cryptographic key to be paired with the first cryptographic key which can be utilized by a predetermined authentication technique, the first cryptographic key to be transmitted to another second information processing apparatus, and the second cryptographic key to be held by the information processing apparatus; and a response generation step of generating a predetermined response by utilizing the second cryptographic key held by the information processing apparatus, when the information processing apparatus is authenticated by the another second information processing apparatus which holds the transmitted first cryptographic key, based on the authentication technique.

In the sixth information processing apparatus and method, the sixth recording medium, and the sixth program of the present invention, based on request information sent from the another second information processing apparatus to the information processing apparatus for requesting generation of a first cryptographic key and a second cryptographic key to be paired with the first cryptographic key which can be utilized by a predetermined authentication technique, the first cryptographic key to be transmitted to the another second information processing apparatus, and the second cryptographic key to be held by the information processing apparatus are generated by the sixth information processing apparatus. Thereafter, a predetermined response is generated by utilizing the second cryptographic key held by the sixth information processing apparatus and transmitted to the another second information processing apparatus, when the sixth information processing apparatus is authenticated by the another second information processing apparatus which holds the transmitted first cryptographic key based on the authentication technique.

### Brief Description of Drawings

FIG. 1 is a diagram illustrating a first example of a business model supported by an authentication key allotment system to which the present invention is applied.
FIG. 2 is a diagram illustrating a second example of the business model supported by the authentication key allotment system to which the present invention is applied.
FIG. 3 is a diagram illustrating a third example of the business model supported by the authentication key allotment system to which the present invention is applied.
FIG. 4 is a block diagram showing an exemplary configuration of the authentication key allotment system to which the present invention is applied.
FIG. 5 is a diagram showing an example of a key allotment table.
FIG. 6 is a diagram showing an example of a service provider key table.
FIG. 7 is a diagram showing an example of a key holding apparatus key table.
FIG. 8 is a diagram showing an example of key allotter account information.
FIG. 9 is a diagram showing an example of an authentication information table.
FIG. 10 is a diagram showing an example of service provider unique information.
FIG. 11 is a diagram showing an example of a certifying key table.
FIG. 12 is a diagram showing an example of a service information table.
FIG. 13 is a diagram showing an example of key holding apparatus unique information.
FIG. 14 is a diagram showing an example of user count information.
FIG. 15 is a block diagram showing an exemplary configuration of a user terminal of the authentication key allotment system of FIG. 14.
FIG. 16 is a block diagram showing an exemplary configuration of a key holding apparatus of the authentication key allotment system of FIG. 14.
FIG. 17 is a block diagram showing an exemplary configuration of an IC card of the authentication key allotment system of FIG. 14.
FIG. 18 is a block diagram showing an exemplary configuration of a key allotter terminal of the authentication key allotment system of FIG. 14.
FIG. 19 is a block diagram showing an exemplary configuration of a service provider terminal of the authentication key allotment system of FIG. 14.
FIG. 20 is a block diagram showing an exemplary configuration of a general-purpose account manager terminal of the authentication key allotment system of FIG. 14.
FIG. 21 is a diagram showing an example of an account management table.
FIG. 22 is a diagram showing an example of an account manager unique key.
FIG. 23 is a flowchart illustrating an example of processing by the authentication key system to which the present invention is applied.
FIG. 24 is a flowchart illustrating an example of a service selection/key allotment process by a user apparatus constituted by the user terminal of FIG. 15, the key holding apparatus of FIG. 16, and the IC card of FIG. 17.
FIG. 25 is a flowchart illustrating an example of a service selection/key allotment process by the key allotter terminal of FIG. 18.
FIG. 26 is a flowchart illustrating an example of a service selection/key allotment process by the service provider terminal of FIG. 19.
FIG. 27 is an arrow chart showing a relation among the service selection/key allotment processes by the user apparatus constituted by the user terminal of FIG. 15, the key holding apparatus of FIG. 16 and the IC card of FIG. 17, the key allotter terminal of FIG. 18, and the service provider terminal of FIG. 19.
FIG. 28 is a diagram showing an example of a key allotment application.
FIG. 29 is a diagram showing an example of a key allotment report.
FIG. 30 is a flowchart illustrating an example of a key use/service provision process by the user apparatus constituted by the user terminal of FIG. 15, the key holding apparatus of FIG. 16, and the IC card of FIG. 17.
FIG. 31 is a flowchart illustrating an example of a key use/service provision process by the service provider terminal of FIG. 19.
FIG. 32 is an arrow chart showing an exemplary relation between a by-purpose authentication verification process in the key use/service provision process by the user apparatus of FIG. 29 and a by-purpose authentication response process in the key use/service provision process by the service provider terminal of FIG. 30.
FIG. 33 is an arrow chart showing another exemplary relation between the by-purpose authentication verification process in the key use/service provision process by the user apparatus of FIG. 29 and the by-purpose authentication response process in the key use/service provision process by the service provider terminal of FIG. 30.
FIG. 34 is an arrow chart showing an exemplary relation between a service utilization process in the key use/service provision process by the user apparatus of FIG. 29 and a service provision process in the key use/service provision process by the service provider terminal of FIG. 30.
FIG. 35 is an arrow chart showing another exemplary relation between the service utilization process in the key use/service provision process by the user apparatus of FIG. 29 and the service provision process in the key use/service provision process by the service provider terminal of FIG. 30.
FIG. 36 is a diagram showing an example of a service request.
FIG. 37 is a flowchart illustrating an example of a key deletion process by the user apparatus constituted by the user terminal of FIG. 15, the key holding apparatus of FIG. 16, and the IC card of FIG. 17.
FIG. 38 is a flowchart illustrating an example of a key deletion process by the key allotter terminal of FIG. 18.
FIG. 39 is a flowchart illustrating an example of a key deletion process by the service provider terminal of FIG. 19.
FIG. 40 is a flowchart illustrating an example of a key use termination process by the key allotter terminal of FIG. 18.
FIG. 41 is a flowchart illustrating an example of a key use termination process by the service provider terminal of FIG. 19.
FIG. 42 is a diagram showing an example of a key use termination request.
FIG. 43 is a diagram showing another example of the key use termination request.
FIG. 44 is a block diagram showing another exemplary configuration of the authentication key allotment system to which the present invention is applied.
FIG. 45 is a block diagram showing an exemplary configuration of an authentication center terminal of the authentication key allotment system of FIG. 43.
FIG. 46 is a diagram showing an example of a key allotment table.
FIG. 47 is a diagram showing an example of a service provider key table.
FIG. 48 is a diagram showing an example of a key holding apparatus key table.
FIG. 49 is a diagram showing an example of key allotter PKI information.
FIG. 50 is a diagram showing an example of CA public key information.
FIG. 51 is a diagram showing an example of a key allotment application.
FIG. 52 is a diagram showing an example of a key allotment report.
FIG. 53 is a diagram showing an example of an authentication information table.
FIG. 54 is a diagram showing an example of service provider unique information.
FIG. 55 is a diagram showing an example of a invalidation key table.
FIG. 56 is a diagram showing an example of service provider PKI information.
FIG. 57 is a diagram showing an example of key sharing parameters.
FIG. 58 is a diagram showing an example of CA public key information.
FIG. 59 is a diagram showing an example of a certifying key table.
FIG. 60 is a diagram showing an example of an authentication information table.
FIG. 61 is a diagram showing an example of key holding apparatus unique information.
FIG. 62 is a diagram showing an example of user PKI information.
FIG. 63 is a diagram showing an example of CA public key information.
FIG. 64 is a diagram showing an example of a certificate table.
FIG. 65 is a diagram showing an example of CA key information.
FIG. 66 is a diagram showing an example of a certificate.
FIG. 67 is an arrow chart showing a relation between a user recognition response process by a user apparatus and a key holding apparatus user authentication process by a key allotter terminal, in a service selection/key allotment process between the user apparatus and the key allotter terminal of the authentication key allotment system of FIG. 43.
FIG. 68 is a flowchart illustrating an example of a key use/service provision process by the user apparatus of the authentication key allotment system of FIG. 43.
FIG. 69 is a flowchart illustrating an example of a key use/service provision process by a service provider terminal of the authentication key allotment system of FIG. 43.
FIG. 70 is an arrow chart showing an exemplary relation between a by-purpose authentication verification process in the key use/service provision process by the user apparatus of FIG. 67 and a by-purpose authentication response process in the key use/service provision process by the service provider terminal of FIG. 68.
FIG. 71 is an arrow chart showing another exemplary relation between the by-purpose authentication verification process in the key use/service provision process by the user apparatus of FIG. 67 and the by-purpose authentication response process in the key use/service provision process by the service provider terminal of FIG. 68.
FIG. 72 is a diagram showing still another configuration of the authentication key allotment system to which the present invention is applied.
FIG. 73 is a diagram showing an example of a key allotment table.
FIG. 74 is a diagram showing an example of a service provider key table.
FIG. 75 is a diagram showing an example of a key holding apparatus key table.
FIG. 76 is a diagram showing an example of key allotter account information.
FIG. 77 is a diagram showing an example of CA public key information.
FIG. 78 is a diagram showing an example of a document of title.
FIG. 79 is a diagram showing an example of a key allotment application.
FIG. 80 is a diagram showing an example of a key allotment report.
FIG. 81 is a diagram showing an example of an authentication information table.
FIG. 82 is a diagram showing an example of service provider unique information.
FIG. 83 is a diagram showing an example of a invalidation key table.
FIG. 84 is a diagram showing an example of service provider PKI information.
FIG. 85 is a diagram showing an example of key sharing parameters.
FIG. 86 is a diagram showing an example of CA public key information.
FIG. 87 is a diagram showing an example of a certifying key table.
FIG. 88 is a diagram showing an example of an authentication information table.
FIG. 89 is a diagram showing an example of key holding apparatus unique information.
FIG. 90 is a diagram showing an example of user count information.
FIG. 91 is a diagram showing an example of CA public key information.
FIG. 92 is a flowchart illustrating an example of a service selection/key allotment process by a user apparatus of the authentication key allotment system of FIG. 71.
FIG. 93 is a flowchart illustrating an example of a service selection/key allotment process by a key allotter terminal of the authentication key allotment system of FIG. 71.
FIG. 94 is a diagram showing an example of a service selection/key allotment process by a service provider terminal of the authentication key allotment system of FIG. 71.
FIG. 95 is an arrow chart showing a relation among the service selection/key allotment processes by the user apparatus, the key allotter terminal, and the service provider terminal of the authentication key allotment system of FIG. 71.
FIG. 96 is a flowchart illustrating an example of a key use/service provision process by the user apparatus of the authentication key allotment system of FIG. 71.
FIG. 97 is a flowchart illustrating an example of a key use/service provision process by the service provider terminal of the authentication key allotment system of FIG. 71.
FIG. 98 is a diagram showing an example of a key allotment table.
FIG. 99 is a diagram showing an example of a service provider key table.
FIG. 100 is a diagram showing an example of a key holding apparatus key table.
FIG. 101 is a diagram showing an example of key allotter PK information.
FIG. 102 is a diagram showing an example of CA public key information.
FIG. 103 is a diagram showing an example of a document of title.
FIG. 104 is a diagram showing an example of a key allotment application.
FIG. 105 is a diagram showing an example of service provider unique information.
FIG. 106 is a diagram showing an example of a invalidation key table.
FIG. 107 is a diagram showing an example of key sharing parameters.
FIG. 108 is a diagram showing an example of CA public key information.
FIG. 109 is a diagram showing an example of a certifying key table.
FIG. 110 is a diagram showing an example of an authentication information table.
FIG. 111 is a diagram showing an example of key holding apparatus unique information.
FIG. 112 is a diagram showing an example of user count information.
FIG. 113 is a diagram showing an example of CA public key information.
FIG. 114 is a flowchart illustrating an example of a service selection/key allotment process by the user apparatus of the authentication key allotment system of FIG. 98.
FIG. 115 is a flowchart illustrating an example of a service selection/key allotment process by the key allotter terminal of the authentication key allotment system of FIG. 98.
FIG. 116 is a flowchart illustrating an example of a service selection/key allotment process by the service provider terminal of the authentication key allotment system of FIG. 98.
FIG. 117 is an arrow chart showing a relation among the service selection/key allotment processes by the user apparatus, the key allotter terminal, and the service provider terminal of the authentication key allotment system of FIG. 98.
FIG. 118 is a block diagram representing another exemplary configuration of the key holding apparatus.
FIG. 119 is a diagram showing an example of a key allotment table.
FIG. 120 is a diagram showing an example of key holding apparatus PKI information.
FIG. 121 is a diagram showing an example of a temporal holding key table.
FIG. 122 is a diagram showing an example of an authenticating key table.
FIG. 123 is a flowchart illustrating another example of the service selection/key allotment process by the user apparatus constituted by the user terminal of FIG. 15, the key holding apparatus of FIG. 16 or 118 and the IC card of FIG. 17.
FIG. 124 is a flowchart illustrating an example of a service selection/key allotment process by the key allotter terminal of FIG. 18, corresponding to the flowchart of FIG. 123.
FIG. 125 is a flowchart illustrating an example of a service selection/key allotment process by the service provider terminal of FIG. 19, corresponding to the flowchart of FIG. 123.
FIG. 126 is an arrow chart corresponding to the flowcharts of FIGS. 123 to 125 and showing a relation among the service selection/key allotment processes by the user apparatus constituted by the user terminal of FIG. 15, the key holding apparatus of FIG. 16 or 118 and the IC card of FIG. 17, the key allotter terminal of FIG. 18, and the service provider terminal of FIG. 19.
FIG. 127 is an arrow chart showing details of a relation between a "new key request and reception process" in step S524 and a "new key generation and sending process" in step S506, shown by the arrow chart of FIG. 126.
FIG. 128 is a diagram showing a protocol stack involved when SSL, TLS are utilized.
FIG. 129 is an arrow chart showing details of a relation between a "mutual authentication + key sharing process with the key holding apparatus" in step S522 and a "mutual authentication + key sharing process with the key allotter terminal" in step S504, shown by the arrow chart of FIG. 126 performed when SSL, TLS are utilized.
FIG. 130 is a diagram showing an example of a key allotment table.
FIG. 131 is a flowchart illustrating still another example of the service selection/key allotment process by the user apparatus constituted by the user terminal of FIG. 15, the key holding apparatus of FIG. 16 or 118, and the IC card of FIG. 17.
FIG. 132 is a flowchart illustrating an example of a service selection/key allotment process by the key allotter terminal of FIG. 18, corresponding to the flowchart of FIG. 131.
FIG. 133 is a flowchart illustrating an example of a service selection/key allotment process by the service provider terminal of FIG. 19, corresponding to the flowchart of FIG. 131.
FIG. 134 is an arrow chart corresponding to the flowcharts of FIGS. 131 to 133 and showing a relation among the service selection/key allotment processes by the user apparatus constituted by the user terminal of FIG. 15, the key holding apparatus of FIG. 16 or 118 and the IC card of FIG. 17, the key allotter terminal of FIG. 18, and the service provider terminal of FIG. 19.
FIG. 135 is an arrow chart showing details of a relation between a "new key request and reception process" in step S524 and a "new key generation and sending process" in step S506, shown by the arrow chart of FIG. 134.

### Best Modes for Carrying Out the Invention

### (Business Models Supported by Authentication Key Allotment Systems)

First, a business model supported by an authentication key allotment system to which the present invention is applied will be described.

Note that in this example, a user User can be billed when identified by a general-purpose account system such as the Kerberos authentication key allotment system, or a public key authentication infrastructure.

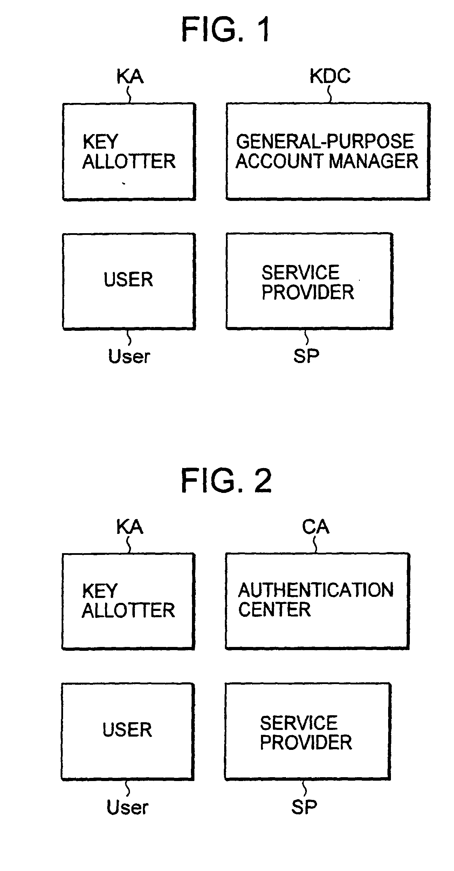

FIG. 1 represents participants in a business model in a case where the existence of a general-purpose account system is supposed. That is, the participants are supposed to be: a user User, a service provider SP, a key allotter KA, and a general-purpose account manager KDC. The user User is registered with the general-purpose account manager KDC, and the key allotter KA identifies the user User by a general-purpose account.

FIG. 2 represents participants in a business model in a case where the existence of a public key authentication infrastructure is supposed. That is, the participants are supposed to be: a user User, a service provider SP, a key allotter KA, and an authentication center CA. Each of the user User, the service provider SP, and the key allotter KA is registered with the authentication center CA, and the user User, the service provider SP, and the key allotter KA verify digital signatures of each other by utilizing the public key authentication infrastructure.

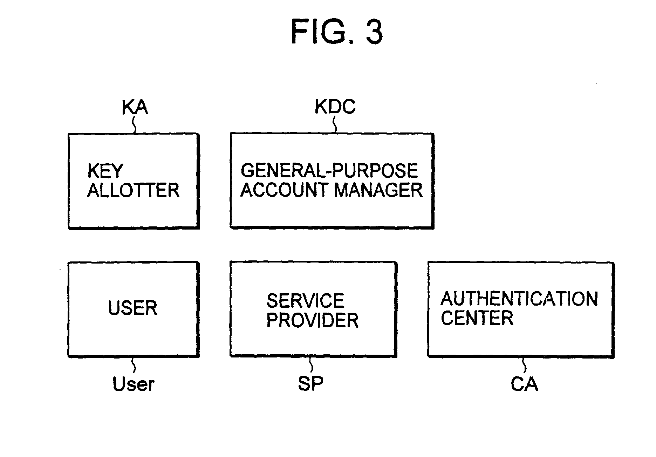

FIG. 3 represents participants in a business model in a case where both a public key authentication infrastructure and a general-purpose account system are used. That is, the participants are supposed to be: a user User, a service provider SP, a key allotter KA, an authentication center CA, and a general-purpose account manager KDC. In this case, the key allotter KA identifies the user User by a general-purpose account, and further verifies a digital signature of the service provider SP by the public key authentication infrastructure.

Note that the number of participants is not particularly limited. However, in any of the cases of FIGS. 1 to 3, in this example, for instance, there are supposed to be only one key allotter KA, and plural users User and service providers SP.

Further, there could generally be plural managers at the authentication center of the public key authentication infrastructure or at the Kerberos authentication key allotment system, but in any of the cases of FIGS. 1 to 3, in this example, for instance, there are supposed to be only one general-purpose account manager KDC and only one authentication center CA.

In the business models of the present invention, users User and service providers SP conclude predetermined service utilization contracts first, and from then on, when a specific service provider SP authenticates a specific user User under restrictions, such as a predetermined number of times or a predetermined period, for instance, when the user User subscribes to news provided by the service provider SP or accesses a database for a certain period, the service provider SP can authenticate the user User efficiently.

That is, an authentication technique different from the general-purpose account or the public key authentication infrastructure is provided to two parties (a user User and a service provider SP) who frequently perform authentication. This authentication is efficient since it can be performed directly by the two parties. Further, in the case of terminating use of this authentication technique, it is easy to notify its invalidation since the authentication technique is used only between the specific service provider SP and user User. As a result, the above-mentioned second problem of the general-purpose account system and second problem of the public key authentication infrastructure can be solved.

As mentioned above, direct authentication is possible in the individual account system as well. However, in the business models of the present invention, a user User is identified utilizing the general-purpose account system or the public key authentication infrastructure only when a new authentication technique is allotted. As a result, time and labor involved in the registration required by the individual account system can be saved, and at the same time, the user can remain anonymous when utilizing a service.

Further, an authentication technique to be newly allotted is supposed to be the common key authentication or the public key authentication. The user User holds information necessary for the common key authentication in an apparatus having a function analogous to that of an IC card. As a result, allotment and selection of keys, and calculation for authentication can be automated. Therefore, the above-mentioned first and second problems of the individual account system can be solved.

Note that this apparatus having a function analogous to that of an IC card will hereinafter be called as a key holding apparatus. Further, in this example, the key holding apparatus is distributed to a user User from the key allotter KA. A contract will be concluded between the service provider SP and the key allotter KA, such that the key allotter KA performs key allotment to both the key holding apparatus of the user User and the service provider SP when requested by the service provider SP, and act as an agent to collect a service fee from the user User.

In this example, allotment of an authentication technique (key allotment) is performed by the key allotter KA when requested by the service provider SP for key allotment to a user User who will utilize a specific service.

Specifically, the key allotter KA identifies the user User using the general-purpose account or the public key authentication infrastructure, and performs key allotment in exchange for billing the user User (collecting a service utilization fee and a key allotment commission) . Thereafter, the key allotter KA sends notice to the service provider SP that the key allotment is performed.

That is, when allotting an authentication technique, the key allotter KA generates cryptographic keys for a new authentication technique, and delivers the cryptographic keys to the service provider SP and the key holding apparatus held by the user User.

Alternatively, when allotting an authentication technique, the key allotter KA requests the key holding apparatus held by the user User to generate cryptographic keys for a new authentication technique. In response to the request, the key holding apparatus generates cryptographic keys for a new authentication technique by itself, and delivers the cryptographic keys to both the key allotter KA and the service provider SP.

Note that in the present specification, "the key holding apparatus generates cryptographic keys for a new authentication technique" includes not only a concept that "the key holding apparatus newly generates cryptographic keys for a new authentication technique when requested by the key allotter KA (generates on demand)", but also a concept that "the key holding apparatus generates cryptographic keys for a new authentication technique by holding beforehand a plurality of cryptographic key candidates generated beforehand by the key holding apparatus itself or another apparatus different from the key holding apparatus, and by extracting (selecting) predetermined ones of the plurality of cryptographic key candidates which it holds when requested by the key allotter KA to make the keys as the cryptographic keys for the new authentication technique".

Further, in an authentication technique to be allotted to both the key holding apparatus held by the user User and the service provider SP, a key allotted to the key holding apparatus will hereinafter be called as a certifying key, and a key allotted to the service provider SP will hereinafter be called as a verifying key.

As mentioned above, either the common key authentication or the public key authentication could be used as the authentication technique. When the common key authentication is used, the verifying key and the certifying key match (or are identical keys). By contrast, when the public key authentication is used, the verifying key is supposed to be a public key, and the certifying key is supposed to be a private key, and thus the verifying key and the certifying key are different keys.

What is important here is that the authentication technique allotted by the key allotter KA is not an authentication technique for billing the user User, but an authentication technique for providing a specific service. That is, a key allotment notice from the key allotter KA to the service provider SP needs to include neither information for identifying the user User nor a credit card number.

Therefore, the user User can remain anonymous to the service provider SP, and at the same time, possible illegal acts would be limited to the utilization of a service fixed at the time of key allotment even if the key(s) for the newly allotted authentication technique is leaked for some reason. As a result, it can be prevented that the importance of one authentication technique becomes excessive.

Authentication by the newly allotted authentication technique would be performed under the following three assumptions.

That is, a first assumption is that the key allotter KA could identify a service provider SP and a user User correctly by the general-purpose account or the public key authentication infrastructure; a second assumption is that the key allotter KA would be reliable (could allot keys to the service provider SP and the user User correctly) ; and a third assumption is that the key allotter KA would prohibit use of the allotted keys to any third party (including the key allotter KA itself) other than the key allottee. In this way, the key allotter KA would need to be so qualified as equivalent to the general-purpose account manager KDC or the authentication center CA in the general-purpose account system or the public key authentication system (so qualified as to execute the above-mentioned three points reliably) .

Next, an operation of the present business models will be described.

First, the user User selects utilization of a service.

The service provider SP who can provide the service selected by the user User gives the user a key allotment application that notifies the key allotter KA about the content, amount of money, and the like of that service.

When the user User submits the key allotment application to the key allotter KA, the key allotter KA, in response thereto, inputs a certifying key for a new authentication technique and auxiliary information such as an identification number of the authentication technique, to a key holding apparatus held by the user User.

Alternatively, when the user User submits the key allotment application to the key allotter KA, the key allotter KA, in response thereto, inputs request information for requesting generation of cryptographic keys for a new authentication technique, to the key holding apparatus held by the user User. In response to this request information, the key holding apparatus generates cryptographic keys for a new authentication technique, i.e., a certifying key for the new authentication technique, and a verifying key to be paired therewith. And the key holding apparatus holds the certifying key by itself, and gives the verifying key to the key allotter KA.

When these keys are allotted, the key allotter KA identifies the user User who holds the key holding apparatus by the general-purpose account or the public key authentication infrastructure, and bills the user User so as to correspond with the service. Thereafter, the key allotter KA pays the service provider SP an amount of money obtained by subtracting a commission from the billed amount.

To this end, the key holding apparatus is provided with an input section for inputting a password necessary for the user User to be authenticated by the general-purpose account or the public key authentication infrastructure, a connection section for connecting the IC card, and the like.

Next, the key allotter KA prepares and gives to the key holding apparatus held by the user User a key allotment report for the service provider SP.

The key allotment report includes information about the allotted authentication technique (the identification number of the authentication technique, the verifying key for that authentication technique).

The key holding apparatus submits the key allotment report to the service provider SP, wherein the service provider SP obtains the verifying key for the new authentication technique and the auxiliary information. That is, the service provider SP obtains the verifying key for authenticating the user User to whom key allotment is performed.

When the user User utilizes the service after the authentication technique is allotted, the service provider SP performs authentication by the allotted authentication technique with respect to the key holding apparatus held by the user User. And when succeeding in this authentication, the service provider SP provides the service.

In this case (when the service is to be provided), cryptographic keys are temporarily shared between the key holding apparatus on which this authentication is performed (the key holding apparatus held by the user User) and the service provider SP, to encrypt their communication during service provision. As a result, spoofing of the user User and leakage of the content of the service can be prevented.

The authentication technique to be allotted has its expiration date and user determined by initially fixing its purpose of use. As a result, it can be deleted when its expiration date is passed. Further, when the use of the authentication technique should be terminated, the key allotter KA can notify the service provider SP about its invalidation.

### (Authentication Key Allotment System)

Next, an authentication key allotment system to which the present invention is applied will be described.

Since the description would become complicated, the system will be described by dividing into the following first to six embodiments and individually in that order. That is, as the first embodiment, an authentication key allotment system will be described, in which an authentication technique to be allotted is the common key authentication in a state where only the general-purpose account system (Kerberos) exists (a state corresponding to FIG. 1).

As the second embodiment, an authentication key allotment system will be described, in which an authentication technique to be allotted is the public key authentication in a state where only the public key authentication infrastructure exists (a state corresponding to FIG. 2).

As the third embodiment, an authentication key allotment system will be described, in which the general-purpose account system is utilized for user authentication, and a digital signature of a service provider is verified by the public key authentication infrastructure (when the public key authentication infrastructure and the general-purpose account system are utilized, and an authentication technique to be newly allotted is the public key authentication), in a manner corresponding to a state of FIG. 3.

As the fourth embodiment, an authentication key allotment system will be described, in which the general-purpose account system is utilized for user authentication, and a digital signature of a key allotter is verified by the public key authentication infrastructure (when the public key authentication infrastructure and the general-purpose account system are utilized, and an authentication technique to be newly allotted is the public key authentication), in a manner corresponding to the state of FIG. 3. In the above first to fourth embodiments, cryptographic keys for a new authentication technique are generated by an apparatus kept by the key allotter KA (a key allotter terminal to be described later) , but may also be generated by the key holding apparatus itself kept by the user User, as mentioned above.

Now, as the fifth and sixth embodiments, authentication key allotment systems will be described, in each of which the key holding apparatus kept by the user User generates cryptographic keys for a new authentication technique.

That is, as the fifth embodiment, an authentication key allotment system will be described, which is an embodiment corresponding to the second embodiment (the authentication key allotment system in which an authentication technique to be allotted is the public key authentication in the state (the state corresponding to FIG. 2) in which only the public key authentication infrastructure exists), and in which the key holding apparatus kept by the user User generates cryptographic keys for a new authentication technique.

Further, as the sixth embodiment, an authentication key allotment system will be described, which is an embodiment corresponding to the fourth embodiment (in which the general-purpose account system is utilized for user authentication, and a digital signature of a key allotter is verified by the public key authentication infrastructure (when the public key authentication infrastructure and the general-purpose account system are utilized, and an authentication technique to be newly allotted is the public key authentication), in a manner corresponding to the state of FIG. 3), and in which the key holding apparatus kept by the user User generates cryptographic keys for a new authentication technique.

### (First Embodiment)

An authentication key allotment system to which the first embodiment of the present invention is applied will be described below with reference to the drawings.

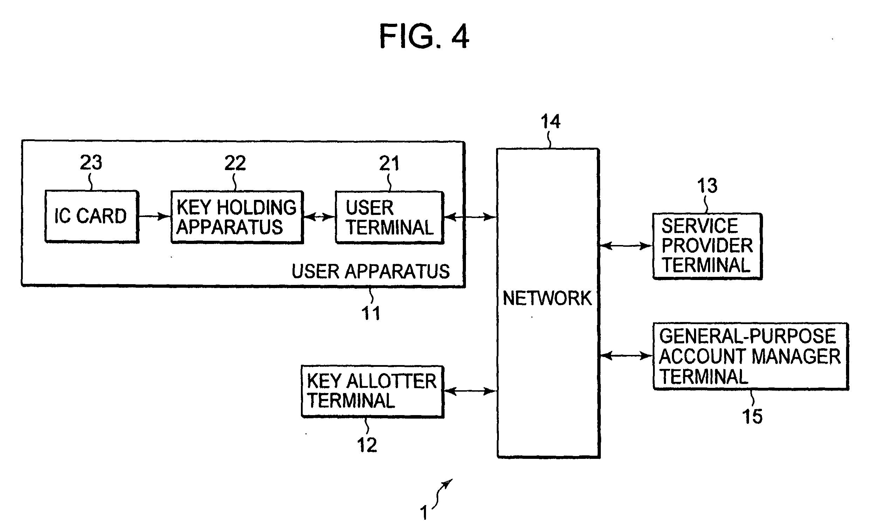

FIG. 4 represents an exemplary configuration of an authentication key allotment system 1.

As shown in FIG. 4, in the authentication key allotment system 1, a user apparatus 11 used by an arbitrary number of users User (FIG. 1) (one person in this example), a key allotter terminal 12 used by an arbitrary number of key allotters KA (FIG. 1) (one person in this example), a service provider terminal 13 used by an arbitrary number of service providers SP (FIG. 1) (one person in this example), and a general-purpose account manager terminal 15 used by an arbitrary number of general-purpose account managers KDC (FIG. 1) (one person in this example) are connected to one another via a network 14.

The type of the network is not particularly limited, but in this example, it is supposed to be, for instance, the Internet. Note that each of the user apparatus 11, the key allotter terminal 12, the service provider terminal 13, and the general-purpose account manager terminal 15 may directly communicate with the other apparatuses, not via the network 14. In this case, the network 14 can be omitted.

As will be described later, the user apparatus 11 is constituted by a user terminal 21, a key holding apparatus 22, and an IC card 23. Provided that, when the key holding apparatus 22 has a function of utilizing services provided by the service provider 13, and a function of communicating with other apparatuses via the network 14, the user terminal 21 can be omitted.

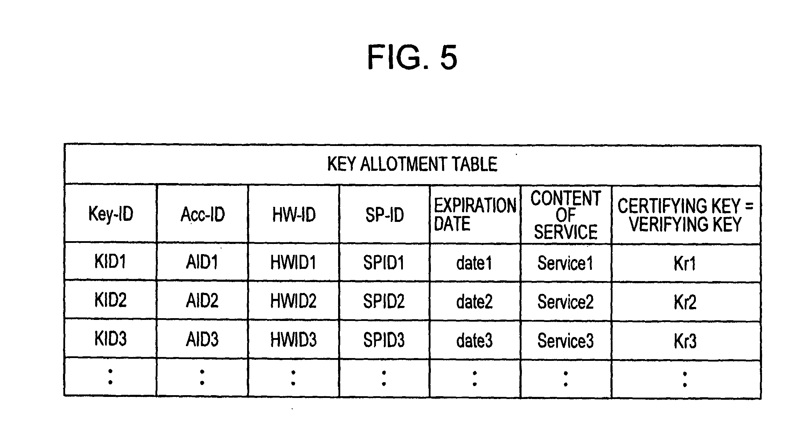

FIGS. 5 to 8 represent examples of data held by the key allotter terminal 12.

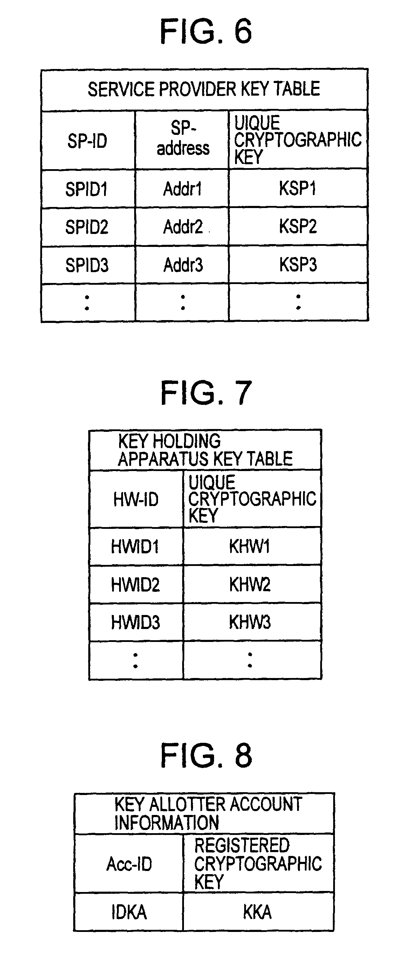

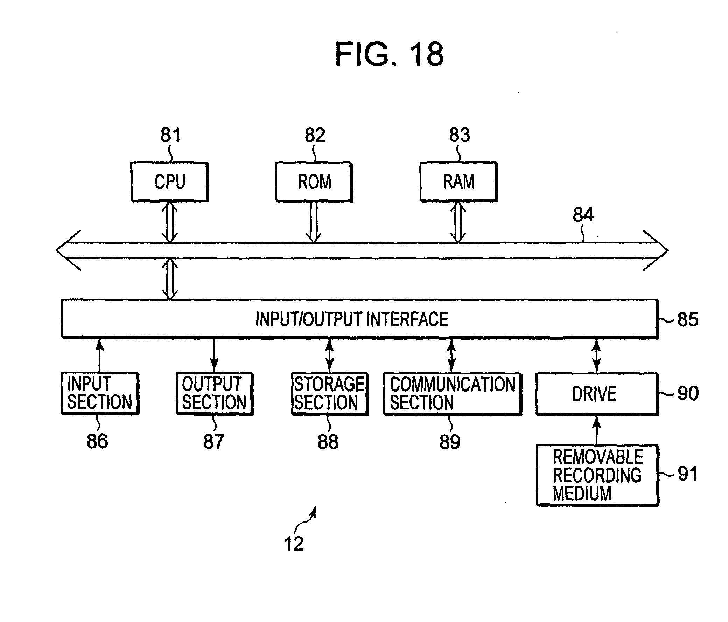

That is, in a memory (a storage section 88 or the like of FIG. 18 to be described later) of the key allotter terminal 12, a key allotment table such as shown in FIG. 5, a service provider key table such as shown in FIG. 6, a key holding apparatus key table such as shown in FIG. 7, and key allotter account information such as shown in FIG. 8 are stored. Specifically, in this example, for instance, each of the key allotment table of FIG. 5, the service provider key table of FIG. 6, and the key holding apparatus key table of FIG. 7 is implemented as a database retrievable by a respective one of a Key-ID, an SP-ID, and a HW-ID.

In the key allotment table of FIG. 5, each row (hereinafter called as a record) corresponds to an authentication technique allotted by the key allotter terminal 12.

The Key-ID represents an identification number of the allotted authentication technique, and is assigned to be unique.

An Acc-ID represents an identification number under the general-purpose account system of a user (an IC card kept by the user) who pays at the time the authentication technique is allotted.

An HW-ID represents an identification number of a key holding apparatus 22 to which the authentication technique is allotted.

An SP-ID represents an identification number of a service provider terminal 13 (service provider SP) who is allotted with the authentication technique.

An expiration date represents an expiration date for the authentication technique.

Service content represents the content of a service provided to the user terminal 21 (user User) from the service provider terminal 13 (service provider SP) by authentication utilizing that authentication technique.

A certifying key = verifying key represents a verifying key and a certifying key for the authentication technique. Note that the key held by the user User (key holding apparatus 22) and the key held by the service provider SP (service provider terminal 13) match in this example since the common key cryptography is utilized as the authentication technique.

In the service provider key table of FIG. 6, each record corresponds to a service provider terminal 13 (service provider SP) who concludes a contract with the key allotter terminal 12 (key allotter KA).

The SP-ID represents an identification number of the service provider terminal 13 (service provider SP) who concludes the contract, and is assigned to be unique at the time the contract is concluded.

An SP-address represents an address for making contact of the service provider terminal 13 (an e-mail address, an URL and the like). This is supposed to be where to make contact when invalidation of the authentication technique occurs or when an inquiry is to be made.

A unique cryptographic key represents a cryptographic key agreed upon between the service provider and the key allotter when the contract is concluded, and is used for guaranteeing the anonymity and integrity of communication between both parties.

In the key holding apparatus key table of FIG. 7, each record corresponds to a key holding apparatus 22.

The HW-ID represents an identification number of the key holding apparatus 22, and is uniquely assigned to the key holding apparatus 22.

A unique cryptographic key represents a cryptographic key shared between a specific key holding apparatus 22 and the key allotter terminal 12, and is used for authentication and key sharing between both parties when a new authentication technique is allotted.

The key allotter account information of FIG. 8 is configured of an Acc-ID which is an identification number of the key allotter terminal 12 (key allotter KA) under the general-purpose account, and a registered cryptographic key used for authentication with respect to the general-purpose account manager terminal 15 (general-purpose account manager KDC).

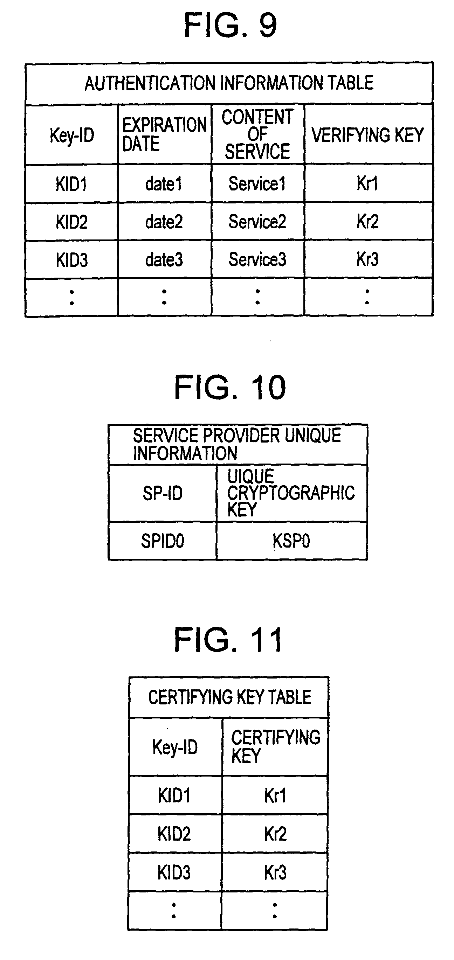

FIGS. 9 and 10 represent examples of data held by the service provider SP.

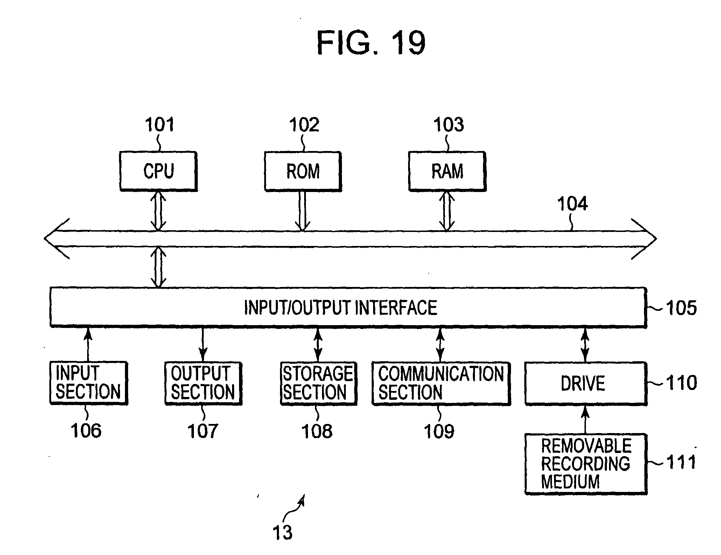

That is, in a memory of the service provider terminal 13 (a storage section 108 or the like of FIG. 19 to be described later) , an authentication information table such as shown in FIG. 9, and service provider unique information such as shown in FIG. 10 are stored. In this example, for instance, the authentication information table of FIG. 9 is implemented as a database retrievable by a Key-ID.

In the authentication information table of FIG. 9, each record corresponds to an allotted authentication technique.

Each of the Key-ID, an expiration date, and a verifying key represents a respective one of an identification number, an expiration date, and a verifying key of the authentication technique. Service content represents the content of a service provided to the user User (user terminal 21) who is authenticated by that authentication technique.

In the service provider unique information of FIG. 10, an SP-ID represents an assigned identification number when the service provider terminal 13 (service provider SP) and the key allotter terminal 12 (key allotter KA) conclude a key allotment contract. Similarly, a unique cryptographic key represents a cryptographic key agreed upon with the key allotter terminal 12 (key allotter KA) at the time the key allotment contract is concluded, and is used for guaranteeing the anonymity and integrity of communication between both parties.

FIGS. 11 to 14 represent examples of data held by the user User.

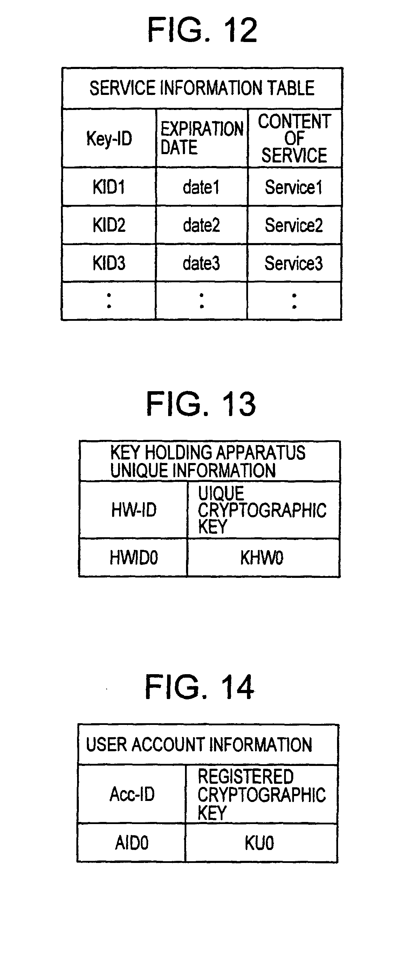

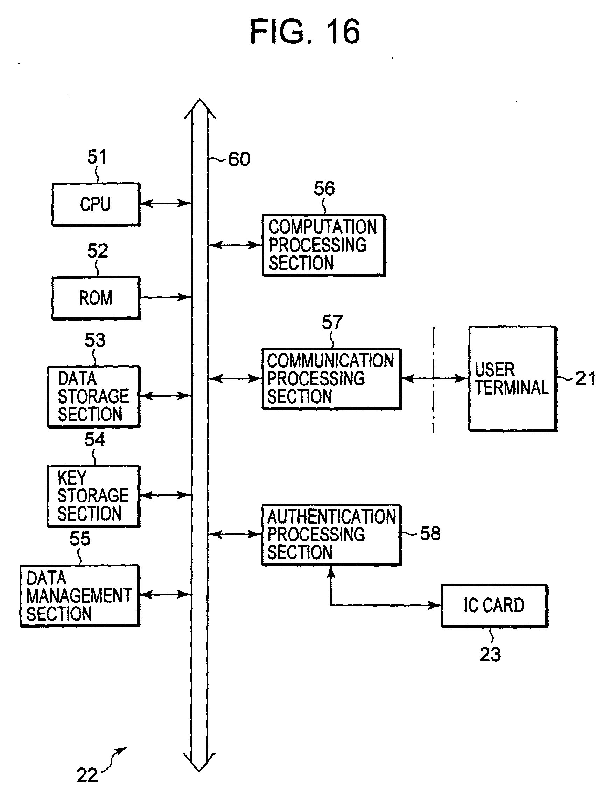

That is, in a memory (a data storage section 53 or a key storage section 54 of FIG. 16 to be described later) of the key holding apparatus 22 of the user apparatus 11, or in the IC card 23, a certifying key table of FIG. 11, a service information table of FIG. 12, key holding apparatus unique information of FIG. 13, and user count information of FIG. 14 are stored. In this example, for instance, the certifying key table of FIG. 11 and the service information table of FIG. 12 are implemented as databases retrievable by a Key-ID.

In the certifying key table of FIG. 11 and the service information table of FIG. 12, each record corresponds to an authentication technique with which the key holding apparatus 22 (user User) is allotted by the key allotter terminal 12 (key allotter KA).

The Key-ID represents an identification number of the authentication technique. A certifying key represents a certifying key of the authentication technique. An expiration date represents an expiration date for the authenticating key of the authentication technique. Service content represents the content of a service provided when authentication is performed by this authentication technique.

In the key holding apparatus unique information of FIG. 13, an HW-ID represents a unique identification number of the key holding apparatus 22. A unique cryptographic key represents a cryptographic key that is used to authenticate the fact that the other party who writes a new certifying key is the key allotter KA (key allotter terminal 12) when the new certifying key is written to the key holding apparatus 22, and to prevent leakage and tampering of the written certifying key.

The user count information of FIG. 14 is configured of an Acc-ID which is an identification number of the key allotter under the general-purpose account, and a registered cryptographic key used for authentication with respect to the general-purpose account manager KDC (general-purpose account manager terminal 15) . Note that the Acc-ID and the registered cryptographic key may be those generated from a login name and a password inputted by the user.

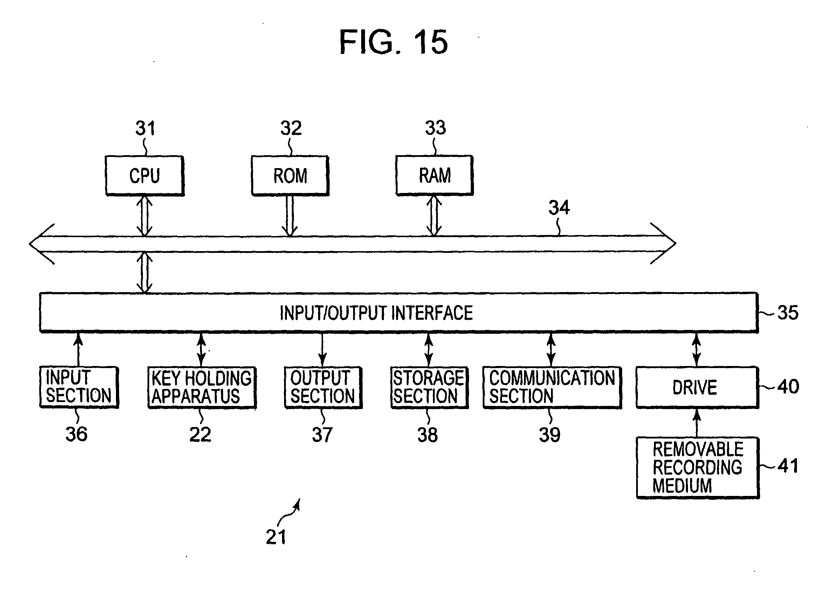

FIG. 15 represents an exemplary configuration of the user terminal 15.

Note that in this example, the user terminal 15 is supposed to be a personal computer such as shown in FIG. 15, but is not limited as long as it can utilize services provided by the service provider terminal 13 and is connectable to the key holding apparatus 22; for instance, digital home appliances and the like may be acceptable.

In FIG. 15, a CPU 31 executes various processing according to programs stored in a ROM 32 or programs loaded into a RAM 33 from a storage section 38.

The RAM 33 also stores data and the like necessary for the CPU 31 to execute the various processing, as appropriate.

The CPU 31, the ROM 32, and the RAM 33 are interconnected via a bus 34. An input/output interface 35 is also connected to this bus 34.

The key holding apparatus 22 is also connected to the input/output interface 35.

The input/output interface 35 also connects to it an input section 36 configured of a keyboard and the like, an output section 37 configured of a display or the like, the storage section 38 configured of a hard disk and the like, and a communication section 39 that executes communication processing for intercommunication with other apparatuses via the network 14 (FIG. 4).

Also connected to the input/output interface 35 is a drive 40 as necessary, to which a removable recording medium 41, such as a magnetic disk, an optical disk, a magneto-optical disk, a semiconductor memory or the like, is attached as appropriate, and a computer program read therefrom is installed to the storage section 38, as necessary.

FIG. 16 represents an exemplary configuration of the key holding apparatus 22.

In FIG. 16, a CPU 51 executes various processing according to programs stored in a ROM 52 or programs loaded into a RAM 53 from the user terminal 21 via a communication processing section 57. The RAM 53 also stores data and the like necessary for the CPU 51 to execute the various processing, as appropriate. The CPU 51, the ROM 52, and the RAM 53 are interconnected via a bus 60.

This bus 60 also connects to it the data storage section 53 for storing the service information table of FIG. 12, the certifying key table of FIG. 11, the key storage section 54 for storing the key holding apparatus unique information of FIG. 13, and a data management section 55 for adding or deleting the content of the key storage section 54 or the data storage section 53 according to information from the key allotter KA (information transmitted from the key allotter terminal 12 of FIG. 4 and received by the communication processing section 57 via the network 14 and the user terminal 21), and the expiration date for the service information table of FIG. 12 stored in the data storage section 53, based on control by the CPU 51.

This bus 60 is also provided with a computation processing section 56 that performs computation processing for authentication by utilizing a cryptographic key, the communication processing section 57 that performs communication processing with the user terminal 21, and an authentication processing section 58 that performs processing for identifying the user User who uses the key holding apparatus 22, based on control by the CPU 51.

When user authentication is performed by a login name and a password, the user User manipulates the keyboard (the input section 36 of FIG. 15) of the user terminal 22 to input the login name and the password, while checking the display (the output section 37 of FIG. 15) of the user terminal 22. The login name and the password inputted to the user terminal 21 are supplied to the authentication processing section 58 via the input/output interface 35 and the communication processing section 57, and the authentication processing section 58 then generates the Acc-ID which is the user account information of FIG. 14 and the registered cryptographic key to perform a user authentication process, based on the supplied login name and password.

Note that the keyboard and the display are connected directly to the authentication processing section 58 if the key holding apparatus 22 is used independently without being connected to the user terminal 21 and if user authentication is performed by a login name and a password.

By contrast, when authentication based on the common key cryptography or the public key cryptography is utilized, the IC card 23 is connected to the authentication processing section 58. The Acc-ID and the registered cryptographic key of FIG. 14 are held on the IC card.

In this example, the key holding apparatus 22 is supposed to be able to request the IC card 23 connected to the authentication processing section 58 to encrypt data or decrypt the encrypted data using the cryptographic key held on the IC card 23, and obtain auxiliary information (the user's identification number, a certificate and the like) necessary for authentication from the IC card 23.

As will be described later, since user identification is required only when a new authentication technique is allotted, the IC card 23 could otherwise be removed from the authentication processing section 58 in the case of authentication under the common key cryptography or the public key cryptography. Further, in the case of password authentication, various information related to the user authentication technique could be detached from the key holding apparatus 22 by causing the user to input the password every time the authentication is performed, without causing the key holding apparatus 22 to hold the password.

Note that each of the key storage section 54, the computation processing section 56, and the data management section 55 may preferably be made tamper-proof. In this case, internally held or processed data can be prevented from being acquired or altered from outside.

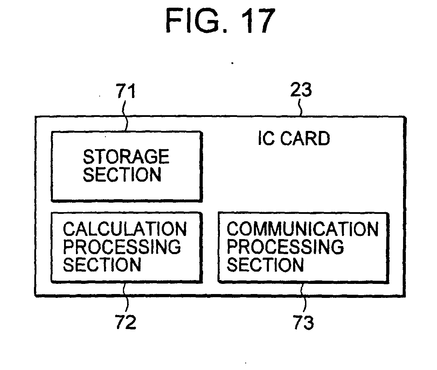

FIG. 17 represents an exemplary configuration of the Tc card 23.

The IC card 23 may also be made tamper-proof in order to prohibit acquisition of internally held data and processed content from outside.

The IC card 23 is provided with a storage section 71 that stores a cryptographic key and auxiliary information (a cryptographic key for the common key cryptography in the case of the common key authentication, and a private key for the public key cryptography and a certificate in the case of the public key authentication) for use in authentication, a calculation processing section 72 that performs a calculation process for authentication utilizing the cryptographic key held on the storage section 71, and a communication processing section 73 that performs communication processing with the authentication processing section 58 (FIG. 16) of the key holding apparatus 22. When the IC card 23 is utilized for user authentication, the account information of FIG. 14 is held on the storage section 71.

FIG. 18 represents an exemplary configuration of the key allotter terminal 12.

In FIG. 18, each of a CPU 81 to a removable recording medium 91 has a configuration similar to that of a respective one of the CPU 31 to the removable recording medium 41 of the user terminal 21 of FIG. 15, and these descriptions will be omitted.

Provided that, the above-mentioned data of FIGS. 5 to 8 are stored on, for instance, the storage section 88 and the like.

FIG. 19 represents an exemplary configuration of the service provider terminal 13.

In FIG. 19, each of a CPU 101 to a removable recording medium 111 has a configuration similar to that of a respective one of the CPU 31 to the removable recording medium 41 of the user terminal 21 of FIG. 15, and these descriptions will be omitted.

Provided that, the above-mentioned data of FIGS. 9 and 10 are stored on, for instance, the storage section 108 or the like.

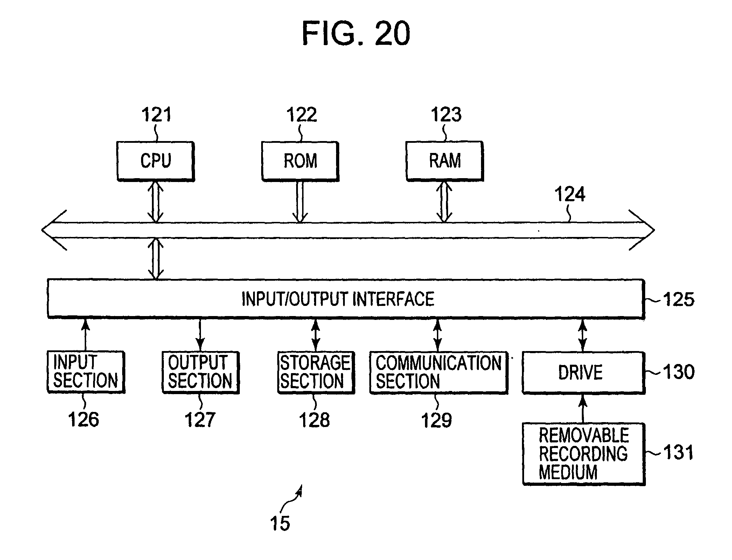

FIG. 20 represents an exemplary configuration of the general-purpose account manager terminal 15. In FIG. 20, each of a CPU 121 to a removable recording medium 131 has a configuration similar to that of a respective one of the CPU 31 to the removable recording medium 41 of the user terminal 21 of FIG. 15, and these descriptions will be omitted.

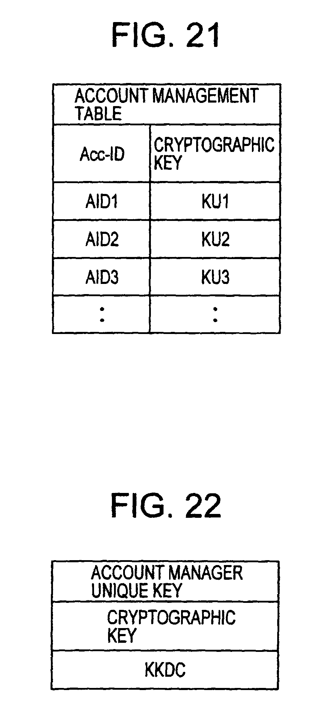

Provided that, data such as shown in FIGS. 21 and 22 are stored on, for instance, the storage section 128 or the like.

In this example, an account management table of FIG. 21 is implemented as a database retrievable by an Acc-ID. Further, the Acc-ID represents an identification number of the user User (key holding apparatus 22) under the general-purpose account, and is assigned to be unique. A cryptographic key represents information for authenticating the user User (key holding apparatus 22) by the common key authentication.

A general-purpose account manager unique key of FIG. 22 represents a cryptographic key solely prepared for the general-purpose account manager KDC (general-purpose account manager terminal 15).

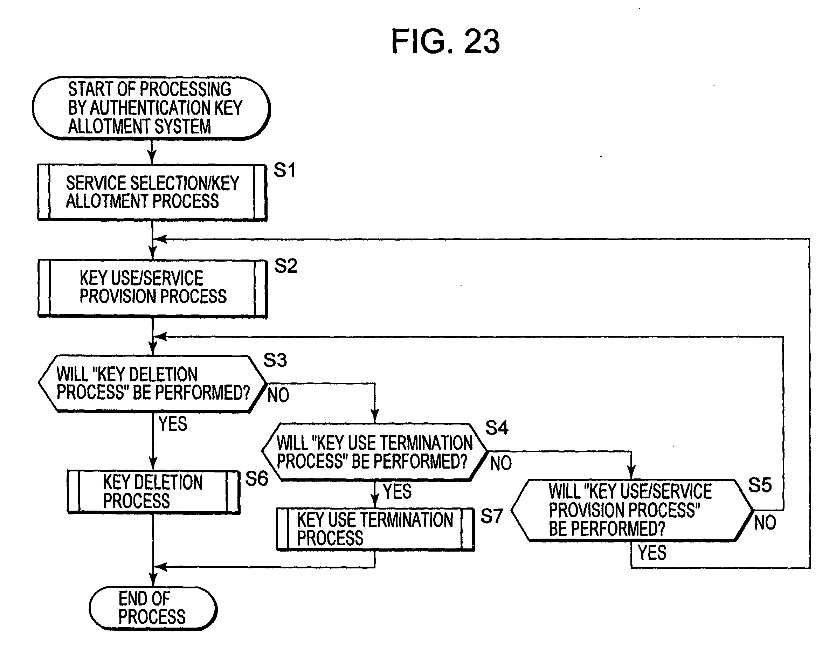

Next, an operation of the authentication key allotment system 1 will be outlined with reference to a flowchart of FIG. 23.

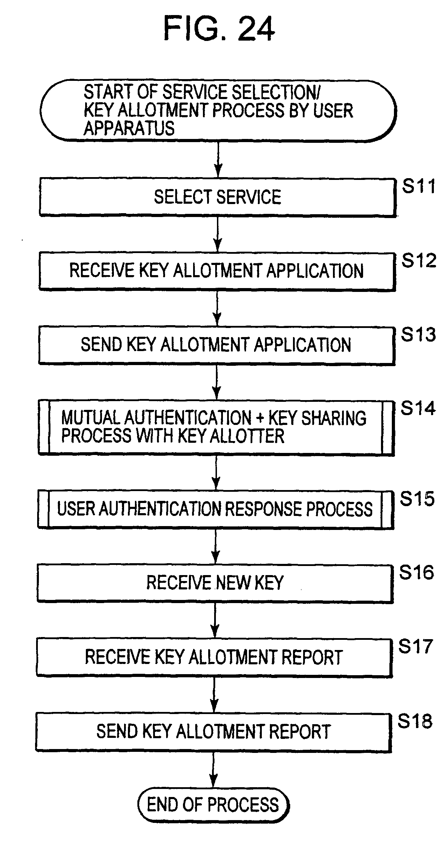

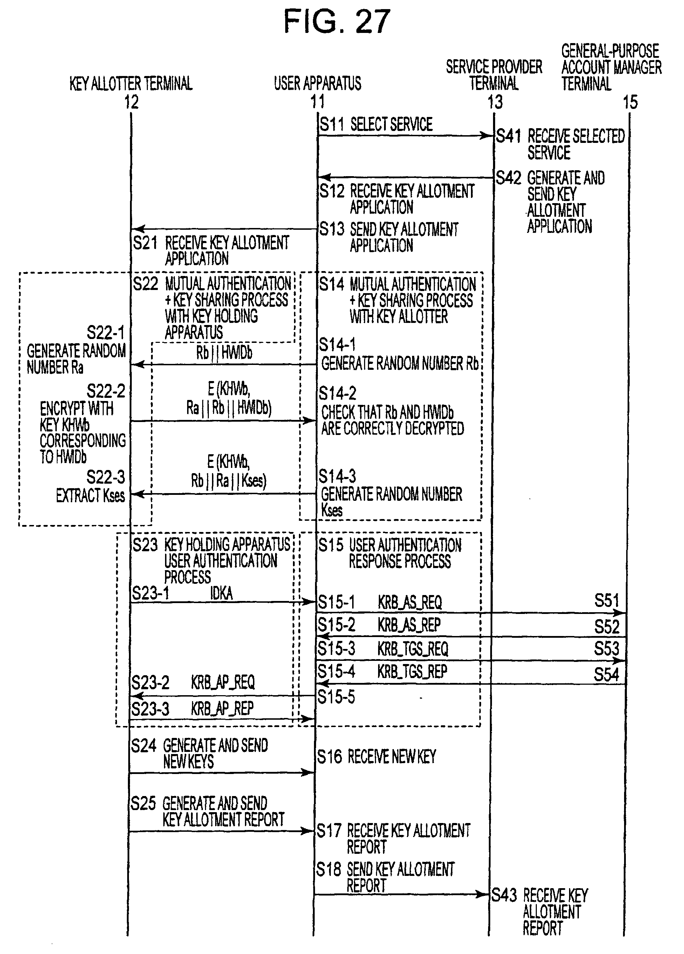

In step S1, when the user terminal 21 (user User) of FIG. 4 selects a service, the key allotter terminal 12 (key allotter KA) allots an authentication technique for providing the service, to the key holding apparatus 22 of the user User and the service provider terminal 13 (service provider SP). Note that such a series of processing will hereinafter be called as a "service selection/key allotment process". Details of the "service selection/key allotment process" will be described later with reference to flowcharts of FIGS. 24 to 26 and an arrow chart of FIG. 27.

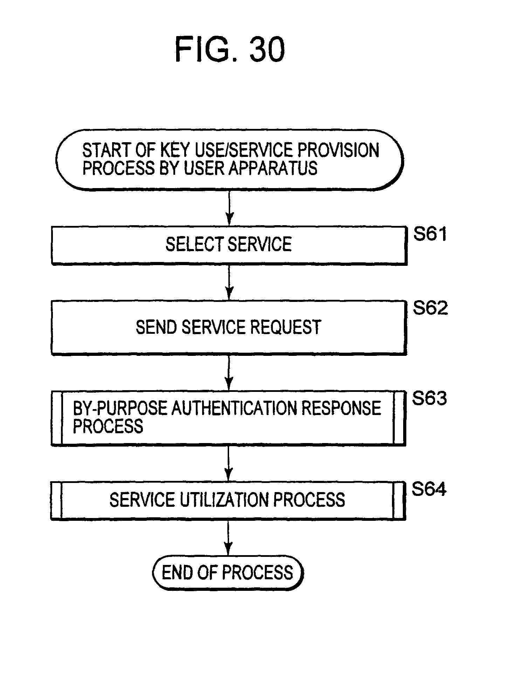

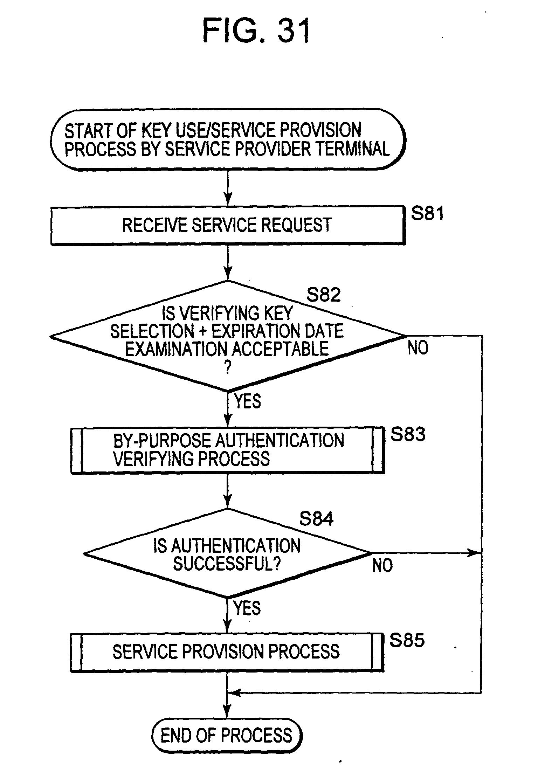

When the authentication technique is allotted as a result of step S1, the key holding apparatus 22 of the user User responds to authentication for service provision by utilizing the allotted authentication technique in step S2. When succeeding in this authentication, the service provider terminal 13 (service provider SP) provides the service to the user User who possesses the key holding apparatus 22 (to the user terminal 21 connected to the key holding apparatus 22) . Note that such a series of processing will hereinafter be called as a "key use/service provision process". Details of the "key use/service provision process" will be described later with reference to flowcharts of FIGS. 30 and 31.

Next, in step S3, each of the user apparatus 11, the key allotter terminal 12, and the service provider terminal 13 determines whether or not step S6 (a "key deletion process") to be described later is performed.

A determination method for the process of step S3 is not particularly limited. However, in this example, for instance, supposing that a catalyst (trigger) for key deletion would be externally given to each of the user apparatus 11, the key allotter terminal 12, and the service provider terminal 13 as will be described later, then each of the user terminal 11, the key allotter terminal 12, and the service provider terminal 13 determines in step S3 to perform the "key deletion process" when it obtains this trigger.

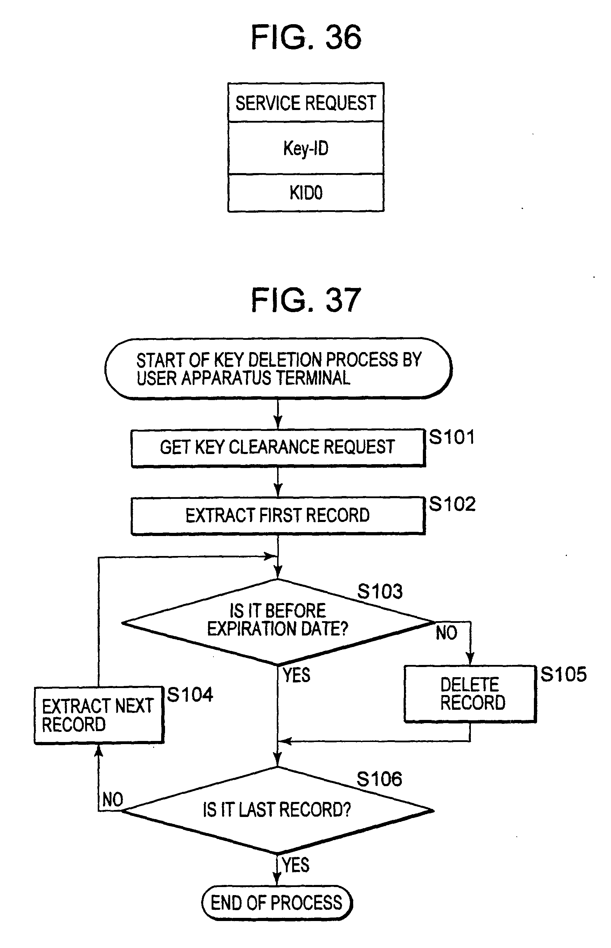

In this case, an expiration date is set for the cryptographic key held by the key holding apparatus 22, and thus in step S6, information about the authentication technique the expiration date for which passes is deleted. Note that such a process will hereinafter be called as the "key deletion process". Details of the "key deletion process" will be described later with reference to flowcharts of FIGS. 37 to 39.

On the other hand, if it is determined in step S3 that the "key deletion process" is not performed, the key allotter terminal 12 determines in step S4 whether or not the process of step S7 to be described later (a "key use termination process") is performed.

A determination method for the process of step S4 is not particularly limited. However, in this example, for instance, if the key allotter terminal 12 detects leakage to the outside of the certifying key of the allotted authentication technique for some reason, or if it detects the fact that the key holding apparatus 22 is stolen (detection means is not shown), it determines in step S4 to perform the "key use termination process".

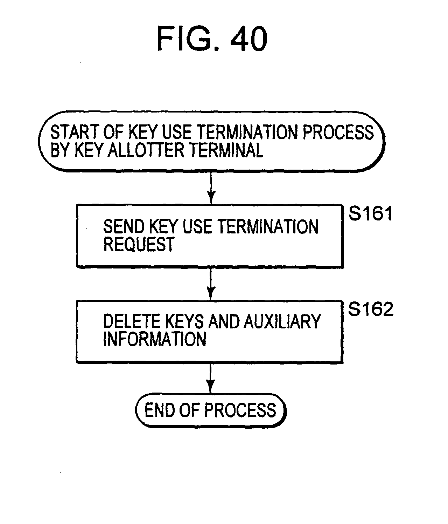

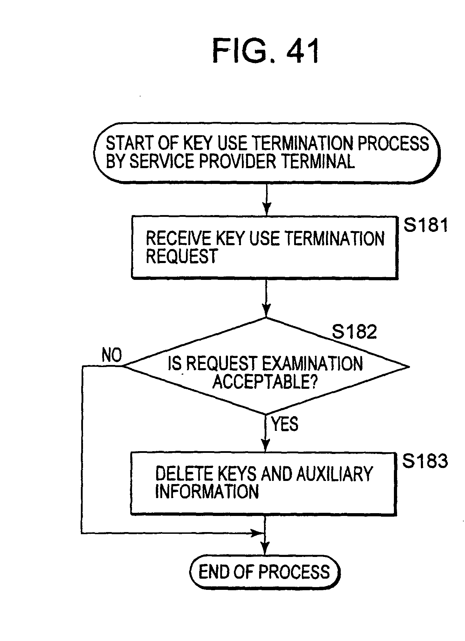

In this case, a process of terminating the use of the authentication technique is executed in step S7. Specifically, the key allotter terminal 12 (key allotter KA) notifies the service provider terminal 13 (service provider SP) that it will terminate the use of the authentication technique, and causes it to terminate the use of the authentication technique in question. Note that such a process will hereinafter be called as the "key use termination process". Details of the "key use termination process" will be described later with reference to flowcharts of FIGS. 40 and 41.

On the other hand, if it is determined in step S4 that the "key use termination process" is not performed, each of the key holding apparatus 22 and the service provider terminal 13 determines in step S5 whether or not the above-mentioned "key use/service provision process" is performed.

When it is determined in step S5 that the "key use/service provision process" is performed, the process returns to step S2 to execute the "key use/service provision process" again.

On the other hand, if it is determined in step S5 that the "key use/service provision process" is not performed, then the process returns to step S3 to repeat that step forward.

That is, the above-mentioned steps S1 to S7 represent processing performed by the authentication key allotment system 1 on one predetermined by-purpose authentication key, and when the above-mentioned "service selection/key allotment process" of step S1 is executed on that one by-purpose authentication key, that by-purpose authentication key is kept in a hold state until either the "key deletion process" of step S6 or the "key use termination process" of step S7 is executed, and the "key use/service provision process" of step S2 is executed for a plurality of times, as necessary.

In the authentication key allotment system 1, there are a plurality of such by-purpose authentication keys, and steps S1 to S7 are performed independently on each of these plurality of by-purpose authentication keys.

The details of the "service selection/key allotment process", the "key use/service provision process", the "key deletion process", and the "key use termination process" will be described below individually in that order.

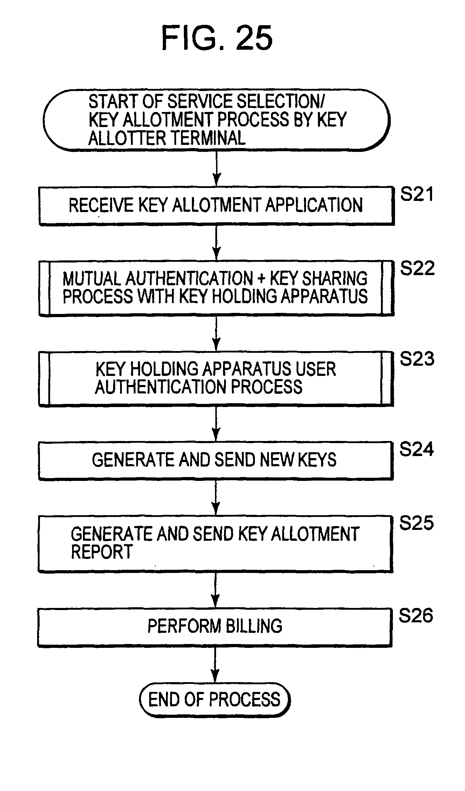

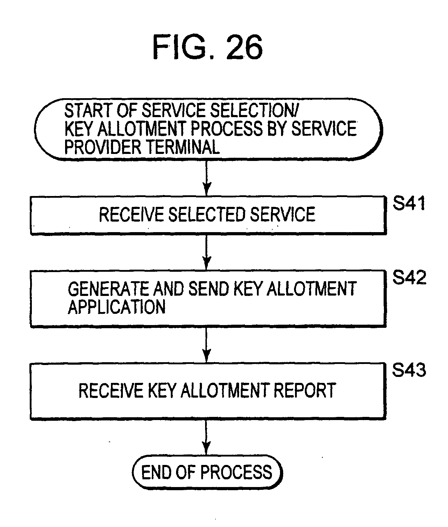

Referring first to the flowcharts of FIGS. 24 to 26 and the arrow chart of FIG. 27, the "service selection/key allotment process (step S1 of FIG. 23) of the operation of the authentication key allotment system 1 to which the first embodiment of the present invention is applied will be described. FIG. 24 represents a "service selection/key allotment process" by the user apparatus 11 (FIG. 4); FIG. 25 represents a "service selection/key allotment process" by the key allotter terminal 12 (FIG. 4); and FIG. 26 represents a "service selection/key allotment process" by the service provider terminal 13 (FIG. 4) . FIG. 27 represents a relation among the "service selection/key allotment processes" by these user terminal 11, key allotter terminal 12, and service provider terminal 13.

Referring now to FIGS. 24 to 26, the "service selection/key allotment processes" by the user apparatus 11, the key allotter terminal 12, and the service provider terminal 13 will be described individually. However, a mutual relation among the processes by these apparatuses can easily be understood by reference to the corresponding steps of FIG. 27.

Referring first to FIG. 24, the "service selection/key allotment process" by the user apparatus 11 (FIG. 4) will be described.

In step S11, the CPU 31 of the user terminal 21 of FIG. 15 selects a service based on a user command from the input section 36, for transmission to the service provider terminal 13 via the communication section 39 and the network 14.

In this example, for instance, supposing that the storage section 38 stores application software for browsing Home pages and the like on the Internet, such as a Web Browser (such application software will hereinafter be called as a browser), the CPU 31 starts this browser to display a Home page managed by the service provider SP and stored in the service provider terminal 13 (the storage section 108 of FIG. 19), on the browser via the communication section 39 and the network 14.

The user User browses this Home page to select a service which the user desires to utilize, and when the user inputs the selected service by manipulating the keyboard (the input section 36), the CPU 31 obtains the selected service, for transmission to the service provider terminal 13 via the communication section 39 and the network 14.

Note that the service selected by the user User in this way will hereinafter be called as simply the selected service.

Further, the CPU 31 (including the CPUs of the other apparatuses) transmits data in a predetermined format via the communication section 39 (including the communication sections of the other apparatuses) and the network 14 will hereinafter be called as simply the CPU 31 sends data.

Further, the CPU 31 (including the CPUs of the other apparatuses) receives data in a predetermined format from the other apparatuses via the network 14 and the communication section 39 (including the communication sections of the other apparatuses) will hereinafter be called as simply the CPU 31 receives data.

Specifically, for instance, by utilizing a method by which the user User selects a button displayed on a Home page with an input device such as a mouse and by which the CPU 31 gives notice about it via the communication section 39 and the network 14, the CPU 31 can send the selected service.

The selected service sent by the CPU 31 is supplied to the service provider terminal 13 via the network 14.

As will be described later, when receiving the selected service, the service provider terminal 13 prepares a key allotment application and transmits this to the user terminal 21 (steps S41 and S42 of FIGS. 26 and 27).

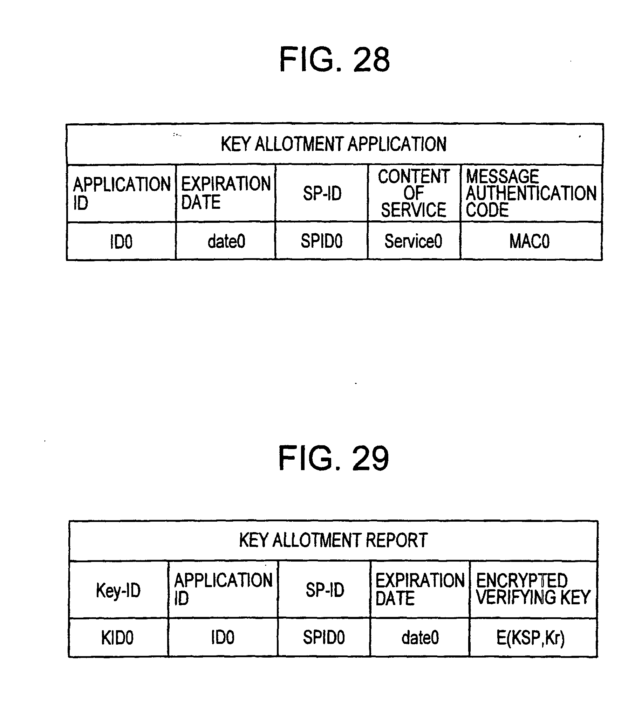

FIG. 28 represents an example of such a key allotment application.

An application ID represents an identification number of an application added so as to be unique to the service provider terminal 13 (service provider SP) that issues this key allotment application.

An expiration date represents an expiration date necessary for an authentication technique the allotment of which is applied for by this key allotment application.

An SP-ID represents an identification number of the service provider terminal 13 (service provider SP), and is agreed upon beforehand at the time the service provider terminal 13 (service provider SP) concludes a contract with the key allotter terminal 12 (key allotter KA).

Service content represents the content of a service (service selected by the user terminal 21 (user User)) provided to the user User (key holding apparatus 22) who is authenticated by this authentication technique. Note that in this example, for instance, the service content includes, for instance, a service fee, an address of a service providing site and the like, besides the service content itself.

A message authentication code (MAC : Message Authentication Code) is generated for the key allotment application data by utilizing a unique cryptographic key (unique cryptographic key included in the service provider unique information of FIG. 10) of the service provider terminal 13 (service provider SP) , and prevents tampering of the key allotment application and proves that the key allotment application is generated by the service provider.

The message authentication code allows tampering of data and identification of a message generator by using common key cryptography technology.

For instance, when there is data M, it is supposed that only a creator of the data M and an addressee of the data M share a cryptographic key K for the common key cryptography. At this time, the message authentication code for the data M is generated utilizing the cryptographic key K, as MAC(M) = E (K, h (M) ) (encrypted data of h (M) by the key K) . Note that h() is a unidirectional function (e.g., a Hash function or the like) shared in common by both sending side and the receiving side of the data.

The sending side sends the data M in the form of a set (M, MAC (M) ) , and the receiving side checks whether or not h (M) = D(K, h(M)) is satisfied, whereby it checks that the data M is not tampered and that a digital signature SG(M) is added by the owner of a secret key Sₖ. Such a series of processing will hereinafter be called as a check on a message authentication code.

Returning to FIG. 24, the CPU 51 of the key holding apparatus 22 of FIG. 16 receives the key allotment application via the user terminal 21 (the CPU 51 receives predetermined data via the user terminal 21 will hereinafter be called as simply the CPU 51 receives data) in step S12, and sends that key allotment application to the key allotter terminal 12 via the user terminal 21 (the CPU 51 sends predetermined data via the user terminal 21 will hereinafter be called as simply the CPU 51 sends data) in step S13.

At the same time, the CPU 51 stores the key allotment application also on, for instance, the data storage section 53.

At this time, as will be described later, the key allotter terminal 12 receives the key allotment application, and verifies the message authentication code included therein. Further, it checks that other applications having the same application number are not received from the same service provider in the past. After these checks, the key allotter terminal 12 and the key holding apparatus 22 perform mutual authentication via the network 14 and the user terminal 21, to execute a process of sharing a cryptographic key Kses (steps S21 and S22 of FIGS. 25 and 27) temporarily (once and for all). Note that such a process will hereinafter be called as a "mutual authentication + key sharing process with the key allotter" as the process by the key holding apparatus 22 side, and a "mutual authentication + key sharing process with the key holding apparatus" as the process by the key allotter terminal 12 side.

That is, the CPU 51 of the key holding apparatus 22 executes the "mutual authentication + key sharing process with the key allotter" in step S14.

Details of the "mutual authentication + key sharing process with the key allotter (step S14) (and the "mutual authentication + key sharing process with the key holding apparatus" (step S22 of FIG. 25) in the first embodiment are shown in FIG. 27. Referring thus to FIG. 27, the details of the "mutual authentication + key sharing process with the key allotter (step S14) in the first embodiment will be described.

Note that in this example, the key allotter terminal 12 is supposed to know the correspondence between an identification number (HWIDb) of the key holding apparatus 22 and a unique cryptographic key KHWb owned by the key holding apparatus 22, from the key holding apparatus key table of FIG. 7.

First, the CPU 51 (FIG. 16) of the key holding apparatus 22 generates a random number Rb, and sends a linkage between the random number Rb and the identification number HWIDb (data Rb||HWIDb (a linkage between data A and B will hereinafter be written as data A||B)), in step S14-1 of step S14 of FIG. 27.

As will be described later, when receiving it, the key allotter terminal 12 generates a random number Ra in step S22-1 of step S22, extracts a unique cryptographic key KHWb corresponding to the identification number HWIDb from the key holding apparatus table, and encrypts the linkage between the random number Rb and the identification number HWIDb utilizing the unique cryptographic key KHWb, for sending to the key holding apparatus 22 (to return encrypted data E (KHWb, Ra||Rb||HWIDb)). That is, mutual authentication based on the common key cryptography is performed by using the unique cryptographic key KHWb (step S22 of FIGS. 27 and 25).

When receiving it, the CPU 51 of the key holding apparatus 22 checks that the random number Rb and the identification number HWIDb sent a minute ago are correctly decrypted (it is checked that the data including the random number Rb is correctly encrypted by the unique cryptographic key KHWb) in step S14-2, whereby it checks that the other party is the key allotter terminal 12 (key allotter KA) who knows the unique cryptographic key KHWb corresponding to the identification number HWIDb.

And the CPU 51 of the key holding apparatus 22 generates a temporary shared cryptographic key (session key) Kses by utilizing the unique cryptographic key KHWb, links it with random numbers Rs, Rb, and encrypts and sends them (send data E(KHWb, Rb||Ra||Kses)) in step S14-3.

Note that in this example, for instance, encryption is performed by the computation processing section 56 of the key holding apparatus 22 (FIG. 16) (other encryption performed by the key holding apparatus 22 will hereinafter be similar thereto; provided that only an encryption process utilizing a registered cryptographic key is performed by the calculation processing section 72 of the IC card 23 when the user account information of FIG. 14 is included in the IC card 23 (FIG. 17)).

The key allotter terminal 12 receives this encrypted data E(KHWb, Rb||Ra||Kses), and decrypts it to extract the common cryptographic key Kses (step S22 of FIGS. 27 and 25) in step S22-3.

As a result, the common cryptographic key Kses can be shared between the key holding apparatus 22 and the key allotter terminal 12.

Note that as to the sending of the key allotment application from the user apparatus 11 to the key allotter terminal 12 performed in steps S13 and S21, the encryption may be performed by utilizing the common cryptographic key Kses after the common cryptographic key Kses is shared. That is, in this case, steps S13 and S14 in the user apparatus 11 shown in FIG. 24 would be performed in the reversed order, and steps S21 and S22 in the key allotter terminal 12 shown in FIG. 25 would be performed in the reversed order, but this would not affect their subsequent steps.

Returning to FIG. 24, after the "mutual authentication + key sharing process with the key allotter" in the above step S14, the CPU 51 of the key holding apparatus 22 executes a process corresponding to a "process in which the key allotter terminal 12 identifies (authenticates) the key holding apparatus 22 (user User) who holds the common cryptographic key Kses" in step S15.

Note that such a process will be called as a "user authentication response process". Further, "the process in which the key allotter terminal 12 identifies (authenticates) the key holding apparatus 22 (user User) who holds the shared cryptographic key Kses" by the key allotter terminal 12 will be called as a "key holding apparatus user authentication process".

That is, the CPU 51 of the key holding apparatus 22 executes the "user authentication response process" in step S15, hereinafter.

Details of the "user authentication response process (step S15)" in the first embodiment is shown in FIG. 27. Referring thus to FIG. 27, the details of the "user authentication response process" in the first embodiment will be described.

Note that an example in which the user is authenticated by the general-purpose account system, specifically, the Kerberos authentication is shown in FIG. 27, but examples are not limited thereto, as long as they can authenticate the user.

First, as will be described later, the key allotter terminal 12 sends an identification number (Acc-ID) IDKA under a general-purpose account thereof to the key holding apparatus 22 (step S23 of FIGS. 27 and 25) in step S23-1.

When receiving it, the CPU 51 of the key holding apparatus 22 sends an authentication service request KRB_AS_REQ from the user User to the general-purpose account manager terminal 15 in step S15-1.

Specifically, in this example, for instance, the service request KRB_AS_REQ is supposed to be data UID||E (KU, time), where UID represents the identification number of the user User (IC card 23), and E(KU, time) represents data in which a time time is encrypted by utilizing a user's registered cryptographic key KU.

The general-purpose account manager terminal 15 checks in step S51 that the service request KRB_AS_REQ is correct, i.e., that the time time included in the service request KRB_AS_REQ can be decrypted by the cryptographic key KU corresponding to the identification number UID and that a deviation from the current time is within a predetermined fixed range.

And the general-purpose account manager terminal 15 sends (returns) an authentication service reply KRB_AS__REP to the key holding apparatus 22 in step S52.

In this example, for instance, the authentication service reply KRB_AS_REP is supposed to be data E(KU, Kt)||E(KKDC, Kt|| UID ||expire), where E(KU, Kt) represents data in which a temporary cryptographic key Kt is encrypted, which is decided by the general-purpose account manager terminal 15 (general-purpose account manager KDC) by utilizing the cryptographic key KU. E (KKDC, Kt||UID||expire) represents data in which linked data Kt||UID|| in which a cryptographic key Kt, the user's identification number UID, an expiration date expire are linked is encrypted by utilizing a cryptographic key KKDC of the general-purpose account manager terminal 15 (general-purpose account manager KDC). Note that E(KKDC, Kt|| UID||expire) will hereinafter be written as a TGT.

When receiving the authentication service replay KRB_AS_REP, the CPU 51 of the key holding apparatus 22 decrypts the encrypted data E(KU, Kt) included in the authentication service reply KRB_AS_REP to extract the temporary key Kt, in step S15-2. Provided that, the CPU 51 cannot decrypt the TGT.

The CPU 51 of the key holding apparatus 22 sends a ticket approval service request KRB_TGS_REQ to the general-purpose account manager terminal 15 in step S15-3.

In this example, the ticket approval service request KRB_TGS_REQ is supposed to be, for instance, data IDKA||E(Kt, UID||time) ||TGT.

When receiving the service request KRB_TGS_REQ, the general-purpose account manager terminal 15 checks the expiration date for the TGT in step S53, and, if it is valid, extracts the cryptographic key Kt from the TGT, and compares the time time of what is decrypted from the encrypted data E(Kt, UID||time) with the current time to check that it is within the predetermined range. When succeeding in that check, the general-purpose account manager terminal 15 generates a temporary key Kt2 to be shared between the key holding apparatus 22 and the key allotter terminal 12.

And the general-purpose account manager terminal 15 sends (returns) a reply KRB_TGS_REP to the key holding apparatus 22 in step S54.

In this example, the reply KRB_TGS_REP is supposed to be, for instance, E(Kt, Kt2||IDKA)||E(KKA, Kt2||UID), where KKA represents the cryptographic key registered at the general-purpose account of the key allotter terminal 12 (key allotter (KA)).

When receiving the reply KRB_TGS_REP, the CPU 51 of the key holding apparatus 22 decrypts the encrypted data E(Kt,Kt2|| IDKA) to obtain Kt2, in step S15-4.

The CPU 51 of the key holding apparatus 22 sends data KRB_AP_REQ to the key allotter terminal 12 in step S15-5.

In this example, the data KRB_AP_REQ is supposed to be, for instance, K(Kses, Kt2)||E(Kt2, UID||time)||E(KKA, Kt2||UID).

When receiving the data KRB_AP_REQ, the key allotter terminal 12 decrypts the cryptographic key Kt2 of the user User (key holding apparatus 22) having the identifier UID from the encrypted data E (KKA, Kt2||UID) , and further compares the time time of what is decrypted from the encrypted data E (Kt2, UID||time) with the current time to check that it is within the predetermined range, in step S23-2. And the key allotter terminal 12 identifies the possessor of the key holding apparatus 22 with whom it shares the cryptographic key Kses as being the user User (user terminal 21) having the identification number UID, from the encrypted data E(Kses, Kt2).

And the key allotter terminal 12 generates data KRB_AP_REQ representing the fact that the user User is identified, for sending to the key holding apparatus 22 in step S23-3.

Thereafter, as will be described later, the key allotter terminal 12 generates, for the key holding apparatus 22, an identification number KID of an authentication technique to be allotted and a new key Kr for use in authentication, for sending to the key holding apparatus 22 (step S24 of FIGS. 25 and 27).

Returning to FIG. 24, at this time, the CPU 51 of the key holding apparatus 22 receives this new key Kr (and also the identification number KID) in step S16.

In this example, for instance, the identification number KID is supposed to be a number not used so far, and the new key Kr would be a random number generated by the key allotter terminal 12 at this time.

Specifically, for instance, the key allotter terminal 12 sends the identification number KID and the new key Kr as encrypted data E(Kses, KID||Kr) to the key holding apparatus 22 by utilizing the above-mentioned temporary key Kses shared with the key holding apparatus 22.

At this time, the CPU 51 of the key holding apparatus 22 receives the encrypted data E (Kses, KID|| Kr) in which the identification number KID and the new key Kr are encrypted, and decrypts the identification number KID and the new key Kr by utilizing the temporary key Kses. And it adds a new record to the certifying key table of FIG. 11 held by the key holding apparatus 22. The content of the new record is supposed to be the identification number KID and new key Kr which are decrypted.

Next, the key allotter terminal 12 prepares a key allotment report, for sending to the key holding apparatus 22 (step S25 of FIGS. 25 and 27).

FIG. 29 represents an example of such key allotment report. Note that the key allotment report of FIG. 29 is supposed to be of a format applicable when an allotted authentication technique is the common key authentication.

In this case, since the verifying key and the certifying key are identical, leakage of the keys to anyone other than the service provider SP must be prevented. To this end, the key allotter terminal 12 sends the key allotment report including also the verifying key encrypted by a unique key KSP of the service provider terminal 13, to the key holding apparatus 22.

In the key allotment report of FIG. 29, a Key-ID represents an identification number of the allotted authentication technique.

An application ID represents an identification number of a key allotment application with which allotment of the current authentication technique is requested.

An SP-ID represents an identification number of the service provider terminal 13 (service provider SP).

An expiration date represents an expiration date for the allotted authentication technique.

An encrypted verifying key represents a verifying key Kr of the allotted authentication technique, and represents a format of the encrypted data E(KSP, Kr) encrypted by the unique key KSP of the service provider terminal 13 (service provider SP) to whom the allotment is applied for.

Further, the key allotter terminal 12 adds a new record to the key allotment table of FIG. 5. The content of the new record would be the identification number Key-ID of the allotted authentication technique, the identification number Acc-ID under the general-purpose account of the user User (IC card 23) who owns the allotted key holding apparatus 22, the identification number HW-ID of the allotted key holding apparatus 22, the identification number SP-ID of the allotted service provider, the expiration date for the allotted authentication technique, the service content, and the verifying key (the certifying key). Thereafter, the key allotter terminal 12 destroys the key allotment application and the key allotment report (step S25 of FIGS. 25 and 27) .

Returning to FIG. 24, the CPU 51 of the key holding apparatus 22 receives the key allotment report (which the key allotter terminal 12 sends in step S25 of FIGS. 25 and 27) in step S17. And the CPU 51 of the key holding apparatus 22 extracts the Key-ID, the expiration date, and the service content from the key allotment report (FIG. 29) and the key allotment application (the key allotment application in which the SP-ID matches with the application ID) corresponding thereto (FIG. 28), and adds to the service information table of FIG. 12 held by the key holding apparatus 22 as a new record.

At this time, as will be described later, the key allotter terminal 12 bills the authenticated user User (IC card 23) so as to correspond with the service (step S26 of FIG. 25).

The CPU 51 of the key holding apparatus 22 sends the key allotment report received in step S17 to the service provider terminal 13 in step S18. Thereafter, the key holding apparatus 22 destroys the key allotment application and the key allotment report.

As will be described later, the service provider terminal 13 receives the key allotment report sent from the key holding apparatus 22 in this way (step S43 of FIGS. 26 and 27). And the service provider terminal 13 extracts the Key-ID, the expiration date, the service content, and the verifying key from the key allotment report and the key allotment application corresponding thereto, and adds the verifying key to the authentication information table of FIG. 9 as a new record. Thereafter, the service provider terminal 13 destroys the key allotment application and the key allotment report.

Referring next to FIG. 25, the "service selection/key allotment process" by the key allotter terminal apparatus 12 (FIG. 4) will be described.

When the user terminal 21 sends the selected service to the service provider terminal 13 in step S11 of FIGS. 24 and 27 as mentioned above, the service provider terminal 13 receives this selected service, prepares a key allotment application, and sends this to the key holding apparatus 22 (steps S41 and S42 of FIGS. 26 and 27), as will be described later.

And as mentioned above, the key holding apparatus 22 receives the key allotment application in step S12 of FIGS. 24 and 27, and sends that key allotment application to the key allotter terminal 12 in step S13.

Then, the CPU 81 of the key allotter terminal 12 of FIG. 18 receives the key allotment application sent from the key holding apparatus 22 in step S21. And the CPU 81 verifies a message authentication code (FIG. 28) included therein. Further, it checks that applications having the same application number are received from the same service provider in the past.

After these checks, the CPU 81 executes the "mutual authentication + key sharing process with the key holding apparatus" in step S22, and it executes the "key holding apparatus user authentication process" in step S23.

Note that a description of the "mutual authentication + key sharing process with the key holding apparatus" in step S22 will be omitted here since it is described in detail with reference to the above-mentioned "mutual authentication + key sharing process with the key allotter" in step S14 of FIG. 27.

Similarly, a description of the "key holding apparatus user authentication process" in step S23 will be omitted here since it is described in detail with reference to the above-mentioned "user authentication response process" in step S15 of FIG. 27.

And the CPU 81 generates the new key Kr (and the identification number KID) and sends them to the key holding apparatus 22 in step S24.

As mentioned above, the key holding apparatus 22 receives this new key Kr (and the identification number KID) in step S16 of FIGS. 24 and 27.

Next, the CPU 81 prepares the key allotment report and sends it to the key holding apparatus 22 in step S25, and bills the user terminal 21 (user User) in step S26.

At this time, as mentioned above, the key holding apparatus 22 receives this key allotment report for sending to the service provider terminal 13 in steps S17 and S18 of FIGS. 24 and 27. The service provider terminal 13 receives that key allotment report (step S43 of FIGS. 26 and 27) as will be described later.

Referring next to FIG. 26, the "service selection/key allotment process" by the service provider terminal 13 (FIG. 4) will be described.

As mentioned above, the user terminal 21 sends the selected service to the service provider terminal 13 in step S11 of FIGS. 24 and 27.

Specifically, in this example, the storage section 108 of the service provider terminal 13 of FIG. 19 stores a Home page (data) containing a list of services to be provided, and the like, as mentioned above.

Thus, when accessed by the user terminal 21, the CPU 101 presents this Home page onto the browser of the user terminal 21.

When the user User browses the Home page presented via the user terminal 21 and selects the selected service as mentioned above, the user terminal 21 sends that selected service.

Then, the CPU 101 receives that selected service in step S41, generates the key allotment application, and sends to the user terminal 21 in step S42.

Thereafter, as mentioned above, after executing steps S12 to S17 of FIGS. 24 and 27, the user terminal 21 sends the key allotment report to the service provider terminal 13 in step S18.

Then, the CPU 101 receives the key allotment report in step S43. And the CPU 101 extracts the Key-ID, the expiration date, the service content, and the verifying key from the key allotment report and the key allotment application corresponding thereto, and adds the verifying key to the authentication information table of FIG. 9 as a new record. Thereafter, the CPU 81 destroys the key allotment application and the key allotment report.

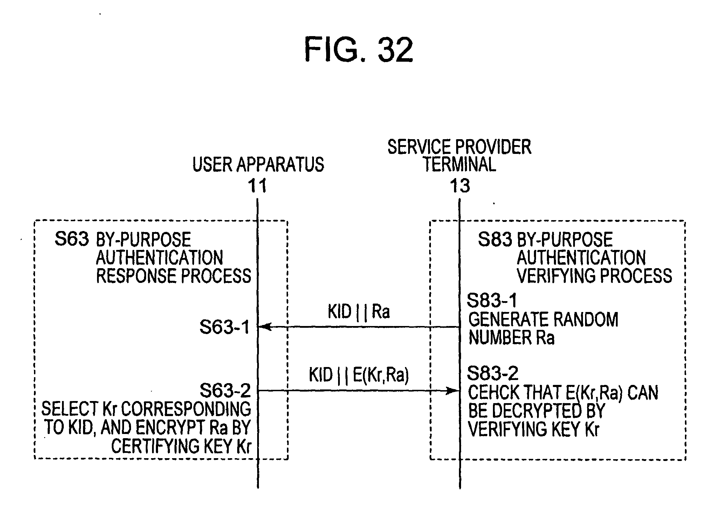

Referring next to the flowcharts of FIGS. 30 and 31 and arrow charts of FIGS. 32 to 35, the "key use/service provision process (process in step S2 of FIG. 23)" of the operation of the authentication key allotment system 1 to which the first embodiment of the present invention is applied will be described. FIG. 30 represents a "key use/service provision process" by the user apparatus 11 (FIG. 4). FIG. 31 represents a "key use/service provision process" by the service provider terminal 13 (FIG. 4).

Referring first to FIG. 30, the "key use/service provision process" by the user apparatus 11 (FIG. 4) will be described.

The CPU 51 (FIG. 16) of the key holding apparatus 22 selects a service in step S61.

Specifically, for instance, in this example, the CPU 51 provides the user terminal 21 with service content from the service information table of FIG. 12 held by the key holding apparatus 22 itself, and the user terminal 21 displays that on its display (the output section 37 of FIG. 15). The user User manipulates the keyboard (the input section 36 of FIG. 15), and selects a record corresponding to the service which the user wishes to utilize from the service content displayed on the display. The user terminal 21 senses the service selected by the user User, and supplies it to the key holding apparatus 22.

And the CPU 51 obtains it via the communication processing section 57, whereby it selects the service.

The CPU 51 of the key holding apparatus 22 generates a service request, and sends to the service provider terminal 13 in step S62.

FIG. 36 represents an example of the service request.

Note that in this example, the sending address is supposed to be included as part of the service content. In FIG. 36, a Key-ID represents a Key-ID of a record of the service information table (FIG. 12) corresponding to the service (selected in step S61) selected by the user User.

As will be described later, the service provider terminal 13 receives the service request, extracts a verifying key corresponding to the Key-ID included in the service request from the authentication information table of FIG. 9, and further examines that its expiration date does not pass (steps S81, S82 of FIG. 31) . Note that such a series of processing will hereinafter be called as a verifying key selection + expiration date examination.

When determining that there is no record corresponding to the Key-ID in the authentication information table of FIG. 9 or that the expiration date passes, the service provider terminal 13 determines that the verifying key selection + expiration date examination is unacceptable, and thus ends the process without service provision.

On the other hand, when determining that the verifying key selection + expiration date examination is acceptable, the service provider terminal 13 goes to step S83 of FIG. 31, and executes a "by-purpose authentication verification process".

At this time, the CPU 51 executes a "by-purpose authentication response process" corresponding to the "by-purpose authentication verification process" of step S83 in step S63.

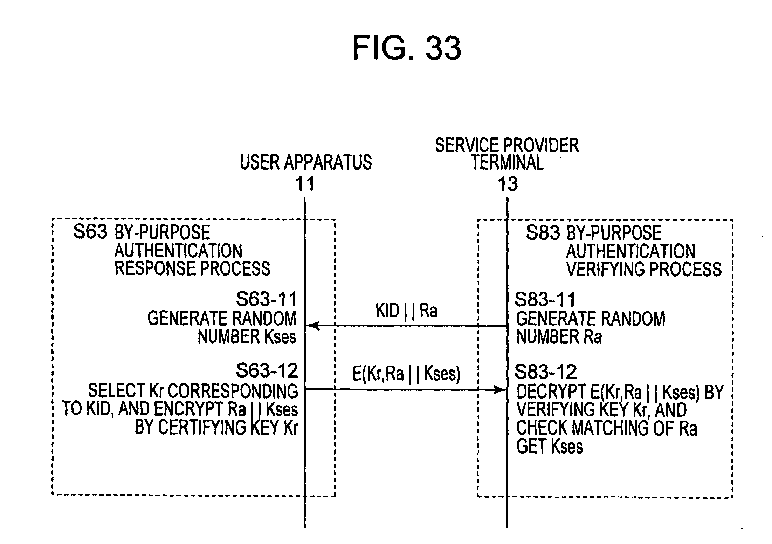

Exemplary details of steps S63 and S83 are shown in FIGS. 32 and 33.

Referring thus to FIGS. 32 and 33, the details of steps S63 and S83 will be described.

FIG. 32 represents an example of a case where a cryptographic key is not shared.

In FIG. 32, the service provider terminal 13 generates a random number Ra, and sends linked data KID||Ra in which a Key-ID (hereinafter written as a KID) is linked with the random number Ra, to the key holding apparatus 22 in step S83-1.

At this time, when receiving this, the CPU 51 of the key holding apparatus 22 selects a certifying key (certifying key obtained from the certifying key table of FIG. 11) Kr corresponding to the KID, in step S63-1. And the CPU 51 encrypts the random number Ra with the certifying key Kr, and sends (returns) linked data KID||E(Kr, Ra) in which the encrypted data E(Kr, Ra) resulting from the computation is linked with the KID, in step S63-2.

When receiving this, the service provider terminal 13 checks that the encrypted data E (Kr, Ra) can be decrypted by the verifying key Kr (can obtain the random number Ra) in step S83-2, whereby it checks that the key holding apparatus 22 has the verifying key Kr of the allotted authentication technique.

By contrast, FIG. 33 represents an example of a case where a cryptographic key is shared.

In FIG. 33, the service provider terminal 13 generates a random number Ra, and sends linked data KID||Ra in which KID is linked with the random number Ra to the key holding apparatus 22 in step S83-11.

At this time, when receiving this, the CPU 51 of the key holding apparatus 22 generates a common key Kses in step S63-11. And the CPU 51 selects a certifying key (certifying key obtained from the certifying key table of FIG. 11) Kr corresponding to a KID, encrypts linked data Ra||Kses in which the received random number Ra is linked with the newly generated common key Kses, and sends encrypted data E(Kr, Ra|| Kses) resulting from the computation, to the service provider terminal 13, in step S63-12.

When receiving this, the service provider terminal 13 decrypts the encrypted data E (Kr, Ra||Kses) by the verifying key Kr to check its matching with the random number Ra, in step S83-12, whereby it checks that the key holding apparatus 22 has the verifying key Kr of the allotted authentication technique, and also obtains the common key Kses (makes the common key Kses as a temporary shared cryptographic key).

Returning to FIG. 30, as will be described later, when it is determined by the service provider terminal 13 that the authentication is successful (step S84 of FIG. 31), the CPU 51 executes a process of utilizing the service provided by the service provider terminal 13 in step S64. Note that such a process will hereinafter be called as a "service utilization process". Further, this "service utilization process" is repeated for a plurality of times as necessary.

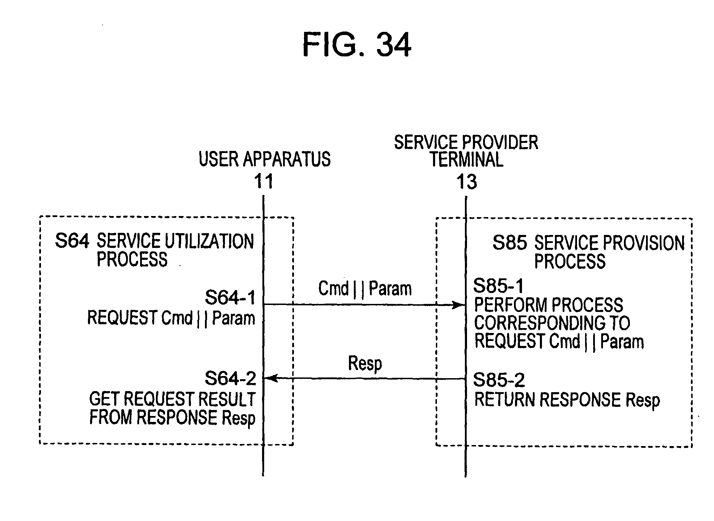

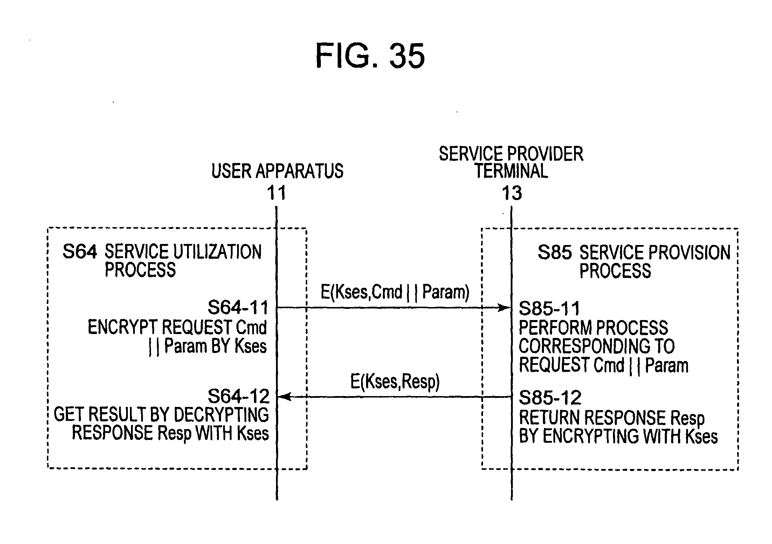

Details of the "service utilization process" in this example are shown in FIGS. 34 and 35. Referring thus to FIGS. 34 and 35, the details of the "service utilization process" in this example will be described.

FIG. 34 represents a "service utilization process" performed when a shared key is not used, i.e., when the "by-purpose authentication response process" of FIG. 32 (step S63) is executed.

In FIG. 34, the CPU 51 of the key holding apparatus 22 sends a request Cmd||Parm to the service provider terminal 13 in step S64-1. Note that the request Cmd || Parm represents the linked data in which a command Cmd corresponding to the service request is linked with an argument thereof Parm.

Provided that, there may be some cases where there is no need to specify the command Cmd, depending on the purpose, and in that case, the command Cmd will be omitted.

When receiving the request Cmd||Parm, the service provider terminal 13 performs a process corresponding thereto in step S85-1, and it returns (sends) a response Resp to the key holding apparatus 22 in step S85-2.

The CPU 51 receives the response Resp and obtains a result of the request Cmd|| Parm from the response Resp in step S64-2.

By contrast, FIG. 35 represents a "service utilization process" performed when a shared key is used, i.e., when the by-purpose authentication response process" of FIG. 33 (step S63) is executed.

In FIG. 35, the CPU 51 of the key holding apparatus 22 generates a request Cmd ||Parm, encrypts it by a common key Kses, and sends encrypted data E (Kses, Cmd||Parm) to the service provider terminal 13 in step S64-11.

When receiving the encrypted data E(Kses, Cmd||Parm), the service provider terminal 13 decrypts it with the common key Kses to obtain the request Cmd||Parm to perform a process corresponding thereto, and generates a response Resp in step S85-11. And the service provider terminal 13 encrypts the response Resp by the common key Kses, and returns (sends) encrypted data E (Kses, Resp) to the key holding apparatus 22 (step S85 of FIG. 31) in step S85-12.

The CPU 51 receives the encrypted data E(Kses, Resp), and decrypts it by the common key Kses, and obtains a result thereof in step S64-12.

Note that as will be described later, the process by the service provider terminal (step S85) corresponding to the "service utilization process (step S64) by the key holding apparatus 22 of FIGS. 34 and 35 will hereinafter be called as a "service provision process".

Referring next to FIG. 31, the "key use/service provision process" by the service provider terminal 13 (FIG. 4) will be described.

As mentioned above, the key holding apparatus 22 selects a service, generates a service request corresponding thereto, and sends to the service provider terminal 13 in steps S61 and S62 of FIG. 30.

At this time, the CPU 101 (FIG. 19) of the service provider terminal 13 receives the service request, and executes the above-mentioned "verifying key selection + expiration date examination" process in step S81.

The CPU 101 determines in step S82 whether or not the "authentication key selection + expiration date examination" is acceptable, and if it determines that the "authentication key selection + expiration date examination" is unacceptable (determined as not acceptable), then it ends the process.

On the other hand, if the CPU 101 determines in step S82 that the "authentication key selection + expiration date examination" is acceptable, then it executes the "by-purpose authentication verification process" in step S83.

Note that a description of the "by-purpose authentication verification process" in step S83 will be omitted here since it is described in detail with reference to the above-mentioned "by-purpose authentication response process" in step S63 of FIG. 30.

The CPU 101 determines whether or not the authentication is successful as a result of step S83 in step S84, and if it determines that the authentication is unsuccessful (not successful), then it ends the process.

On the other hand, if the CPU 101 determines in step S84 that the authentication is successful, then it executes the "service provision process" in step S85, after which it ends the process.

Note that a description of the "service provision process" in step S85 will be omitted here since it is described in detail with reference to the above-mentioned "service utilization process" in step S64 of FIG. 30.

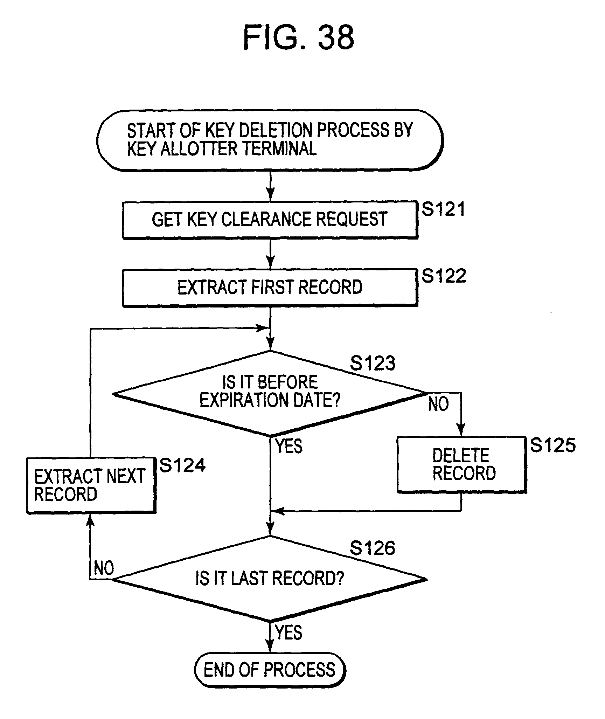

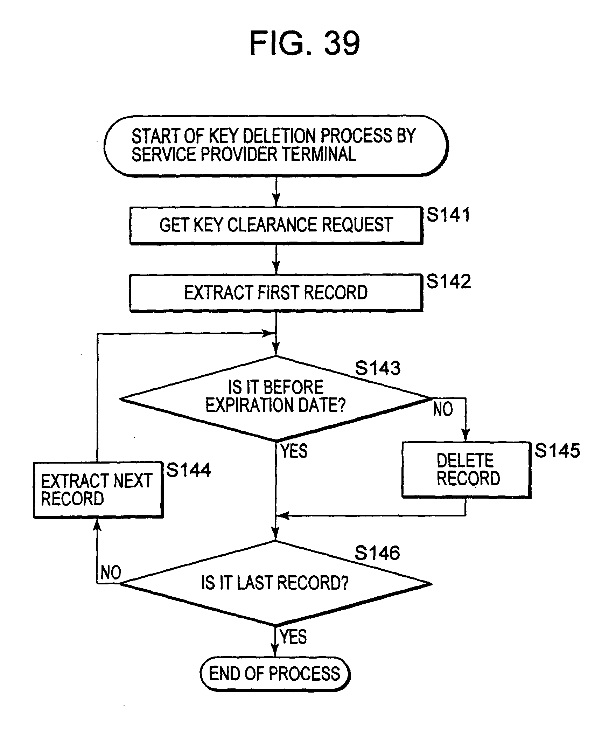

Referring next to the flowcharts of FIGS. 37 to 39, the "key deletion process (process in step S6 of FIG. 23) of the operation of the authentication key allotment system 1 to which the first embodiment of the present invention is applied will be described. FIG. 37 represents a "key deletion process" by the user apparatus 11 (FIG. 4), FIG. 38 represents a "key deletion process" by the key allotter terminal 12 (FIG. 4), and FIG. 39 represents a "key deletion process" by the service provider terminal 13 (FIG. 4).

Provided that, as shown in each of FIGS. 37 to 39, the respective "key deletion processes" by the user apparatus 11, the key allotter terminal 12, and the service provider terminal 13 are similar to one another, and thus only the "key deletion process" by the key allotter terminal 12 will herein be described with reference to FIG. 38.

The CPU 81 (FIG. 18) of the key allotter terminal 12 obtains a key clearance request in step S121.

In this example, for instance, supposing a trigger for key deletion is externally given via the input section 86 or the like, then the CPU 81 obtains this trigger as a key clearance request. Note that this trigger may be given periodically or at an arbitrary time.

The CPU 81 extracts a first record from the key allotment table of FIG. 5 stored on the storage section 88 in step S122, compares the expiration date in that record with the current time, and determines whether or not the expiration date for a key specified in that record passes in step S123.

When determining in step S123 that the key is not the one within the expiration date, the CPU 81 deletes that record in step S125, and determines whether or not that record (the deleted record) is the last record in step S126.

On the other hand, when determining in step S123 that the key is the one within the expiration date, the CPU 81 determines in step S126 whether or not that record (the deleted record) is the last record without deleting the record (without executing step S125).

When determining in step S126 that it is not the last record, the CPU 81 extracts a next record in step S124, and returns to step S123 to repeat the step forward.

That is, the CPU 81 determines sequentially whether or not the respective first to last records is within the expiration dates, and deletes any record which passes the expiration date. And when ending the process up to the last record (a loop of steps S123 to 125), the CPU 81 determines in step S126 that it is the last record, and thus ends the process.

Note that the table for deletion in the key deletion process by the service provider terminal 13 is supposed to be the authentication information table of FIG. 9, and the table for deletion in the key deletion process by the key holding apparatus 22 is supposed to be the service information table of FIG. 12. And when these records are deleted, records in the certifying key table having the same Key-ID are also deleted.

Referring next to the flowcharts of FIGS. 40 and 41, the "key use termination process (step S7 of FIG. 23) of the operation of the authentication key allotment system 1 to which the first embodiment of the present invention is applied will be described. FIG. 40 represents a "key use termination process" by the key allotter terminal 12 (FIG. 4). FIG. 41 represents a "key use termination process" by the service provider terminal 13 (FIG. 4).

Referring first to FIG. 40, the "key use termination process" by the key allotter terminal 12 will be described.

When an allotted authentication technique needs to be revoked, the CPU 81 (FIG. 18) of the key allotter terminal 12 generates a key use termination request related to the authentication technique in question based on a manipulator's command from the input section 86, and sends to the service provider terminal 13 in step S161.

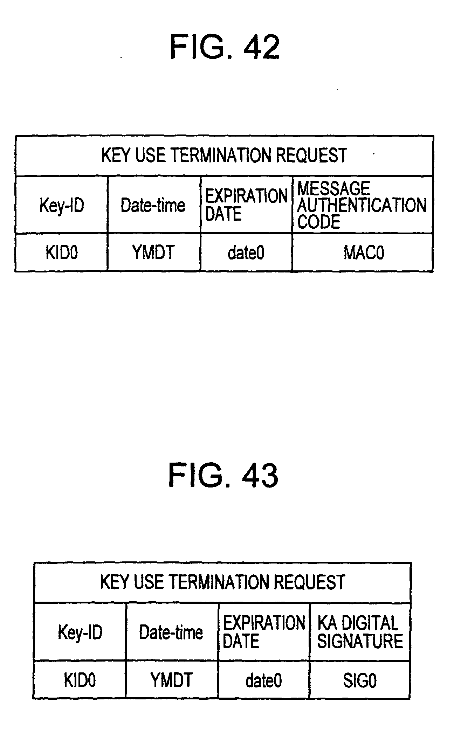

FIG. 42 represents an example of such a key use termination request.

As shown in FIG. 42, the key use termination request is configured of, for instance, an identification number Key-ID of an authentication technique the use of which is to be terminated, a time and date Data-time at which to terminate the use, an original expiration date for the authentication technique the use of which is to be terminated, and a message authentication code therefor.

The message authentication code is generated by utilizing a unique cryptographic key (unique cryptographic key obtained from the service provider key table of FIG. 6) KSP of the service provider terminal 13 (service provider SP) allotted with the authentication technique. Note that in this example, the key allotter terminal 12 is supposed to be able to obtain, as for the allotted authentication technique, an identification number SP-ID of the service provider terminal 13 (service provider SP) allotted with that authentication technique, from the key allotment table of FIG. 5.

And the CPU 81 deletes the key and its auxiliary information in step S162.

Specifically, the CPU 81 deletes a record corresponding to the authentication technique the use of which is to be terminated from the key allotment table of FIG. 5.

Referring next to FIG. 41, the "key use termination process" by the service provider terminal 13 will be described.

As mentioned above, the key allotter terminal 12 sends, for instance, the key use termination request of FIG. 42 in step S161.

At this time, the CPU 101 (FIG. 19) of the service provider terminal 13 receives that key use termination request in step S181. And the CPU 101 checks the message authentication code in the key use termination request by a unique cryptographic key thereof (unique cryptographic key obtained from the service provider unique information of FIG. 10) KSPO which it has. Note that such a process will hereinafter be called as a request examination.

The CPU 101 determines whether or not the request examination is acceptable, in Step S182, and if it determines that the request examination is acceptable, then it deletes the key and its auxiliary information in step S183, and ends the process.

Specifically, the CPU 101 deletes a record corresponding to the authentication technique having the specified identification number Key-ID from the authentication information table of FIG. 9.

On the other hand, if it determines in step S182 that the request examination is unacceptable (not acceptable) , the CPU 101 ends that process without executing step S183 (without deleting the key and its auxiliary information).

FIG. 43 represents another example of the key use termination request. This key use termination request is used in the second embodiment. Therefore, the key use termination request of FIG. 43 will be described in the second embodiment.

### (Second Embodiment)

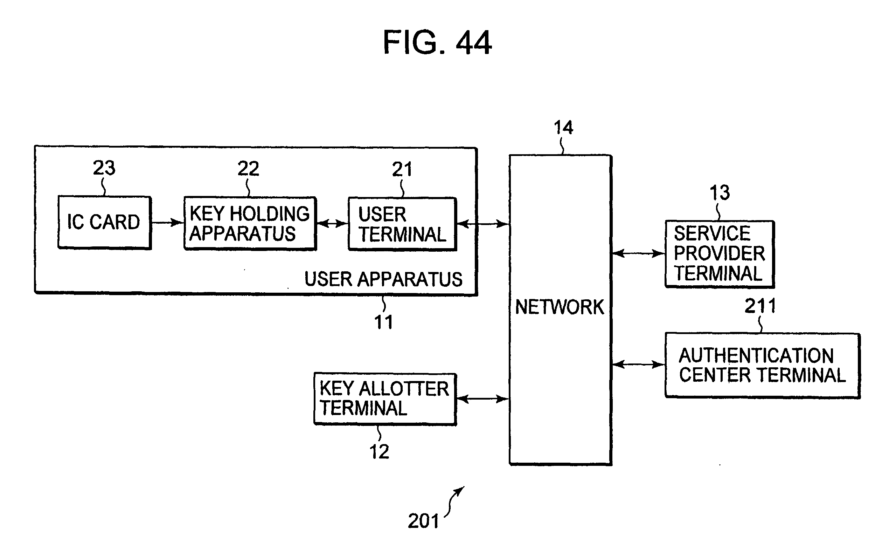

FIG. 44 represents an exemplary configuration of an authentication key allotment system 201 to which the second embodiment of the present invention is applied, and parts corresponding to those of the authentication key allotment system 1 are given the corresponding reference characters.

In this exemplary configuration, an authentication center terminal 211 is further connected to the network 14, in place of the general-purpose account manager terminal 15 of FIG. 4.

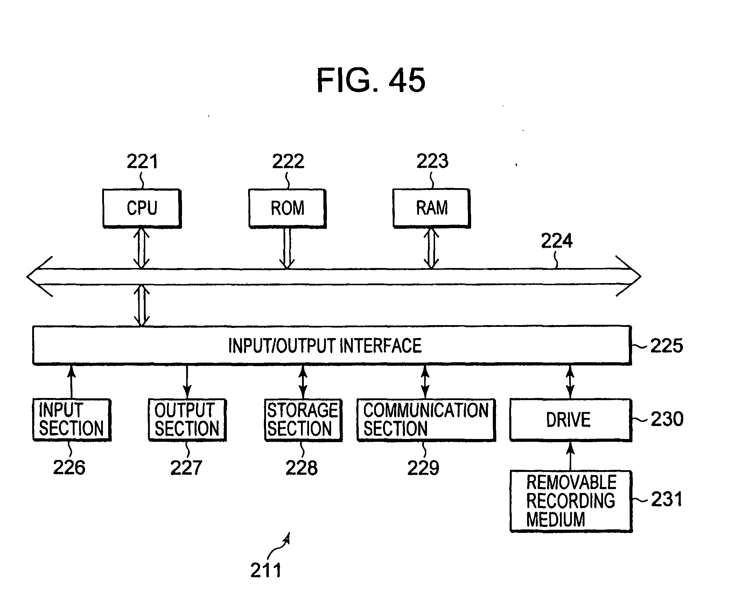

FIG. 45 represents an exemplary configuration of the authentication center terminal 211.

In FIG. 45, each of a CPU 221 to a removable recording medium 231 has a configuration similar to that of a respective one of the CPU 31 to the removable recording medium 41 of the user terminal 21 of FIG. 15, and thus these descriptions will be omitted.

That is, in the second embodiment, as shown in FIG. 2, participants are supposed to be a key allotter KA, an authentication center CA, a user User, and a service provider SP, and in the following example, digital signatures generated by the user User, the key allotter KA, the service provider SP are verified by the public key authentication infrastructure.

Provided that, it is supposed that both the key allotter terminal 12 (key allotter KA) and the service provider terminal 13 (service provider SP) know the invalidation status of their certificates beforehand (periodically collect related CRL), and thus it is supposed that verification of the invalidation status is required only of the IC card (user User).

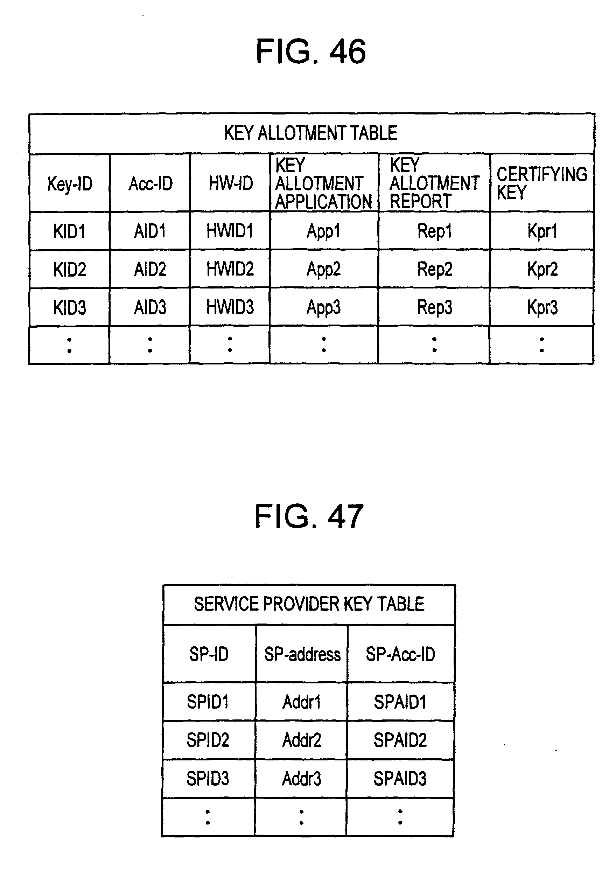

FIGS. 46 to 50 represent examples of data held by the key allotter terminal 12.

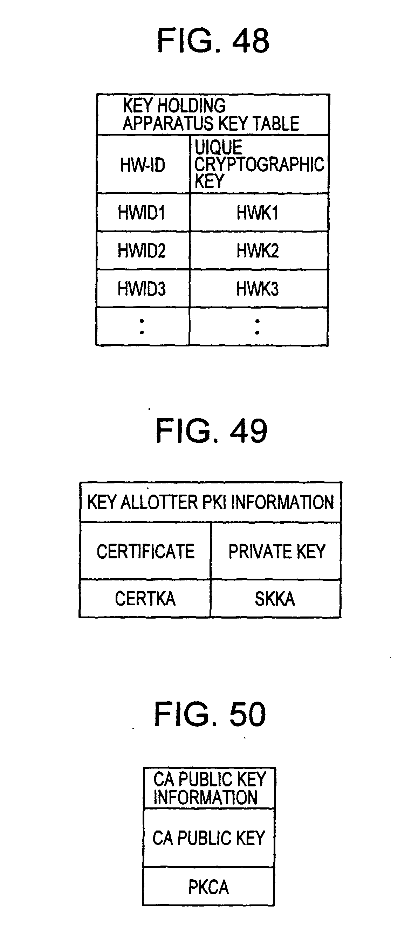

That is, in this example, for instance, in the memory (the storage section 88 or the like of FIG. 18) of the key allotter terminal 12, a key allotment table such as shown in FIG. 46, a service provider key table such as shown in FIG. 47, a key holding apparatus key table such as shown in FIG. 48, key allotter PKI information such as shown in FIG. 49, and CA public key information such as shown in FIG. 50 are stored.

In this example, for instance, each of the key allotment table of FIG. 46, the service provider key table of FIG. 47, the key holding apparatus key table of FIG. 48 is implemented as a database retrievable by the corresponding Key-ID, SP-ID, or HW-ID.

In the key allotment table of FIG. 46, each record corresponds to an authentication technique on which allotment is performed.

The Key-ID represents an identification number of the allotted authentication technique, and is assigned to be unique.

An Acc-ID represents an identification number under the public key authentication infrastructure of the user terminal 21 (user User) who pays when the authentication technique is allotted.

An HW-ID represents an identification number of a key holding apparatus 22 to which the authentication technique is allotted.

A certifying key represents a certifying key (private key for the public key cryptography) of the authentication technique.

Each of a key allotment application and a key allotment report represents a key allotment application issued from the service provider terminal 13 (service provider SP) to whom allotment of an authentication technique corresponding to this record is applied for, and a key allotment report issued by the key allotter terminal 12 (key allotter KA) so as to correspond thereto.

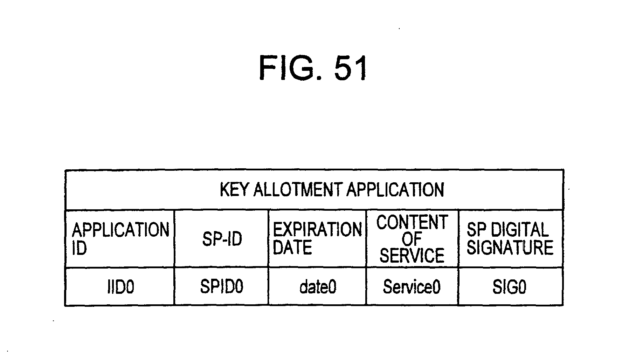

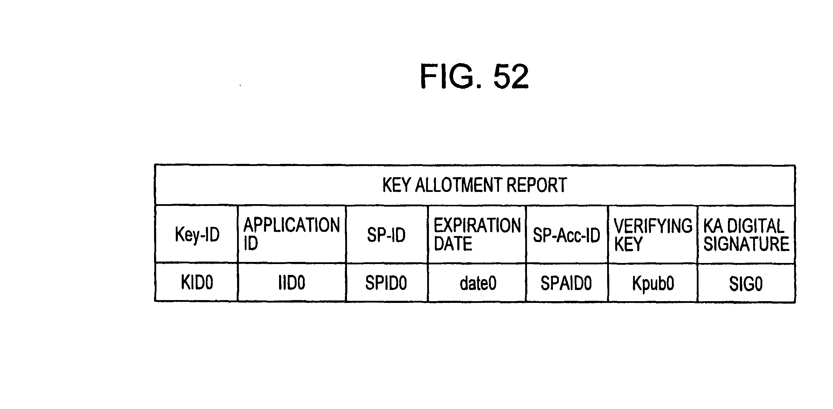

An example of the key allotment application is shown in FIG. 51, and an example of the key allotment report is shown in FIG. 52.

In the key allotment application of FIG. 51, an application ID represents an identification number of the key allotment application added so as to be unique by the service provider terminal 13 (service provider SP) who issues this key allotment application.

An expiration date represents an expiration date necessary for an authentication technique the allotment of which is applied for with this key allotment application.

An SP-ID represents an identification number of the service provider terminal 13 (service provider SP), and is agreed upon by the service provider terminal 13 (service provider SP) when the service provider concludes a contract with the key allotter terminal 12 (key allotter KA).

Service content represents the content of a service (service selected by the user User) to be provided to the user User (user terminal 21) who is authenticated by this authentication technique.

An SP digital signature represents a digital signature generated for the entire key allotment application by the service provider terminal 13, in order to prevent tampering of the key allotment application and prove that the key allotment application is generated by the service provider terminal 13 (service provider SP).

In the key allotment report of FIG. 52, a Key-ID represents an identification number of the authentication technique.

Each of an application ID and an SP-ID represents a respective one of an identification number of the key allotment application with which allotment of the authentication technique is requested, and an identification number of the service provider terminal 13 (service provider SP) .

An SP-Acc-ID represents an identification number of the service provider terminal 13 (service provider SP) under the public key authentication infrastructure.

An expiration date represents an expiration date for the allotted authentication technique.

A verifying key represents a verifying key (public key for the public key cryptography) of the allotted authentication technique.

A KA digital signature represents a digital signature added to the entire key allotment report by the key allotter terminal 12, in order to prevent tampering of the key allotment report and prove that the key allotment report is generated by the key allotter terminal 12 (key allotter KA) .

In the service provider key table of FIG. 47, each record represents a service provider terminal 13 (service provider SP) that concludes a contract with the key allotter terminal 12 (key allotter KA).

The SP-ID represents an identification number of the service provider terminal 13 (service provider SP) that concludes the contract, and is assigned to be unique.

An SP-address represents an address for making contact (a URL and the like) of the service provider terminal 13. This is supposed to be where to make contact when invalidation of the authentication technique occurs and when an inquiry is to be made.

An SP-Acc-ID represents an identification number of the service provider terminal 13 (service provider SP) under the public key authentication infrastructure.

Since the key holding apparatus key table of FIG. 48 is supposed to have the same configuration as the key holding apparatus table of FIG. 7, a description thereof will be omitted.

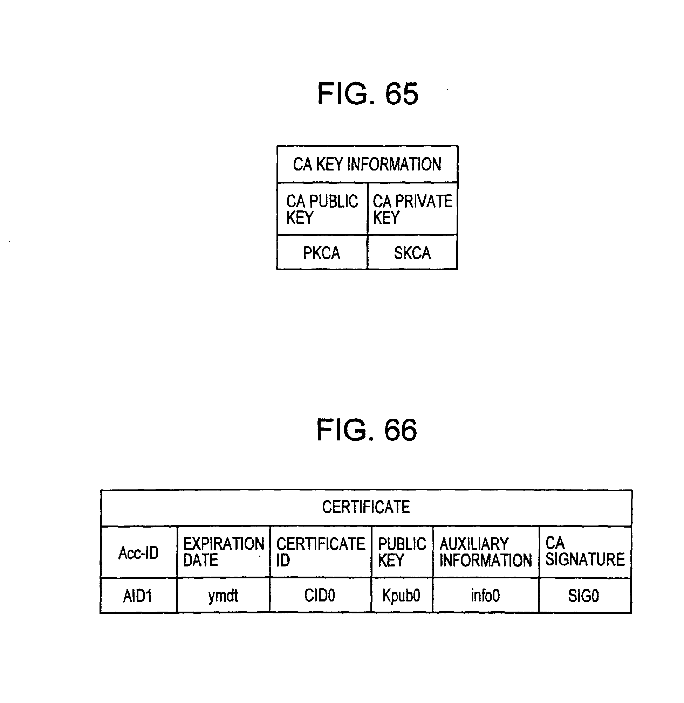

The key allotter PKI information of FIG. 49 represents information for use by the key allotter terminal 12 to generate digital signatures verifiable under the public key authentication infrastructure, and is configured of a certificate and a private key. The certificate will be described later with reference to FIG. 66 together with one corresponding to the authentication center terminal 211 (authentication center CA).

The CA public key information of FIG. 50 represents a public key of the authentication center CA (authentication center terminal 211) of the public key authentication infrastructure, and is used when verification of a certificate issued by the authentication center terminal 211 (authentication center CA) is performed.

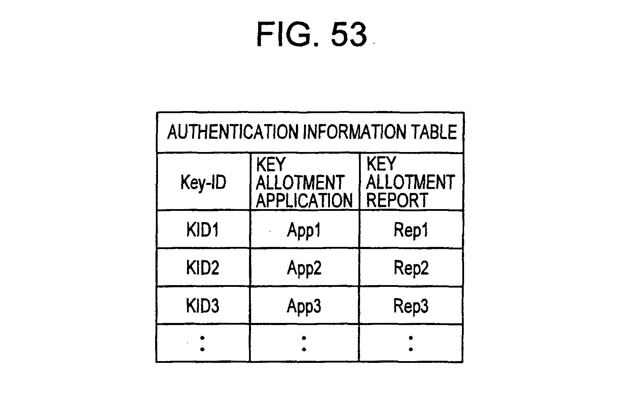

FIGS. 53 to 58 represent examples of data held by the service provider terminal 13.

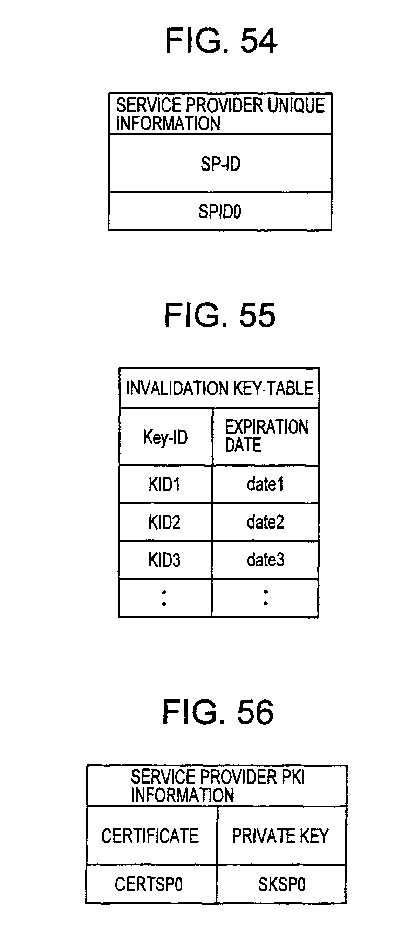

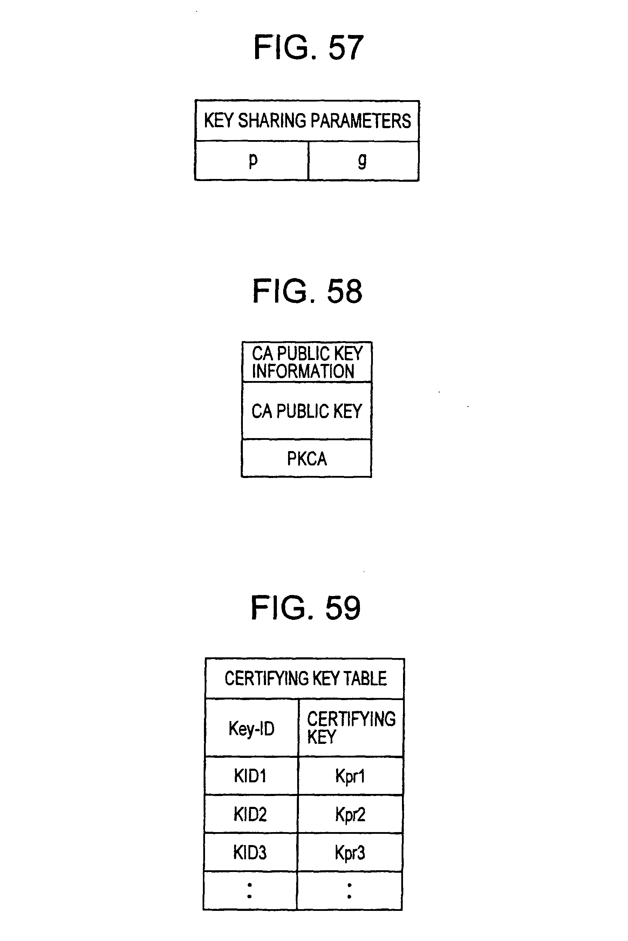

That is, in this example, for instance, in the memory (the storage section 108 or the like of FIG. 19) of the service provider terminal 13, an authentication information table such as shown in FIG. 53, service provider unique information such as shown in FIG. 54, a invalidation key table such as shown in FIG. 55, service provider PKI information such as shown in FIG. 56, key sharing parameters such as shown in FIG. 57, and CA public key information such as shown in FIG. 58 are stored.

In this example, for instance, each of the authentication information table of FIG. 53 and the invalidation key table of FIG. 55 is implemented as a database retrievable by a Key-ID.

In the authentication information table of FIG. 53, each record corresponds to an authentication technique allotted.

The Key-ID represents an identification number of the authentication technique.

A key allotment application represents the key allotment application of FIG. 51 generated when allotment of the authentication technique is applied for.

A key allotment report represents the key allotment report of FIG. 52 issued from the key allotter terminal 12 (key allotter KA) when the applied key allotment is performed.

In the service provider unique information of FIG. 54, an SP-ID represents an identification number assigned at the time the service provider (service provider SP) concludes a key allotment contract with the key allotter terminal 12 (key allotter KA).

The invalidation key table of FIG. 55 is supposed to be a table in which a Key-ID of the authentication technique as to which key use termination is requested by the key allotter terminal 12 (key allotter KA) and an original expiration date for that authentication technique are registered.

The service provider PKI information of FIG. 56 represents information allowing the service provider terminal 13 (service provider SP) to generate digital signatures verifiable by the public key authentication infrastructure, and is configured of a certificate and a private key.

In the key sharing parameters of FIG. 57, each of p, g represents a parameter for Diffie-Hellman type key sharing. More specifically, the parameter p is supposed to be a large prime number. At this time, elements excluding 0 in the residue class where the parameter p is the modulus form a multiplicative group, and one of its primitive elements (an element the order of which is p-1) is supposed to be the parameter g.

The CA public key information of FIG. 58 represents a public key of the authentication center CA (authentication center terminal 211) of the public key authentication infrastructure, and is used when verification of a certificate issued by the authentication center terminal 211 is performed.

FIGS. 59 to 63 represent examples of data held by the key holding apparatus 22 or the IC card 23 (user User).

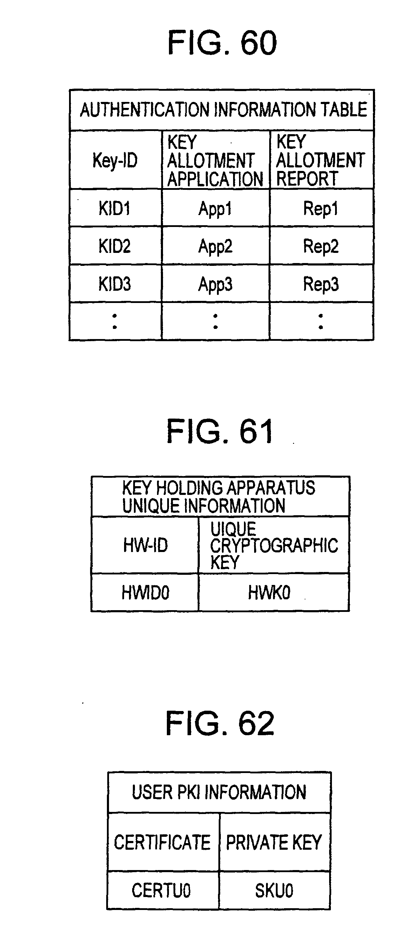

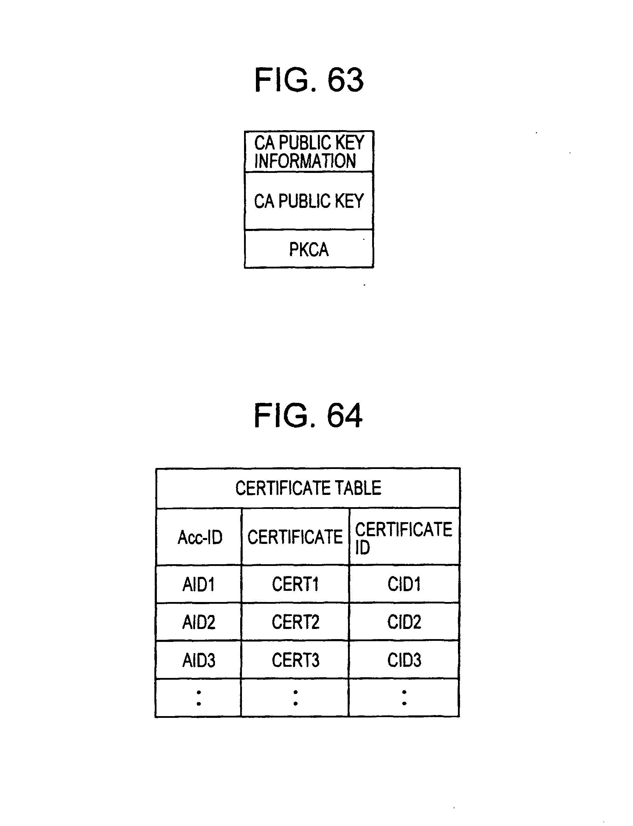

That is, in this example, for instance, in the data storage section 53 or the key storage section 54 (FIG. 16) of the key holding apparatus 22, or in the storage section 71 of the IC card 23, a certifying key table such as shown in FIG. 59, an authentication information table such as shown in FIG. 60, key holding apparatus unique information such as shown in FIG. 61, user PKI information such as shown in FIG. 62, and CA public key information such as shown in FIG. 63 are stored.

In this example, for instance, both the certifying key table of FIG. 59 and the authentication information table of FIG. 60 are implemented as databases retrievable by a Key-ID.

A record in each of the certifying key table of FIG. 59 and the authentication information table of FIG. 60 corresponds to an authentication technique with which the key holding apparatus (user User) is allotted by the key allotter terminal 12 (key allotter terminal KA).

The Key-ID of each of FIGS. 59 and 60 represents an identification number of the authentication technique.

A certifying key of the certifying key table of FIG. 59 represents a certifying key of the authentication technique, and is supposed to be a private key for the public key cryptography.

In the authentication information table of FIG. 60, a key allotment application represents the key allotment application of FIG. 51 which the key holding apparatus 22 (user User) receives from the service provider terminal 13 (service provider SP) when applying for allotment of the authentication technique, and submits to the key allotter terminal 12 (key allotter KA).

A key allotment report represents the key allotment report of FIG. 52 issued from the key allotter terminal 12 (key allotter KA) when key allotment for which the key holding apparatus 22 (user User) applies is performed.

Since the key holding apparatus unique information of FIG. 61 is supposed to have the same configuration as the key holding apparatus unique information of FIG. 13, a description thereof will be omitted.

The user PKI information of FIG. 62 represents information necessary for the user User to be authenticated by the public key authentication infrastructure using the IC card 23, and is configured of a certificate and a private key.

The CA public key information of FIG. 63 represents a public key of the authentication center CA (authentication center terminal 211) of the public key authentication infrastructure, and is used when verification of a certificate issued by the authentication center terminal 211 (authentication center CA) is performed.

Specifically, the key storage section 54 of FIG. 16 holds the certifying key table of FIG. 59 and the key holding apparatus unique information of FIG. 61. The data storage section 53 holds the authentication information table of FIG. 60 and the CA public key information of FIG. 63. The data management section 55 adds or deletes the content of the data held on the key storage section 54 and the data storage section 53 according to information sent from the key allotter terminal 12 (key allotter KA) and the expiration dates for key allotment reports in the authentication information table of FIG. 60.

The user PKI information of FIG. 62 is held on the IC card 23 (storage section 71 (FIG. 17) ) to be connected to the key holding apparatus 22. In this example, the key holding apparatus 22 can apply to the IC card 23 for encryption utilizing the user PKI information of FIG. 62 and calculation for decryption, and provision of certificates, if the IC card 23 is connected to its authentication processing section 58 (FIG. 16).

FIGS. 64 and 65 represent examples of data held by the authentication center terminal 211.

That is, in this example, for instance, in a memory of the authentication center terminal 211 (a storage section 228 or the like of FIG. 45), at least CA key information such as shown in FIG. 65 for issuing new certificates, and a certificate table such as shown in FIG. 64 for managing issued certificates are stored.

The CA key information of FIG. 65 is configured of a CA private key and a CA public key.

The CA public key represents a public key made open and held by a participant of the authentication key allotment system 201, such as the service provider terminal 13 (service provider SP), the key allotter terminal 12 (key allotter KA) , or the key holding apparatus 11 (user User).

In this example, for instance, the certificate table of FIG. 64 is implemented as a database retrievable by an Acc-ID and a certificate ID.

In the certificate table of FIG. 64, each record corresponds to a valid certificate already issued by the authentication center terminal 211 (authentication center CA).

The Acc-ID represents an identification number of an entity in the public key authentication infrastructure (in this example, each of the key holding apparatus 22 (user User) , the service provider terminal 13 (service provider SP), and the key allotter terminal 12 (key allotter KA)), and is assigned to be unique.

A certificate represents the content of data on a certificate, and the certificate ID represents an identification number of the certificate.

FIG. 66 represents an example of the certificate issued by the authentication center terminal 211 (authentication center CA).

In the certificate of FIG. 66, an Acc-ID represents an identification number under the public key authentication infrastructure of a user (including the service provider terminal 13 (service provider SP) and the key allotter terminal 12 (key allotter KA) other than the IC card 23 (user User) in this case).

An expiration date represents an expiration date for the certificate.

A certificate ID represents an identification number of the certificate.

A public key represents a public key related to the user having the Acc-ID (i.e., the user having the Acc-ID has an IC card that holds a private key corresponding to a public key Kpub0).

Auxiliary information represents other information related to the user having the Acc-ID.

A CA signature represents a digital signature generated for the entire data of the certificate by the authentication center terminal 211 (authentication center CA).

Next, an operation of the authentication key allotment system 201 to which the second embodiment of the present invention is applied will be described.

An outline of the operation of the authentication key allotment system 201 is basically similar to that of the authentication key allotment system 1 to which the first embodiment of the present invention is applied.

Therefore, the operation of the authentication key allotment system 201 will also be described with reference to the flowchart of FIG. 23.

First, a "service selection/key allotment process" is executed in step S1.

A flow of the "service selection/key allotment process" in the second embodiment is supposed to be basically similar to that of the first embodiment. That is, the "service selection/key allotment process" in the second embodiment is executed in accordance with the above-mentioned arrow chart of FIG. 27.

Referring thus to the arrow chart of FIG. 27, steps different from those of the first embodiment will mainly be described below, while omitting here the descriptions of the steps described in the first embodiment, as appropriate.

As shown in FIG. 27, first, the user terminal 21 selects a service (selected service) and sends it to the service provider terminal 13 in step S11.

The service provider terminal 13 receives a notice thereabout in step S41, and generates the key allotment application of FIG. 51 for sending to the key holding apparatus 22 in step S42.

The key holding apparatus 22 receives and holds this temporarily in step S12, and at the same time, sends it to the key allotter terminal 12 in step S13.

When receiving this, the key allotter terminal 12 verifies a digital signature of the service provider terminal 13 in the key allotment application in step S21. Specifically, a certificate of the service provider terminal 13 (service provider SP) is also sent together with the key allotment application of FIG. 51.

Since step S22 (a "mutual authentication + key sharing process with the key holding apparatus") and step S14 (a "mutual authentication + key sharing process with the key allotter) in the second embodiment are similar to those in the first embodiment, descriptions thereof will be omitted.

By contrast, step S23 (a "key holding apparatus user authentication process") and step S15 (a "user authentication response process") in the second embodiment are different from the steps shown in FIG. 27, i.e., those of the first embodiment.

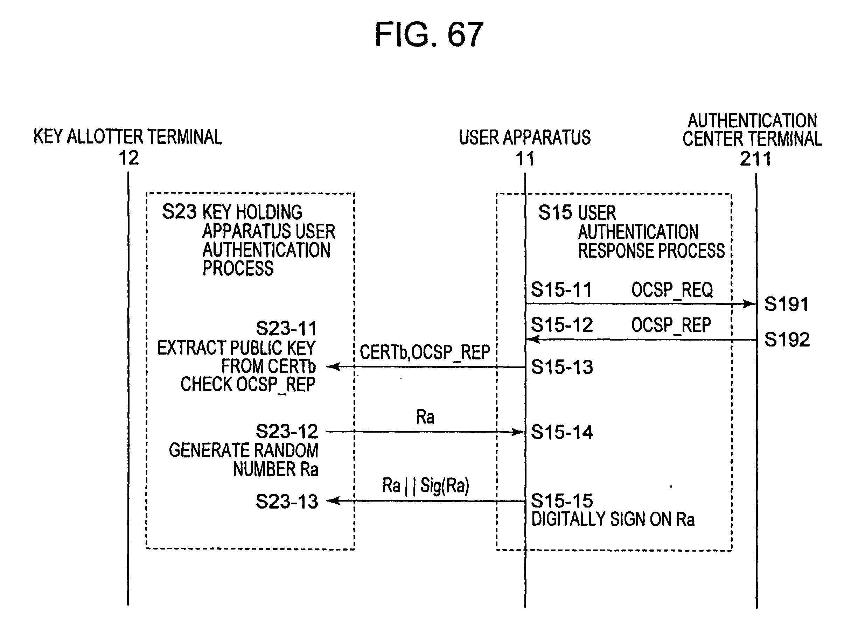

Details of step S23 (the "key holding apparatus user authentication process") and step S15 (the "user authentication response process") in the second embodiment are shown in FIG. 67.

Referring thus to FIG. 67, the details of step S23 (the "key holding apparatus user authentication process") and step S15 (the "user authentication response process") in the second embodiment will be described.

As shown in FIG. 67, first, the key holding apparatus 22 (user apparatus 11) sends data OCSP_REQ including an identification number CID (certificate ID) of the certificate of FIG. 66, to the authentication center terminal 211 in step S15-11.

Specifically, the key holding apparatus 22 (user apparatus 11) queries the authentication center terminal 211 about the invalidation status of a user's certificate obtained from the IC card 23 connected to the key holding apparatus 22 by an OCSP protocol (RFC2560).

When receiving the data OCSP_REQ, the authentication center terminal 211 examines the validity of the certificate corresponding to the identification number CID (checks that the certificate having the identification number CID is included in the certificate table of FIG. 64), and sends an examination result OCSP_REP to the key holding apparatus 22 in step S191. Specifically, the authentication center terminal 211 sorts the received data by the identification number CID and a certificate status status (VALID/INVALID/UNKNOWN).

Note that the certificate status status (VALID/INVALID/UNKNOWN) is supposed to be a function that returns UNKNOWN when it is not a certificate issued by the authentication center terminal 211, returns VALID when there is a record having a matched certificate identification number in the certificate table of FIG. 64, and returns INVALID when there is no record having a matched certificate identification number in the certificate table of FIG. 64.

The authentication center terminal 211 generates data CID|| status || time|| Sig (CID) || status || time) as the examination result OCSP_REP for sending to the key holding apparatus 22 in step S192.

Note that data in which the sorted identified. person's number CID and certificate status status, and an examined time time are linked together is supposed to be CID|| status || time, and a digital signature of the authentication center CA (authentication center terminal 211) put thereon is supposed to be Sig (CID|| status||time) .

When receiving the examination result OCSP_REP in step S15-12, the key holding apparatus 22 sends the examination result OCSP_REP and a user's certificate CERTb obtained from the IC card 23 connected thereto, to the key allotter terminal 12, in step S15-13.

When receiving them, the key allotter terminal 12 extracts a public key from the user's certificate CERTb, and checks the examination result OCSP_REP in step S23-11. That is, the key allotter terminal 12 verifies the examination result OCSP_REP and the digital signature on CERTb, to check that the certificate of the user User (IC card 23) is valid.

Note that the example in which the key holding apparatus 22 obtains the invalidation status of the user's certificate by using the OCSP protocol is described here. However, examples are not limited to this one. For instance, it may be designed such that the user User (key holding apparatus 22) sends only the user's certificate to the key allotter terminal 12, and the key allotter terminal 12 obtains the invalidation status of the certificate by using the same protocol.

And the key allotter terminal 12 generates a random number Ra for sending to the key holding apparatus 22 in step S23-12.

When receiving the random number Ra in step S15-14, the key holding apparatus 22 causes the IC card 23 to compute a digital signature Sig(Ra) for the random number Ra, by utilizing the private key of the user User in step S15-15. And the key holding apparatus 22 sends data Ra||Sig(Ra) in which the random number Ra is linked with the digital signature Sig(Ra), to the key allotter terminal 12.

When receiving the data Ra||Sig (Ra), the key allotter terminal 12 extracts the digital signature Sig (Ra) therefrom, for verification by the public key included in the certificate the validity of which is already verified, in step S23-13. If a verification result thereof is correct, the key allotter terminal 12 is successful in identifying the Acc-ID of the user User (IC card 23).

Returning to FIG. 27, the key allotter terminal 12 decides an identification number KID of an authentication technique to be allotted to the key holding apparatus, and newly generates a pair (Kpr, Kpub) of a private key and a public key for the public key cryptography from a random number in an appropriate way in step S24. This pair of keys (Kpr, Kpub) is used as a certifying key and a verifying key of the authentication technique to be newly allotted. And the key allotter terminal 12 sends the identification number KID and the certifying key (new key) Kpr to the key holding apparatus 22.

Specifically, the key allotter terminal 12 encrypts the identification number KID and the certifying key (new key) Kpr as encrypted data E(Kses, KID||Kpr) by using the above-mentioned temporary key Kses shared with the key holding apparatus 22 and sends it to the key holding apparatus 22.

The key holding apparatus 22 receives the encrypted data E(Kses, KID||Kpr), and decrypts the identification number KID and the certifying key (new key) Kpr using the temporary key Kses, in step S16. And the key holding apparatus 22 adds a new record to the certifying key table of FIG. 59 held by itself.

Further, the key allotter terminal 12 generates the key allotment report of FIG. 52 for sending to the key holding apparatus 22 in step S25.

At the same time, the key allotter terminal 12 adds to the key allotment table of FIG. 46 a record configured of a unique identification number KID of the authentication technique on which allotment is performed, a certifying key Kpr, an identification number AID of the allotted user, an identification number HWID of the allotted key holding apparatus, a key allotment application App, and a key allotment report Rep.

And the key allotter terminal 12 bills the user User having the identification number AID (who owns the IC card 23) in step S26 (FIG. 25).

When receiving the key allotment report of FIG. 52 in step S17, the key holding apparatus 22 sends it to the service provider terminal 13 in step S18.

At the same time, the key holding apparatus 22 adds to the authentication information table of FIG. 60 a record configured of the identification number of the allotted authentication technique, the key allotment application and the key allotment report already received from the service provider.

The service provider terminal 13 receives the key allotment report in step S43. And the service terminator 13 verifies a key allotter's signature included in the key allotment report. The service provider terminal 13, if succeeding in the authentication, adds to the authentication information table of FIG. 53 a record configured of the identification number of the authentication technique, the already sent key allotment application, and the received key allotment report.

Returning to FIG. 23, after step S1 (the "service selection/key allotment process") is executed, a "key use/service provision process" is executed in step S2.

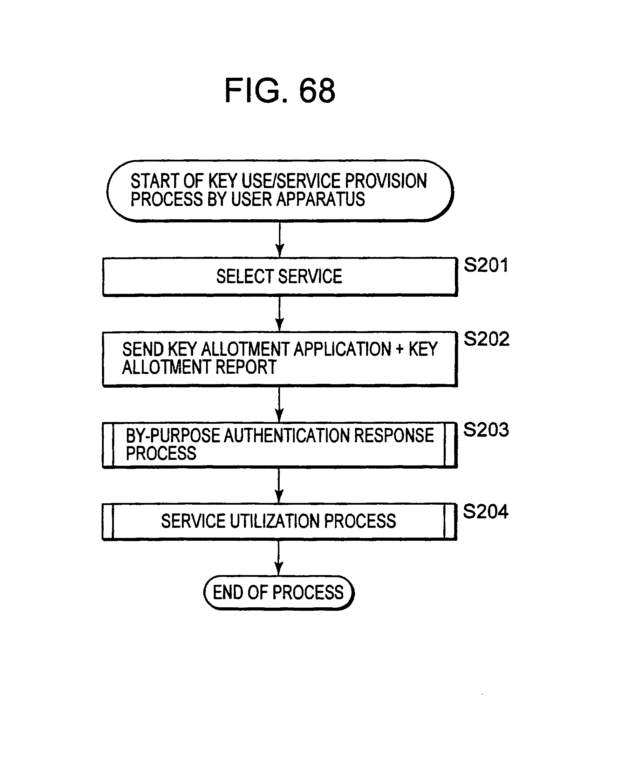

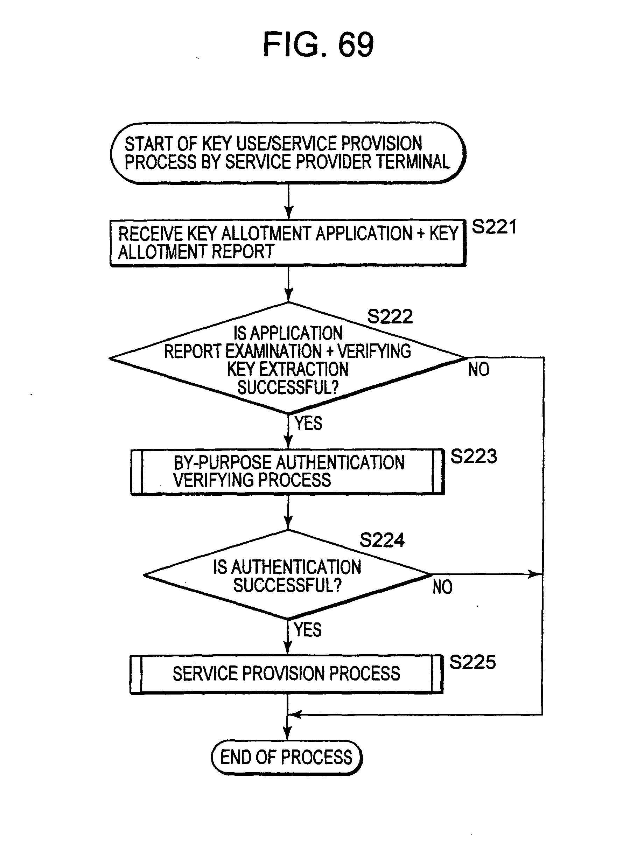

Details of the "key use/service provision process" in the second embodiment are shown in flowcharts of FIGS. 68 and 69. Referring thus to the flowcharts of FIG. 68 and 69, the details of the "key use/service provision process" in the second embodiment will be described.

FIG. 68 represents a "key use/service provision process" by the user apparatus 11 (FIG. 44). FIG. 69 represents a "key use/service provision process" by the service provider terminal 13 (FIG. 44).

Referring first to FIG. 68, the "key use/service provision process" by the user apparatus 11 will be described.

The key holding apparatus 22 (specifically, the CPU 51 (FIG. 16)) selects a service in step S201.

For instance, in this example, the key holding apparatus 22, for instance, displays service content from the service information table of FIG. 60 held by itself on the display (the output section 37 (FIG. 15) ) of the user terminal 21 to allow the user User to select a record corresponding to a service which the user wishes to utilize, whereby it selects the service.

The key holding apparatus 22 sends a key allotment application and a key allotment report (hereinafter written as a key allotment application + key allotment report) for the selected record to the service provider terminal 13 in step S202. Note that in this example, the sending address is supposed to be included in, for instance, service content in a document of title.

As will be described later, the service provider terminal 13 receives the key allotment application + key allotment report. And the service provider terminal 13 examines the key allotment application + key allotment report.

This examination involves determination as to whether or not the key allotment application is correct in terms of the format of FIG. 51, determination as to whether or not the key allotment report is correct in terms of the format of FIG. 52, verification of a digital signature, determination as to whether or not the application ID and SP-ID included in the key allotment application match with those included in the key allotment report, and determination as to whether or not a Key-ID written in the key allotment report is included in the invalidation key table of FIG. 55 held by the service provider terminal 13. When succeeding in the examination of all of these items, the service provider terminal 13 gets a service to be provided and an authentication method (verifying key) Kpub from the key allotment application. Such a series of processing will hereinafter be called as an application report examination + verifying key extraction.

When succeeding in the application report examination + verifying key extraction, the service provider terminal 13 executes a "by-purpose authentication verification process" (steps S221 to S223 of FIG. 69).

At this time, the key holding apparatus 22 executes a "by-purpose authentication response process" corresponding to the by-purpose authentication verification process in step S203.

That is, authentication is performed by the allotted authentication technique between the key holding apparatus 22 (user User) and the service provider terminal 13 (service provider SP).

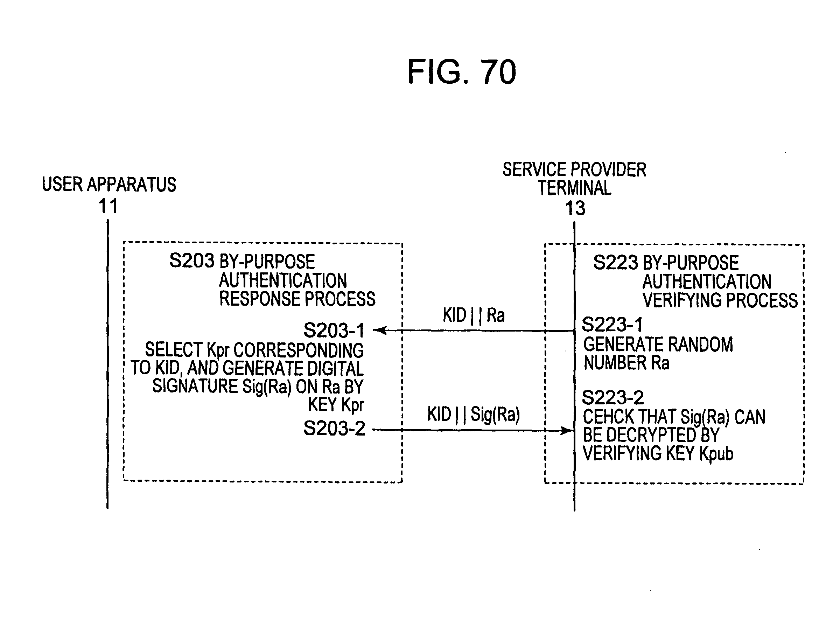

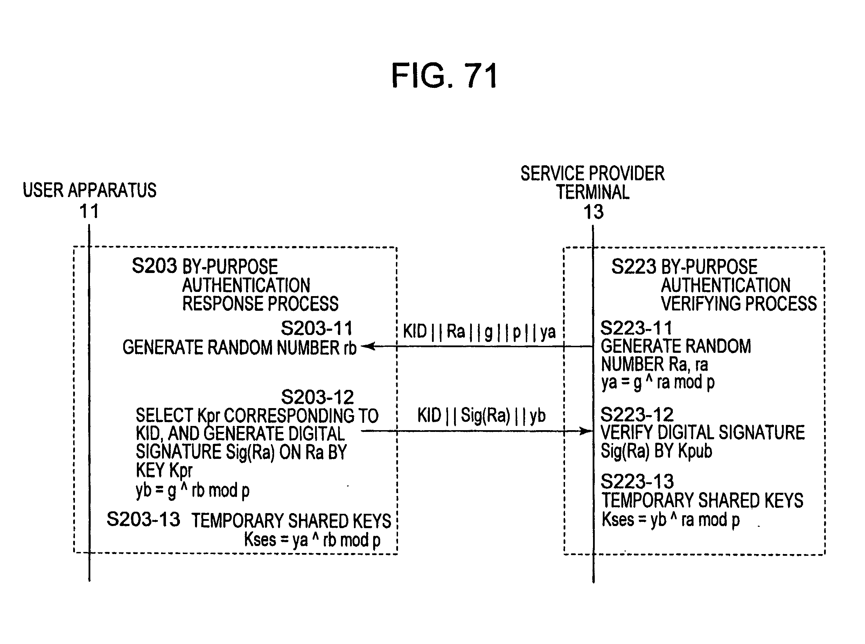

Details of the "by-purpose authentication response process" in the second embodiment are shown in FIGS. 70 and 71.

Referring thus to FIGS. 70 and 71, the details of the "by-purpose authentication response process" in the second embodiment will be described.

FIG. 70 shows a procedure for performing the public key authentication in a case where the key holding apparatus 22 and the service provider terminal 13 have the corresponding verifying key Kpub and certifying key Kpr (shows correspondence between the "by-purpose authentication verification process" and the "by-purpose authentication response process").

As shown in FIG. 70, the service provider terminal 13 generates a random number Ra, and sends linked data KID||Ra in which that random number Ra is linked with a Key-ID (hereinafter written as a KID) to the key holding apparatus 22, in step S223-1.

When receiving the data KID| |Ra, the key holding apparatus 22 extracts each of the KD and the random number Ra, and selects a certifying key corresponding to the KID (certifying key obtained from the certifying key table of FIG. 59) Kpr in step S203-1. And the key holding apparatus 22 generates a digital signature Sig(Ra) = D(Kpr, h (Ra ) ) for the random Ra by the certifying key Kpr.

The key holding apparatus 22 sends linked data KID|| Sig (Ra) in which the digital signature Sig (Ra) is linked with the KID to the service provider terminal 13 in step S203-2.

When receiving this linked data, the service provider terminal 13 extracts each of the KID and the digital signature Sig(Ra), and verifies that the digital signature Sig(Ra) satisfies E(Kpub, Sig(Ra)) = h(Ra), i.e., checks that the digital signature Sig(Ra) can be decrypted by the verifying key Kpub, in step 5223-2. When the verification is successful, it means that the service provider terminal is successful in authentication by the allotted authentication technique.

By contrast, FIG. 71 shows correspondence between the "by-purpose authentication verification process" and the "by-purpose authentication response process" in a case where a key is shared.

As shown in FIG. 71, first, the service provider terminal 13 generates random numbers Ra, ra, and computes a calculated value ya = g^ra mod p (a remainder of the rath power of g where p is the modulus) for Diffie-Hellman key sharing from the random number ra in step S223-1.

And the service provider terminal 13 sends data KID||Ra||g||p||ya in which these are linked with the Key-ID to the key holding apparatus 22.

When receiving the data KID||Ra||g||p||ya, the key holding apparatus 22 generates a random number rb in step S203-11.

And the key holding apparatus 22 computes yb = g^Rb mod p (a remainder of the *rb*th power of p where p is the modulus) in step S203-12.

Further, the key holding apparatus 22 selects a certifying key Kpr corresponding to the received KID, computes a digital signature SIG (Ra) = D(Kpr, h(Ra)) on the received Ra by utilizing the certifying key Kpr, and sends linked data KID|| SIG (Ra)||yb in which the digital signature SIG (Ra) , KID, and the computed result yb are linked together, to the service provider terminal 13.

The service provider terminal 13 verifies the received digital signature SIG(Ra) by the verifying key Kpub, i.e., verifies that the E(Kpub, SIG (Ra)) = h(Ra) is satisfied in step S223-2. When this verification is successful, it means that the service provider terminal is successful in authentication by the allotted authentication technique.

In that case, the key holding apparatus 22 makes a common key Kses = ya^Rb mod p (a remainder of the *Rb*th power of ya where p is the modulus) as a temporary shared key in step S203-13, and the service provider terminal 13 makes a common key Kses = yb^Ra mod p (a remainder of the *Ra*th power of yb where p is the modulus) as a temporary shared key in step S223-3. As a result, the key holding apparatus 22 and the service provider terminal 13 can share the common key Kses with each other.

Returning to FIG. 68, the key holding apparatus 22 executes a "service utilization process" corresponding to FIG. 34 or 35, mentioned above (described with reference to the first embodiment) in step S204.

Referring next to FIG. 69, the "key use/service provision process" by the service provider terminal 13 will be described.

As mentioned above, the key holding apparatus 22 selects a service in step S201 of FIG. 68, and sends the key allotment application + key allotment report to the service provider terminal 13 in step S202.

At this time, the service provider terminal 13 (specifically, the CPU 101 (FIG. 19)) receives the key allotment application + key allotment report in step S221.

And the service provider terminal 13 executes the "application report examination + verifying key extraction" process in step S222, and determines whether or not the "application report examination + verifying key extraction" is successful.

If it is determined in step S222 that the "application report examination + verifying key extraction" fails (is not successful), then the process is brought to an end.

On the other hand, if it is determined in step S222 that the "application report examination + verifying key extraction" is successful, the service provider terminal 13 executes the "by-purpose authentication verification process" in step S223.

Note that details of the "by-purpose authentication verification process" are described (mentioned above) with reference to step S203 of FIG. 68 (the "by-purpose authentication response process"), a description thereof will be omitted.

The service provider terminal 13 determines whether or not the authentication is successful in step S224, and if it determines that the authentication fails (is not successful) , it ends the process.

On the other hand, if it determines in step S224 that the authentication is successful, the service provider terminal 13 executes the "service provision process" corresponding to FIG. 34 or 35, mentioned above (described with reference to the first embodiment) in step S225.

Returning to FIG. 23, after step S2 (the "key use/service provision process) ends, step 86 (a "key deletion process") and step S7 (a "key use termination process") are executed.

Step S6 (a "key deletion process") to which the second embodiment is applied is similar to that of the above-mentioned "key deletion process" to which the first embodiment is applied. That is, the "key deletion process" is executed according to any of the above-mentioned flowcharts of FIGS. 37 to 39.

Provided that, in the second embodiment, objects for deletion are supposed to be the key allotment table of FIG. 46 in the case of the key allotter terminal 12, the authentication information table of FIG. 53 and the invalidation key table of FIG. 55 in the case of the service provider terminal 13, the authentication information table of FIG. 60 and the certifying key table of FIG. 59 in the case of the key holding apparatus 22.

Step S7 (a "key use termination process") to which the second embodiment is applied is similar to that of the above-mentioned "key use termination process" to which the first embodiment is applied. That is, the "key use termination process" is executed according to the above-mentioned flowcharts of FIGS. 40 and 41.

Provided that, in the second embodiment, in addition to an operation of deleting a record having a Key-ID specified by the key use termination request from the authentication information table of FIG. 53 in step S183 of FIG. 41, an operation of adding a record configured of the Key-ID and an expiration date to the invalidation key table must be performed.

Further, the key use termination request generated by the key allotter terminal 12 and sent to the service provider terminal 13 in step S161 of FIG. 40 is supposed to have the format of FIG. 42 in the first embodiment, but is supposed to have the format shown in FIG. 43 in the second embodiment.

The key use termination request of FIG. 43 is configured of an identification number Key-ID of an authentication technique the use of which is to be terminated, a date/time Date-time at which to terminate the use, an original expiration date for the authentication technique the use of which is to be terminated, and a key allotter's digital signature (KA digital signature) therefor.

Note that the key allotter terminal 12 can obtain, for the allotted authentication technique, an identification number SP-ID of the service provider who is allotted with the authentication technique from an item for "key allotment application" in the key allotment table of FIG. 46.

In this way, in the authentication key allotment system 201 to which the second embodiment is applied, the authentication technique to be allotted is supposed to be the public key authentication system, and thus the steps (steps S221 to S224 of FIG. 69) prior to the "service utilization process (step S204 of FIG. 68)" and the "service provision process (step S225 of FIG. 69)" of the "key use/service provision process" can be executed by an entity who is not the service provider SP (service provider terminal 13). As a result, for instance, the user User himself having the key holding apparatus 22 can verify, with the key holding apparatus 22 held by himself, whether or not authentication by the allotted authentication technique for utilizing a service is successful, whereby an advantage is obtained that the user can feel secure.

### (Third Embodiment)

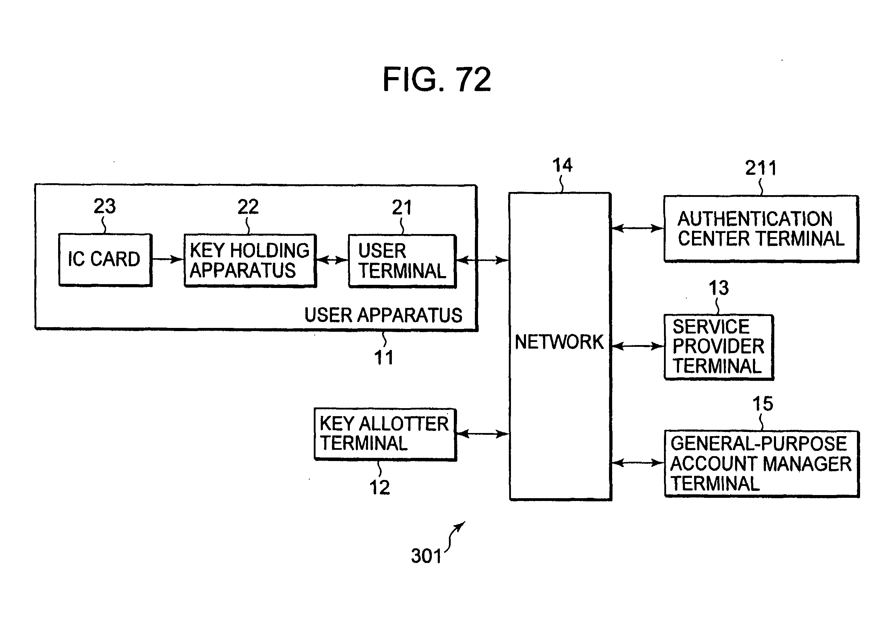

FIG. 72 represents an exemplary configuration of an authentication key allotment system 301 to which the third embodiment of the present invention is applied, and parts corresponding to the authentication key allotment system 1 of FIG. 4 or the authentication key allotment system 201 of FIG. 44 are given the corresponding reference characters.

In this exemplary configuration, the authentication center terminal 211 is further connected to the network 14, with respect to the authentication key allotment system 1 of FIG. 1. In other words, the general-purpose account manager terminal 15 is further connected to the network 14, with respect to the authentication key allotment system 201 of FIG. 44.

In the third embodiment, as shown in FIG. 3, participants are supposed to be a key allotter KA, an authentication center CA, a user User, a service provider SP, and a general-purpose account manager KDC. The service provider SP (service provider terminal 13) generates digital signatures verifiable by the public key authentication infrastructure, and the user User (key holding apparatus 22) is authenticated by the general-purpose account system. An example in which an authentication technique is newly allotted in this case will be described.

Note that the key allotter terminal 12 (key allotter KA) knows the invalidation status of a certificate of the service provider terminal 13 (service provider SP) beforehand (periodically collects related CRL).

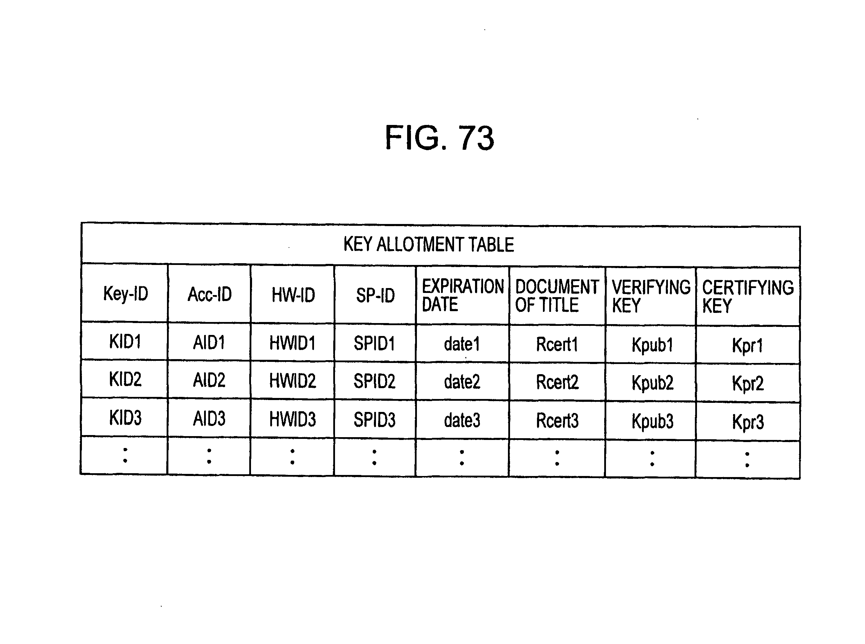

FIGS. 73 to 77 represent examples of data held by the key allotter terminal 12.

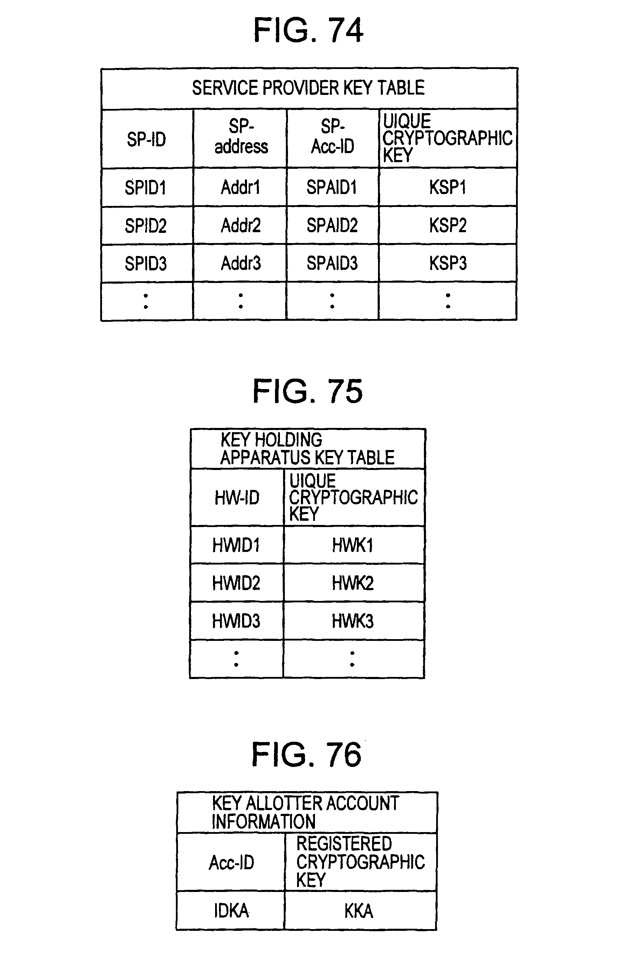

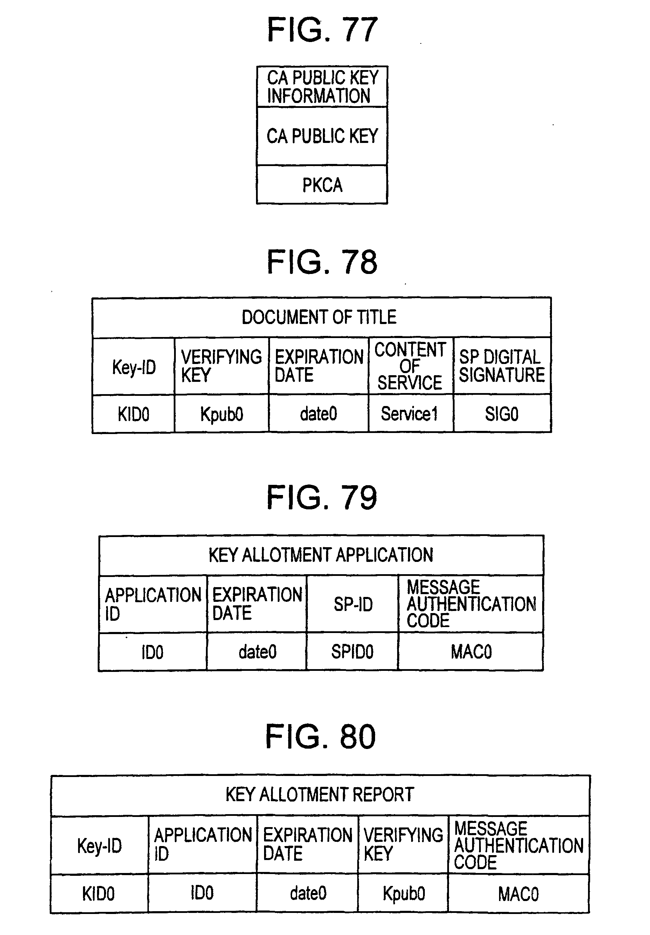

That is, in this example, for instance, in the memory (the storage section 88 or the like of FIG. 18) of the key allotter terminal 12, a key allotment table such as shown in FIG. 73, a service provider key table such as shown in FIG. 74, a key holding apparatus key table such as shown in FIG. 75, key allotter account information such as shown in FIG. 76, and CA public key information such as shown in FIG. 77 are stored.

In this example, for instance, each of the key allotment table of FIG. 73, the service provider key table of FIG. 74, and the key holding apparatus key table of FIG. 75 is implemented as a database retrievable by the corresponding Key-ID, SP-ID, or HW-ID.

In the key allotment table of FIG. 73, a record in each row corresponds to an authentication technique on which allotment is performed.

The Key-ID represents an identification number of the allotted authentication technique, and is assigned to be unique.

An Acc-ID represents an identification number under the general-purpose account of the user User (key holding apparatus 22) who pays when the authentication technique is allotted.

An HW-ID represents an identification number of the key holding apparatus 22 to which the authentication technique is allotted.

An SP-ID represents, an identification number of the service provider terminal 13 (service provider SP) that is allotted with the authentication technique.

An expiration date represents an expiration date for the authentication technique.

A verifying key represents a verifying key (a public key for the public key cryptography) of the allotted authentication technique.

A certifying key represents a certifying key (a private key for the public key cryptography) of the allotted authentication technique.

A document of title represents data generated by the service provider terminal 13 (service provider SP) in order to certify a service to be provided thereby, when key allotment is performed.

The document of title is constituted as shown in, for instance, FIG. 78.

In the document of title of FIG. 78, each of a Key-ID, a verifying key, and an expiration date represent a respective one of an identification number, a verifying key, and an expiration date for an authentication technique used at the time of service provision. Service content represents the content of a service provided to a user User (user terminal 21) (having the key holding apparatus 22) who is authenticated by an authentication technique having the Key-ID. An SP digital signature represents a digital signature generated for the entire data of the document of title by the service provider terminal 13 (service provider SP).

In the service provider key table of FIG. 74, each record corresponds to a service provider terminal 13 (service provider SP) that concludes a contract with the key allotter terminal 12 (key allotter KA).

The SP-ID represents an identification number of the service provider terminal 13 (service provider SP) that concludes the contract with the key allotter terminal 12 (key allotter KA), and is assigned to be unique at the time the contract is concluded.

An SP-address represents a sending address (a URL and the like) of the service provider terminal 13. This is supposed to be where to make contact when invalidation of the authentication technique occurs and when an inquiry is to be made.

An SP-Acc-ID represents an identification number of the service provider terminal 13 (service provider SP) under the public key authentication infrastructure.

A unique cryptographic key represents a cryptographic key agreed upon between the service provider terminal 13 (service provider SP) and the key allotter terminal 12 (key allotter KA) when the contract is concluded, and this cryptographic key is used in order to guarantee the anonymity and integrity of communication between both parties.

Since the key holding apparatus key table of FIG. 75 is supposed to have the same configuration as the key holding apparatus table of FIG. 7, a description thereof will be omitted.

Since the key allotter account information of FIG. 76 is supposed to have the same configuration as the key allotter account information of FIG. 8, a description thereof will be omitted.

Since the CA public key information of FIG. 77 is supposed to have the same configuration as the CA public key information of FIG. 50, a description thereof will be omitted.

FIG. 79 represents an example of a key allotment application generated by the service provider terminal 13, and FIG. 80 represents an example of a key allotment report generated by the key allotter terminal 12. Details thereof will be described later.

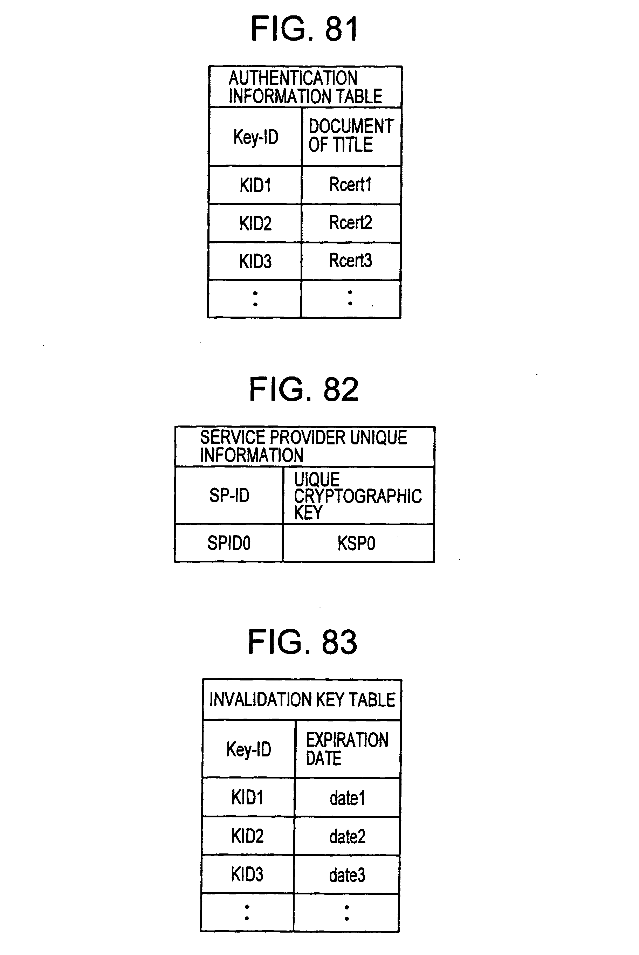

FIGS. 81 to 86 represent examples of data held by the service provider terminal 13.

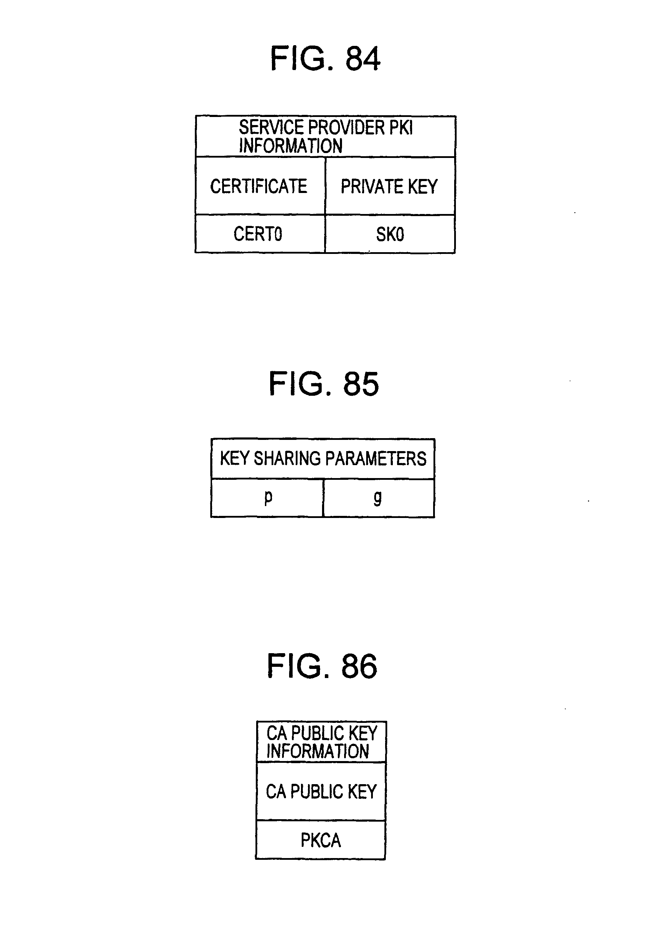

That is, in this example, for instance, in the memory (the storage section 108 or the like of FIG. 19) of the service provider terminal 13, an authentication information table such as shown in FIG. 81, service provider unique information such as shown in FIG. 82, a invalidation key table such as shown in FIG. 83, service provider PKI information such as shown in FIG. 84, key sharing parameters such as shown in FIG. 85, CA public key information such as shown in FIG. 86 are stored.

In this example, for instance, the authentication information table of FIG. 81 and the invalidation key table of FIG. 83 are implemented as databases retrievable by a Key-ID.

In the authentication information table of FIG. 81, each record corresponds to an authentication technique allotted.

The Key-ID represents an identification number of the authentication technique. A document of title represents a document of title issued to the authentication technique on which key allotment is performed.

Since the service provider unique information of FIG. 82 is supposed to have the same configuration as the service provider unique information of FIG. 10, a description thereof will be omitted.

Since each of the invalidation key table of FIG. 83, the service provider PKI information of FIG. 84, and the key sharing parameters of FIG. 85 is supposed to have the same configuration as a respective one of the invalidation key table of FIG. 55, the service provider PKI information of FIG. 56, and the key sharing parameters of FIG. 57, a description thereof will be omitted.

Since the CA public key information of FIG. 86 is supposed to have the same configuration as the CA public key information of FIG. 50, a description thereof will be omitted.

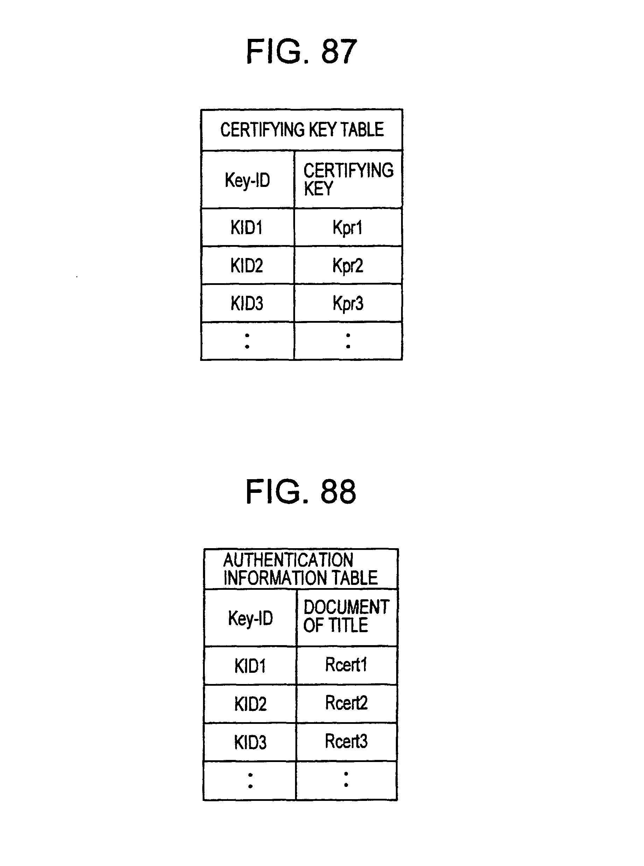

FIGS. 87 to 91 represent examples of data held by the key holding apparatus 22 or the IC card 23 (user User).

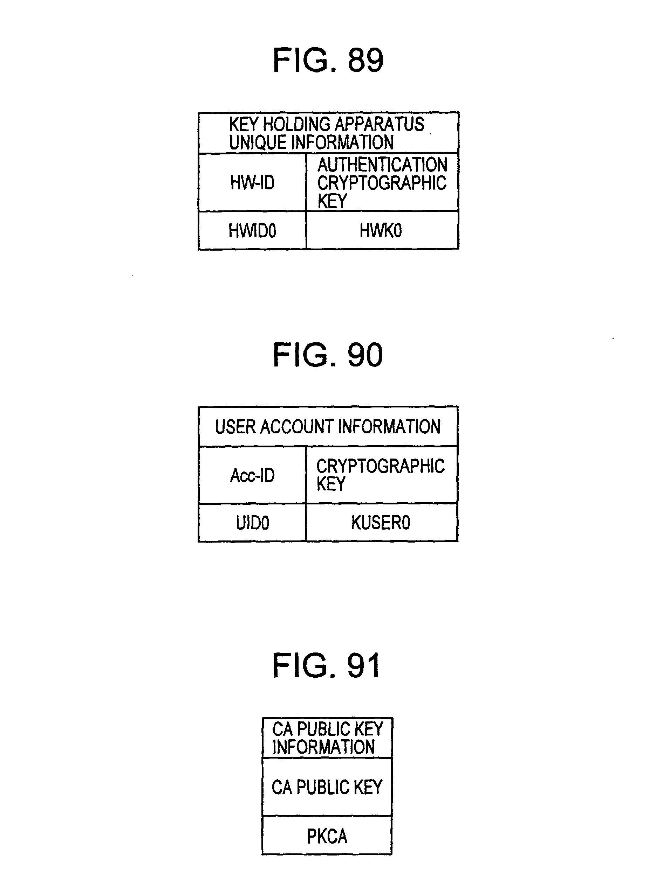

That is, in this example, for instance, in the data storage section 53 or the key storage section 54 (FIG. 16) of the key holding apparatus 22, or in the storage section 71 of the IC card 23, a certifying key table such as shown in FIG. 87, an authentication information table such as shown in FIG. 88, key holding apparatus unique information such as shown in FIG. 89, user count information such as shown in FIG. 90, and CA public key information such as shown in FIG. 91 are stored.

In this example, for instance, the certifying key table of FIG. 87 and the authentication information table of FIG. 88 are implemented as databases retrievable by a Key-ID.

Since each of the certifying key table of FIG. 87, the key holding apparatus unique information of FIG. 89, and the user count information of FIG. 90 is supposed to have the same configuration as a respective one of the certifying key table of FIG. 11, the key holding apparatus unique information of FIG. 13, and the user count information of FIG. 14, a description thereof will be omitted.

In the authentication information table of FIG. 88, each record corresponds to an authentication technique which is allotted by the key allotter terminal 12 (key allotter KA) .

The Key-ID represents an identification number of the authentication technique. A document of title represents a document of title issued to the authentication technique on which key allotment is performed.

Since the CA public key information of FIG. 91 is supposed to have the same configuration as the CA public key information of FIG. 63, a description thereof will be omitted.

Specifically, the key storage section 54 of FIG. 16 holds the certification table of FIG. 87 and the key holding apparatus unique information of FIG. 89. The data storage section 53 holds the authentication information table of FIG. 88 and the CA public key information of FIG. 91. The data management section 55 adds or deletes the content of data held on the key storage section 54 and the data storage section 53 according to information sent from the key allotter terminal 12 (key allotter KA), and the expiration dates for documents of title in the authentication information table of FIG. 88 held on the data storage section 53.

The user count information of FIG. 90 is held on the IC card 23 (the storage section 71 (FIG. 17)) connected to the key holding apparatus 22. In this example, the key holding apparatus 22 can request the IC card 23 to perform encryption, calculation for decryption, and provision of certificates utilizing the user count information of FIG. 90, if the IC card 23 is connected to its authentication processing section 58 (FIG. 16).

In the memory (the storage section 128 or the like of FIG. 20) of the account manager terminal 15 of FIG. 72, information similar to the information held by the account manager terminal 15 of FIG. 4, i.e., the account management table of FIG. 21, and the general-purpose account management key of FIG. 22 are stored.

In the memory (the storage section 228 or the like of FIG. 45) of the authentication center terminal 211 of FIG. 72, information similar to the information held by the authentication center terminal 211 of FIG. 44, i.e., the certificate table of FIG. 64 and the CA public key of FIG. 65 are stored.

Provided that, the entities involved in the public key authentication infrastructure, corresponding to the identification numbers represented by the Acc-ID of the certificate table of FIG. 64 are supposed to be the key holding apparatus 22 (user User), the service provider terminal 13 (service provider SP) , and the key allotter terminal 12 (key allotter KA) in the first embodiment, but only the service provider terminal 13 (service provider SP) is supposed to be involved in the third embodiment.

Next, an operation of the authentication key allotment system 301 to which the third embodiment of the present invention is applied will be described.

An outline of the operation of the authentication key allotment system 301 is basically similar to that of the authentication key allotment system 1 to which the first embodiment of the present invention is applied (and the authentication key allotment system 201 to which the second embodiment of the present invention is applied).

Therefore, the operation of the authentication key allotment system 301 will also be described with reference to the flowchart of FIG. 23.

First, a "service selection/key allotment process" is executed in step S1.

The "service selection/key allotment process" in the third embodiment is supposed to be basically similar to that of the first embodiment, but differs therefrom slightly.

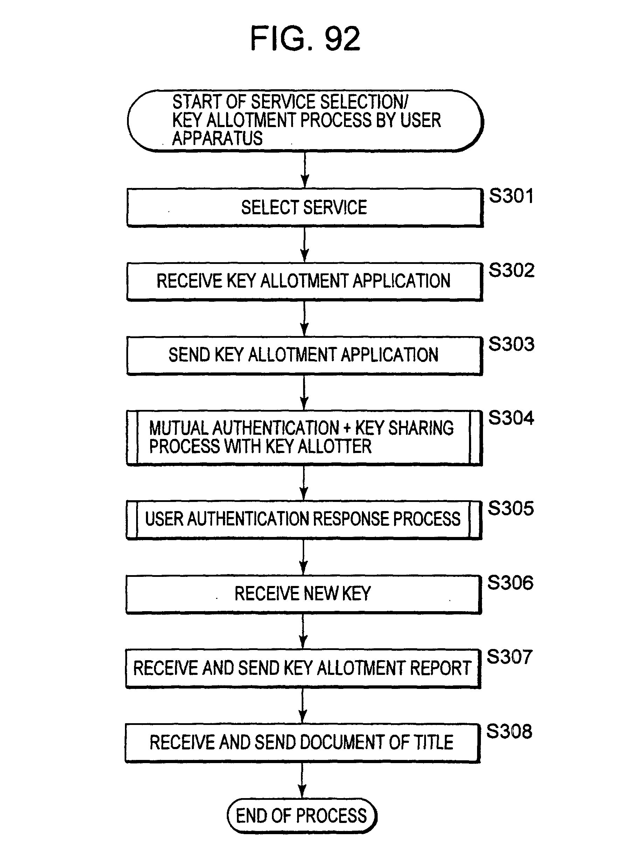

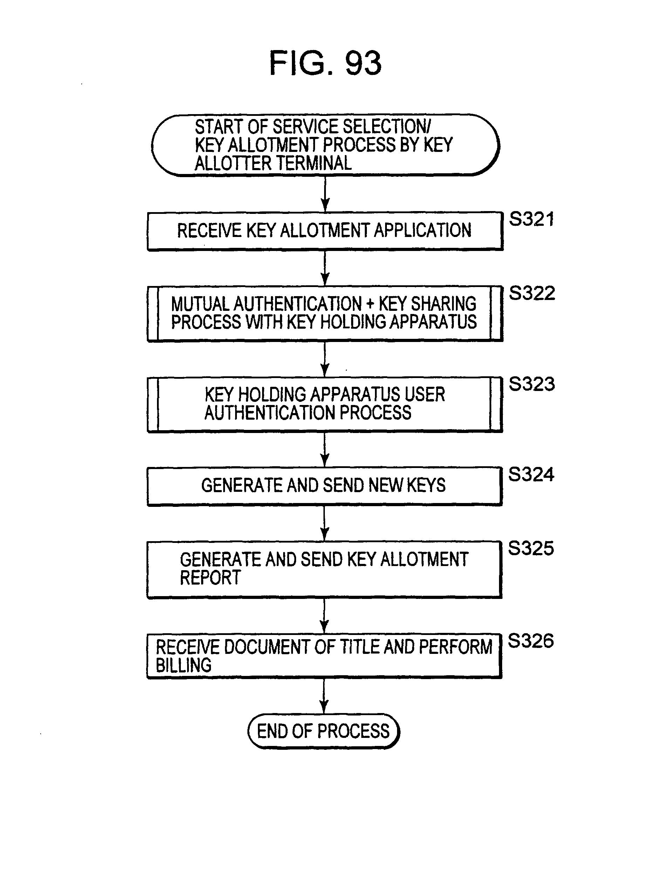

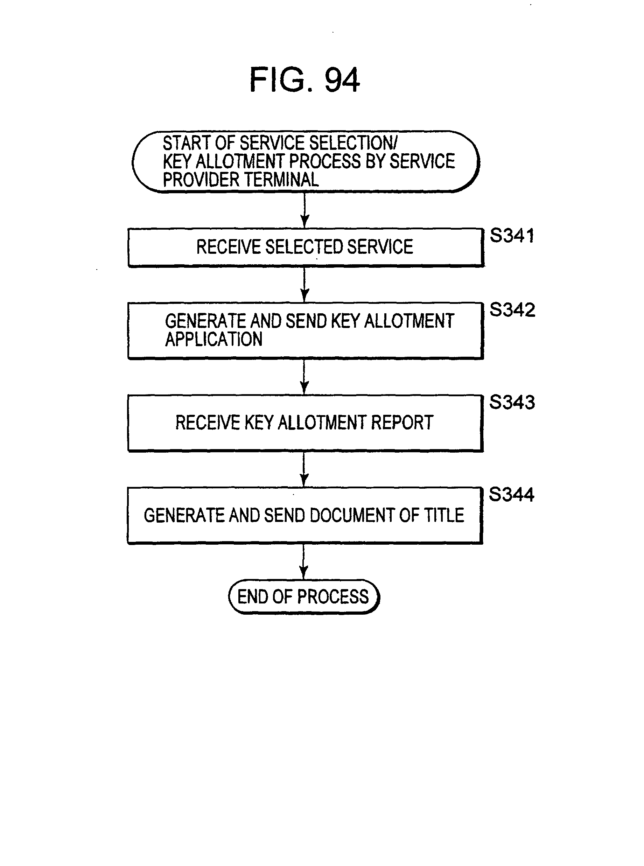

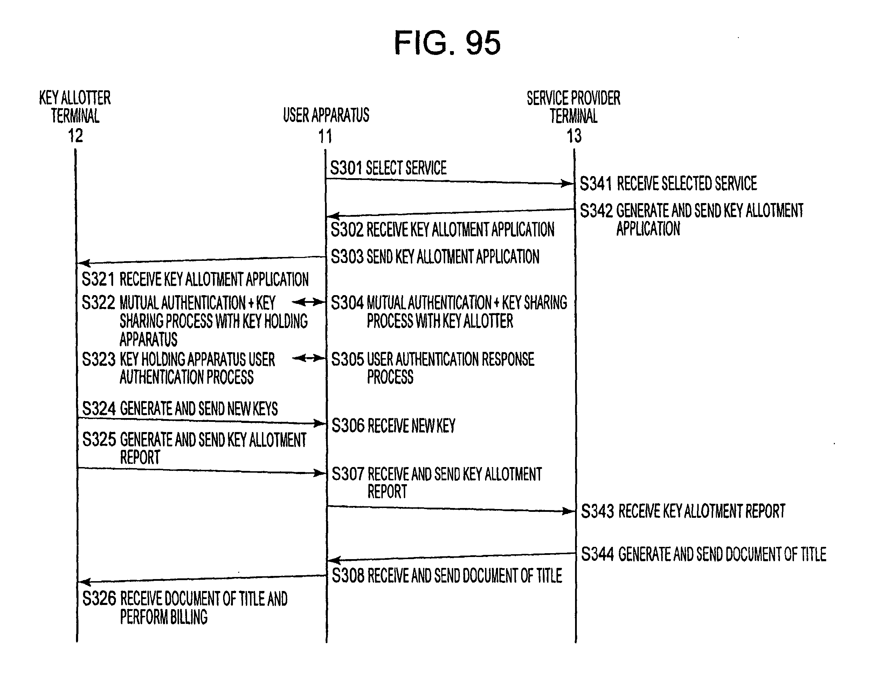

Details of such "service selection/key allotment process" in the third embodiment are shown in flowcharts of FIG. 92 to 94 and an arrow chart of FIG. 95. The flowcharts of FIGS. 92 to 94 represent "service selection/key allotment processes" by the respective apparatuses shown in the arrow chart of FIG. 95. That is, FIG. 92 represents the "service selection/key allotment process" by the user apparatus 11 (FIG. 72); FIG. 93 represents the "service selection/key allotment process" by the key allotter terminal 12 (FIG. 72); and FIG. 94 represents the "service selection/key allotment process" by the service provider terminal 13 (FIG. 72).

Therefore, referring to the arrow chart of FIG. 95, steps different from those of the first embodiment (or the second embodiment) will mainly be described below, while omitting here the descriptions of the steps described in the first embodiment, as appropriate.

In FIG. 95, first, the user terminal 21 (User apparatus 11) selects a service (selected service) and sends it to the service provider terminal 13 in step S301.

The service provider terminal 13 receives the selected service in step S341, and generates a key allotment application for sending to the key holding apparatus 22 in step S342.

The key holding apparatus 22 (user apparatus 11) receives and holds this temporarily in step S302, and at the same time, sends it to the key allotter terminal 12 in step S303.

When receiving the key allotment application, the key allotter terminal 12 verifies a digital signature of the service provider terminal 13 (service provider SP) in the key allotment application in step S321. FIG. 79 represents an example of such a key allotment application.

In the key allotment application of FIG. 79, an application ID represents an identification number of the key allotment application to be added so as to be unique to the service provider terminal 13 (service provider SP) who issues this key allotment application.

An expiration date represents an expiration date necessary for an authentication technique the allotment for which is applied with this key allotment application.

An SP-ID represents an identification number of the service provider terminal 13 (service provider SP), and is agreed upon beforehand by the service provider terminal 13 (service provider SP) at the time the service provider concludes a contract with the key allotter terminal 12 (key allotter KA).

A message authentication code represents a code generated for the key allotment application data utilizing the service provider unique cryptographic key, and prevents tampering of the key allotment application and proves that the key allotment application is generated by the service provider terminal 13 (service provider SP).

Returning to FIG. 95, when the key allotter terminal 12 receives the key allotment application, each of the key holding apparatus 22 and the key allotter terminal 12 performs a mutual authentication + key sharing process between the key holding apparatus 22 and the key allotter terminal 12 in step S322 (a "mutual authentication + key sharing process" on the key allotter terminal 12 side) or in step S304 (a "mutual authentication + key sharing process" on the key holding apparatus 22 side).

Note that each of steps S322 and S304 is basically similar to a respective one of the above-mentioned steps S22 and S14 of FIG. 27, and thus that a description thereof will be omitted.

At this stage, the key holding apparatus 22 and the key allotter terminal 12 share a temporary cryptographic key Kses.

And each of the key holding apparatus 22 and the key allotter terminal 12 executes step S323 (a "key holding apparatus user authentication process" on the key allotter terminal 12 side) or step S305 (a "user authentication response process" on the key holding apparatus 22 side).

Note that each of steps S323 and S305 is supposed to be basically similar to a respective one of the above-mentioned steps S23 and S15 of FIG. 27, and thus that a description thereof will be omitted.

At this stage, the key allotter terminal 12 can identify the user User (user terminal 21) who holds the key holding apparatus 22.

The key allotter terminal 12 generates a new key for sending to the key holding apparatus 22 in step 324.

Specifically, for instance, the key allotter terminal 12 decides an identification number KID of an authentication technique to be allotted to the key holding apparatus 22 so as not to be duplicate with previous one(s), and newly generates a pair (Kpr, Kpub) of a private key and a public key of the public key cryptography from a random number by an appropriate method. That is, this pair of keys (Kpr, Kpub) is supposed to be the new keys and used as a certifying key and a verifying key of the authentication technique to be newly allotted.

And the key allotter terminal 12 sends the identification number KID and the certifying key Kpr to the key holding apparatus 22. More specifically, the key allotter terminal 12 sends the identification number KID and the certifying key Kpr to the key holding apparatus 22 as encrypted data E(Kses, KID||Kpr), using the temporary key shared with the key holding apparatus 22.

The key holding apparatus 22 receives the new key in step S306.

Specifically, the key holding apparatus 22 receives the encrypted data E(Kses, KID||Kpr), and decrypts the identification number KID and the certifying key Kpr. And it adds a new record to the certifying key table of FIG. 87 held by the key holding apparatus 22.

And the key allotter terminal 12 generates a key allotment report for sending to the key holding apparatus 22 in step S325.

At the same time, the key allotter terminal 12 adds (leaving the part for document of title empty) to the key allotment table of FIG. 73, a record configured of the identification number KID of the authentication technique allotted, the certifying key Kpr, the verifying key Kpub, the identification number Acc-ID of the other allotted user, the SP-ID of the service provider to whom allotment is applied for, the expiration date, and the identification number HWID of the allotted key holding apparatus.

FIG. 80 represents an example of the key allotment report.

In the key allotment report of FIG. 80, a Key-ID represents an identification number of the allotted authentication technique.

An application ID represents an identification number of the key allotment application with which the current allotment of the authentication technique is requested.

An expiration date represents an expiration date for the allotted authentication technique.

A verifying key represents a verifying key of the allotted authentication technique.

A message authentication code represents a code generated to the key allotment report data by utilizing the unique cryptographic key of the service provider terminal 13 (service provider SP) (unique cryptographic key obtained from the service provider table of FIG. 74), and prevents tampering of the key allotment report and proves that the key allotment report is generated by the key allotter terminal 12 (key allotter KA).

Returning to FIG. 95, the key holding apparatus 22 receives this key allotment report for sending to the service provider terminal 13 in step S307. Note that this key allotment reporter may be directly sent from the key allotter terminal 12 to the service provider terminal 13.

The service provider terminal 13 receives the key allotment report in step S343. And the service provider terminal 13 verifies the message authentication code of the key allotter in the key allotment report.

When succeeding in the authentication, the service provider terminal 13 generates the document of title of FIG. 78 for sending to the key holding apparatus 22 in step S344.

At this time, the key holding apparatus 22 adds the identification number Key-ID of the authentication technique and the document of title as a new record to the authentication information of FIG. 88. Note that the service provider terminal 13 may send the document of title directly to each of the key allotter terminal 12 and the user terminal 12.

The key allotter terminal 12 receives the document of title, and bills the user User (user terminal 21).

Specifically, the key allotter terminal 12, after checking that the digital signature on the received document of title is generated by the service provider terminal 13 (service provider SP) , adds the document of title to the part for document of title in the record of the key allotment table of FIG. 73 (the part for document of title left empty) generated in the above-mentioned step S325.

And the key allotter terminal 12 bills the user User (user terminal 21) identified in the above-mentioned step S323 so as to correspond with the service content in the document of title and total of commissions for the key allotment.

Returning to FIG. 23, after step S1 (the "service selection/key allotment process") is completed in the above way, the "key use/service provision process" is executed in step S2.

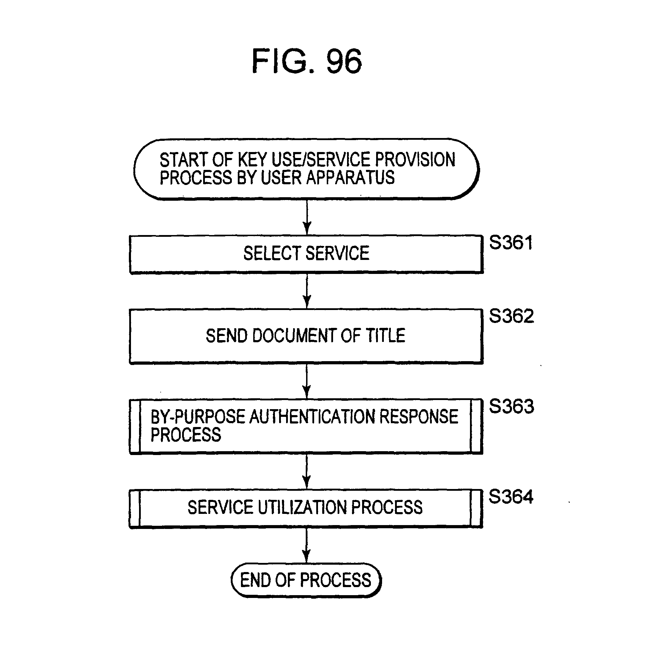

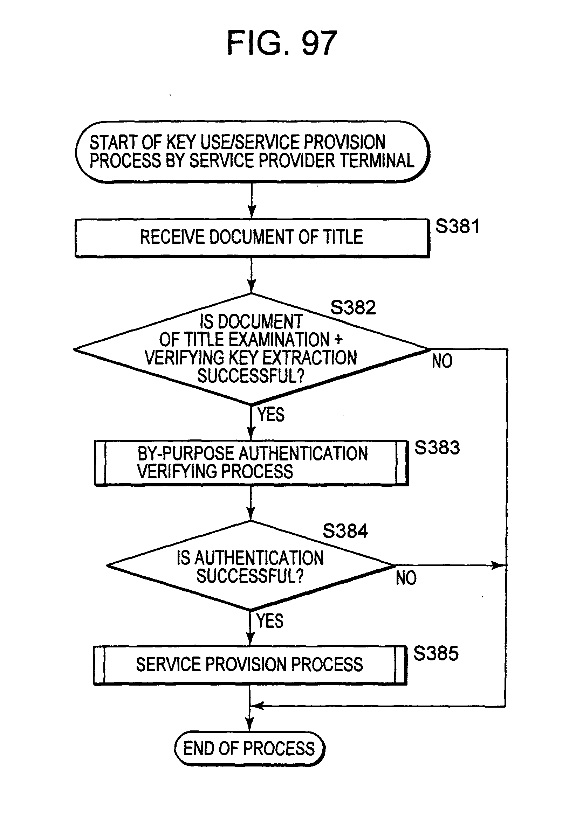

Details of a "key use/service provision process" in the third embodiment are shown in flowcharts of FIGS. 96 and 97. Referring thus to the flowcharts of FIGS. 96 and 97, the "key use/service provision process" in the third embodiment will be described.

FIG. 96 represents a "key use/service provision process" by the user terminal 11 (FIG. 72). FIG. 97 represents a "key use/service provision process" by the service provider terminal 13 (FIG. 72).

Referring first to FIG. 96, the "key use/service provision process" by the user terminal 11 will be described.

The key holding apparatus 22 (specifically the CPU 51 (FIG. 16)) selects a service in step 361.

For instance, in this example, the key holding apparatus 22 displays service content included in documents of title included in the authentication information table of FIG. 88 held by itself on the display (the output section 37 of FIG. 15) of the user terminal 21 to allow the user User to select a record corresponding to a service which the user wishes to utilize, whereby it selects a service.

The key holding apparatus 22 sends the document of title (document of title of the selected record in the authentication information table of FIG. 88) corresponding to the selected service to the service provider terminal 13 in step S362. Note that in this example, the sending address is supposed to be included in the service content of the document of title.

As will be described later, the service provider terminal 13 receives the document of title. And the service provider terminal 13 examines the document of title. This examination involves determination as to whether or not the document of title is correct in terms of the format of FIG. 78, verification of the digital signature, and determination as to whether the Key-ID of the document of title is not included in the invalidation key table of FIG. 83. If succeeding in the examination of all of these items, the service provider terminal 13 obtains the service to be provided and an authentication method (verifying key) from the document of title. Such a series of processing will hereinafter be called as a "document of title examination + verifying key extraction".

When succeeding in the "document of title examination + verifying key extraction", the service provider terminal 13 executes a "by-purpose authentication verification process" (steps S381 to S383 of FIG. 97).

At this time, the key holding apparatus 22 executes a "by-purpose authentication response process" corresponding to the "by-purpose authentication verification process" in step S363.

That is, authentication is performed by the allotted authentication technique between the key holding apparatus 22 (user User) and the service provider terminal 13 (service provider SP).

Each of step S363 (the "by-purpose authentication response process") and step S383 of FIG. 97 (by-purpose authentication verification process)) is supposed to be basically similar to a respective one of the above-mentioned step S203 of FIG. 68 and step S223 of FIG. 59, and thus that a description thereof will be omitted. Note that as mentioned above, there could be two types of authentication methods based on the allotted authentication technique: a method in which a temporary cryptographic key Kses is shared and a method in which such a key is not shared.

That is, authentication is performed by the allotted authentication technique between the key holding apparatus 22 and the service provider terminal 13 (service provider SP) .

The key holding apparatus 22 executes the above-mentioned "service utilization process" corresponding to FIG 34 or 35 in step S364.

Referring next to FIG. 97, the key use/service provision process" by the service provider terminal 13 will be described.

As mentioned above, the key holding apparatus 22 selects a service in step S361 of FIG. 96, and sends the document of title to the service provider terminal 13 in step S362.

At this time, the service provider terminal 13 (specifically the CPU 101 (FIG. 19)) receives the document of title in step S381.

And the service provider terminal 13 executes a "document of title examination + verifying key extraction" process in step S382, to determine whether or not the "document of title examination + verifying key extraction" is successful.

If it is determined in step S382 that the "document of title examination + verifying key extraction" fails (it is determined as not being successful), the process is brought to an end.

On the other hand, if it is determined in step S382 that the "document of title examination + verifying key extraction" is successful, the above-mentioned "by-purpose authentication verification process" is executed in step S383.

The service provider terminal 13 determines whether or not the authentication is successful, and if it determines that the authentication fails (is not successful), it ends the process in step S384.

On the other hand, if it determines in step S384 that the authentication is successful, the service provider terminal 13 executes the above-mentioned "service provision process" corresponding to FIG. 34 or 35 in step S385.

Returning to FIG. 23, after step S2 (the "key use/service provision process) ends in the above way, step S6 (a "key deletion process") or step S7 (a "key use termination process") is executed, as necessary.

Step S6 (the "key deletion process") to which the third embodiment is applied is similar to the above-mentioned "key deletion process" to which the first embodiment is applied. That is, the "key deletion process" is executed according to any of the above-mentioned flowcharts of FIGS. 37 to 39.

Provided that, in the third embodiment, objects for deletion are supposed to be the key allotment table of FIG. 73 in the case of the key allotter terminal 12, the authentication information table of FIG. 81 and the invalidation key table of FIG. 83 in the case of the service provider terminal 13, and the authentication information table of FIG. 88 and the certifying key table of FIG. 87 in the case of the key holding apparatus 22.

Step S7 (the "key use termination process") to which the third embodiment is applied is similar to the above-mentioned "key use termination process" to which the second embodiment is applied. That is, the "key use termination process" is executed according to the above-mentioned flowcharts of FIGS. 40 and 41.

Further, the key use termination request generated by the key allotter terminal 12 and sent to the service provider terminal 13 in step S161 of FIG. 40 is supposed to have the format of FIG. 42 in a manner similar to the first embodiment.

In this way, in the authentication key allotment system 301 to which the third embodiment is applied, the authentication technique to be allotted is supposed to be the public key authentication system, and thus the steps (steps S381 to S384 of FIG. 97) prior to the "service utilization process (step S364 of FIG. 96)" and the "service provision process (step S385 of FIG. 97)" of the "key use/service provision process" can be executed by an entity who is not the service provider SP (service provider terminal 13) . As a result, for instance, the user User himself having the key holding apparatus 22 can verify, with the key holding apparatus 22 held by himself, whether or not authentication by the allotted authentication technique for utilizing a service is successful, whereby an advantage is obtained that the user can feel secure.

Further, as compared with the second embodiment, authentication requires only one certificate, whereby an advantage is obtained that data volume and processing time can be reduced.

### (Fourth Embodiment)

A configuration of an authentication key allotment system to which the fourth embodiment of the present invention is applied is similar to the configuration of FIG. 72, and thus a description thereof will be omitted. Therefore, FIG. 72 is also cited as the configuration of the authentication key allotment system to which the fourth embodiment of the present invention is applied.

In the fourth embodiment, the key allotter AP (key allotter terminal 12) generates digital signatures verifiable by the public key authentication infrastructure, and the user User (key holding apparatus 22) is authenticated by the general-purpose account system. An example in which an authentication technique for the public key authentication is newly allotted in this case will be described.

Note that the user User (key holding apparatus 22) and the service provider SP (service provider terminal 13) know the invalidation status of a certificate of the key allotter terminal 12 (key allotter KA) beforehand (periodically collect related CRL).

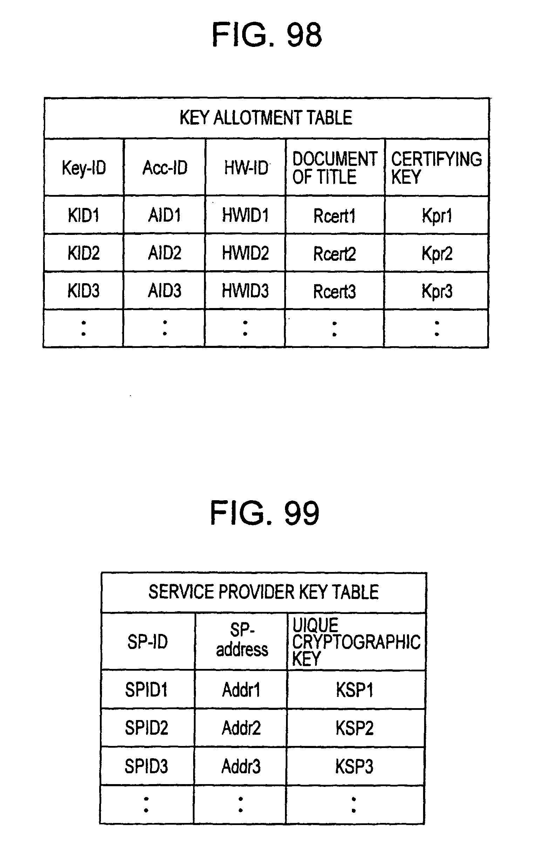

FIGS. 98 to 102 represent examples of data held by the key allotter terminal 12.

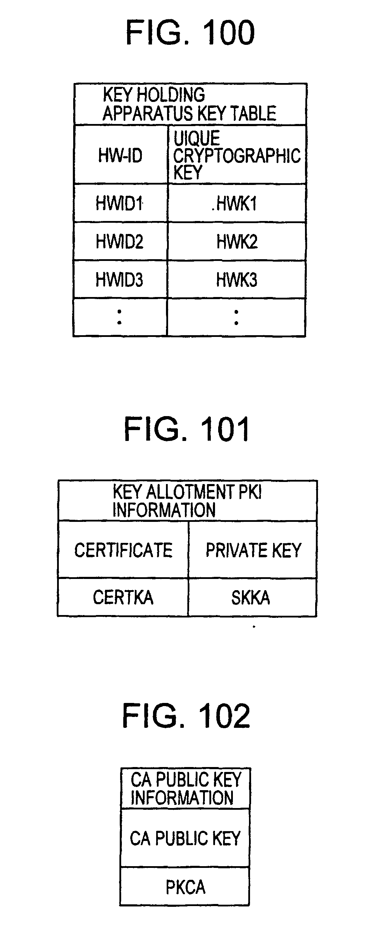

That is, in this example, for instance, in the memory (the storage section 88 or the like of FIG. 18) of the key allotter terminal 12, a key allotment table such as shown in FIG. 98, a service provider key table such as shown in FIG. 99, a key holding apparatus key table such as shown in FIG. 100, key allotter PKI information such as shown in FIG. 101, and CA public key information such as shown in FIG. 102 are stored.

In this example, for instance, each of the key allotment table of FIG. 98, the service provider key table of FIG. 99, and the key holding apparatus key table of FIG. 100 is implemented as a database retrievable by the corresponding Key-ID, SP-ID or HW-ID.

In the key allotment table of FIG. 98, a record in each row corresponds to an authentication technique on which allotment is performed.

The Key-ID represents an identification number of the allotted authentication technique, and is assigned to be unique.

An Acc-ID represents an identification number under the general-purpose account of the user User (user terminal 21) who pays when the authentication technique is allotted.

An HW-ID represents an identification number of the key holding apparatus 22 to which the authentication technique is allotted.

A certifying key represents a certifying key (private key for the public key cryptography) of the allotted authentication technique.

A document of title represents data generated by the service provider terminal 13 (service provider SP) to prove a service to be provided thereby, when key allotment is performed.

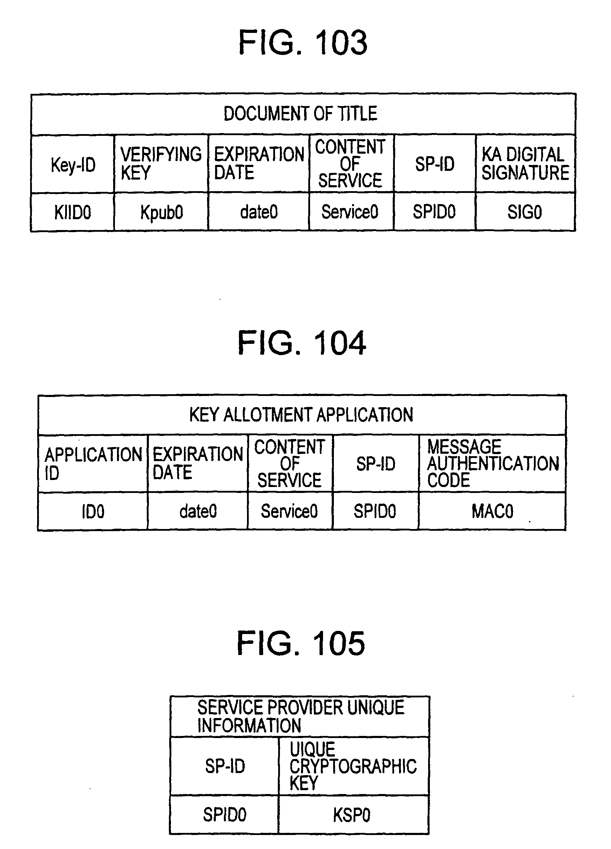

FIG. 103 represents an example of the document of title.

In the document of title of FIG. 103, each of a Key-ID, a verifying key, and an expiration date represents a respective one of an identification number, a verifying key, and an expiration date for an authentication technique used at the time of service provision.

Service content represents the content of a service provided to a user User (user terminal 21) (having the key holding apparatus 22) to be authenticated by an authentication technique having the Key-ID.

An SP-ID represents an identification number of the service provider terminal 13 (service provider SP) who provides the service, and is assigned to the service provider terminal 13 (service provider SP) so as to be unique at the time the service provider concludes a contract with the key allotter terminal 12 (key allotter KA).

A KA digital signature represents a digital signature generated for the entire data in the document of title by the key allotter.

Since each of the service provider key table of FIG. 99, the key holding apparatus table of FIG. 100, and the key allotter PKI information of FIG. 101 is supposed to have the same configuration as a respective one of the service provider key table of FIG. 47, the key holding apparatus key table of FIG. 48, and the key allotter PKI information of FIG. 49, a description thereof will be omitted.

Since the CA public key information of FIG. 102 is supposed to have the same configuration as the CA public key information of FIG. 50, a description thereof will be omitted.

FIG. 104 represents an exemplary configuration of a key allotment application generated by the service provider terminal 13. A description thereof will be given later.

FIGS. 105 to 108 represent examples of data held by the service provider terminal 13.

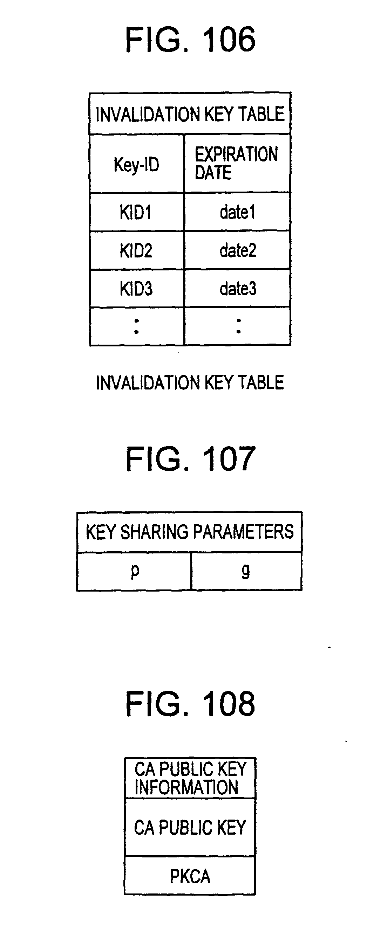

That is, in this example, for instance, in the memory (the storage section 108 or the like of FIG. 19) of the service provider terminal 13, service provider unique information such as shown in FIG. 105, an invalidation key table such as shown in FIG. 106, key sharing parameters such as shown in FIG. 107, and CA public key information such as shown in FIG. 108 are stored.

In this example, for instance, the invalidation key table of FIG. 106 is implemented as a database retrievable by a Key-ID.

Since each of the service provider unique information of FIG. 105, the invalidation key table of FIG. 106, the key sharing parameters of FIG. 107 is supposed to have the same configuration as a respective one of the service provider unique information of FIG. 82, the invalidation key table of FIG. 83, the key sharing parameters of FIG. 83, a description thereof will be omitted.

Since the CA public key information of FIG. 108 is supposed to have the same configuration as the CA publican key information of FIG. 50, a description will be omitted.

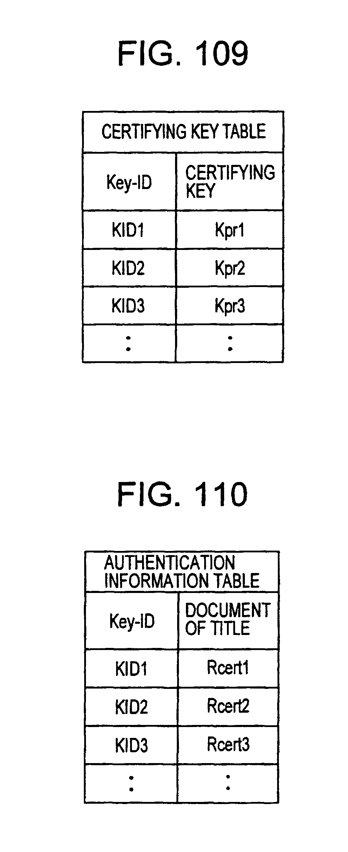

FIGS. 109 to 113 represent examples of data held by the key holding apparatus 22 or the IC card 23 (user User).

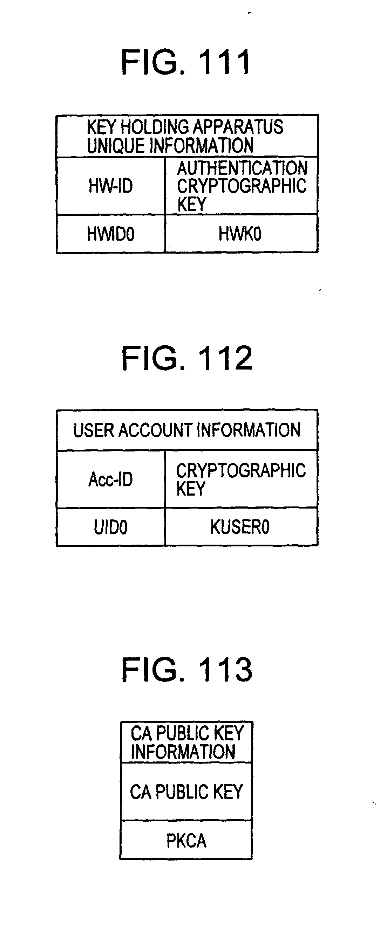

That is, in this example, for instance, in the data storage section 53 or the key storage section 54 (FIG. 16) of the key holding apparatus 22, or in the storage section 71 of the IC card 23, a certifying key table such as shown in FIG. 109, an authentication information table such as shown in FIG. 110, key holding apparatus unique information such as shown in FIG. 111, user count information such as shown in FIG. 112, and CA public key information such as shown in FIG. 113 are stored.

Since each of the certifying key table of FIG. 109, the authentication information table of FIG. 110, the key holding apparatus unique information of FIG. 111, and the user count information of FIG. 112 is supposed to have the same configuration as a respective one of the certifying key table of FIG. 87, the authentication information table of FIG. 88, the key holding apparatus unique information of FIG. 89, and the user count information of FIG. 90, a description thereof will be omitted.

Since the CA public key information of FIG. 113 is supposed to have the same configuration as the CA public key information of FIG. 50, a description thereof will be omitted.

For instance, the key storage section 54 of FIG. 16 holds the certifying key table of FIG. 109 and the key holding apparatus unique information of FIG. 111. The data storage section 53 holds the authentication information table of FIG. 110 and the CA public key information of FIG. 113. The data management section 55 adds or deletes the content of data held on the key storage section 54 and the data storage section 53 according to information sent from the key allotter terminal 12 (key allotter KA), and the expiration dates for documents of title in the authentication information table of FIG. 110 held on the data storage section 53.

The user count information of FIG. 112 is held on the IC card 23 (the storage section 71 (FIG. 17)) connected to the key holding apparatus 22. In this example, the key holding apparatus 22 can request the IC card 23 to perform encryption, calculation for decryption, and provision of certificates utilizing the user count information of FIG. 112, if the IC card 23 is connected to its authentication processing section 58 (FIG. 16).

In the memory (the storage section 128 or the like of FIG. 20) of the account manager terminal 15 of FIG. 72, information similar to that held by the account manager terminal 15 of FIG. 4, i.e., the account management table of FIG. 21, and the account manager unique key of FIG. 22 are stored.

In the memory (the storage section 228 or the like of FIG. 45) of the authentication center terminal 211 of FIG. 72, information similar to the information held by the authentication center terminal 211 of FIG. 44, i.e., the certificate table of FIG. 64 and the CA public key of FIG. 65 are stored.

Provided that, the entity involved in the public key authentication infrastructure, corresponding to the identification number represented by the Acc-ID in the certificate table of FIG. 64 is supposed to be only the key allotter terminal 12 (key allotter KA) in the fourth embodiment.

Next, an operation of the authentication key allotment system 301 to which the fourth embodiment of the present invention is applied will be described.

An outline of the operation of the authentication key allotment system 301 is basically similar to that of that (and the authentication key allotment system 1 to which the first embodiment of the present invention is applied and the authentication key allotment system 201 to which the second embodiment of the present invention is applied).

Therefore, the operation of the authentication key allotment system 301 to which the fourth embodiment of the present invention is applied will also be described with reference to the flowchart of FIG. 23.

First, a "service selection/key allotment process" is executed in step S1.

The "service selection/key allotment process" in the fourth embodiment is supposed to be basically similar to that of the third embodiment, but differs therefrom slightly.

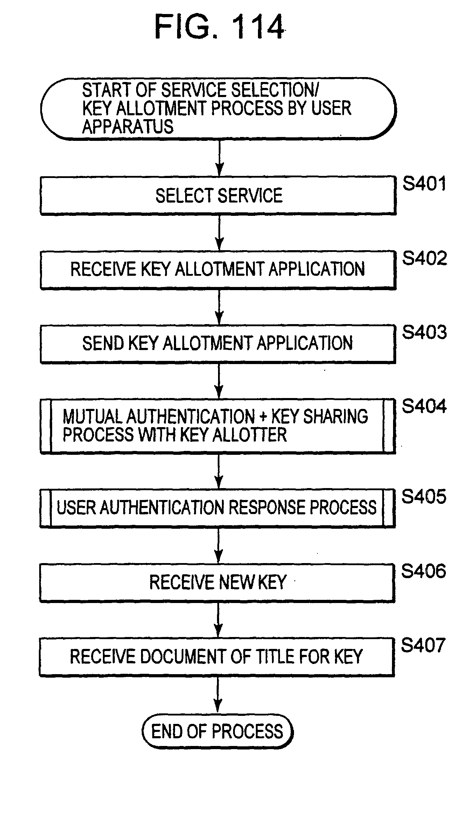

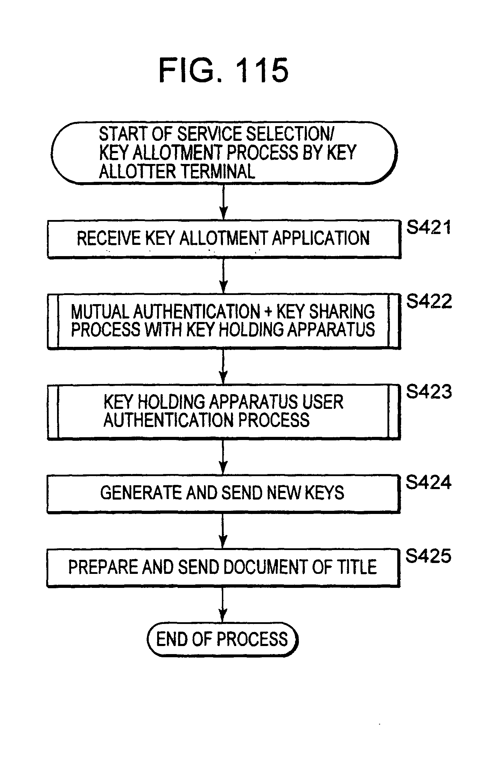

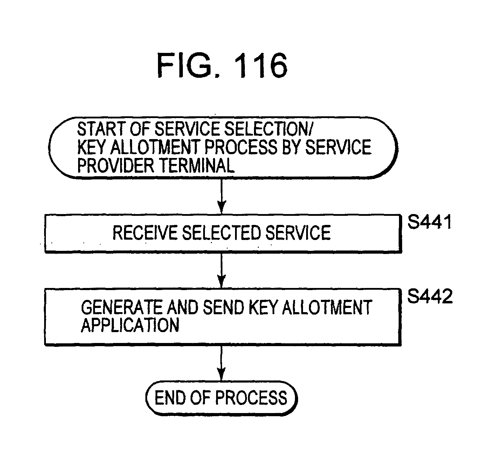

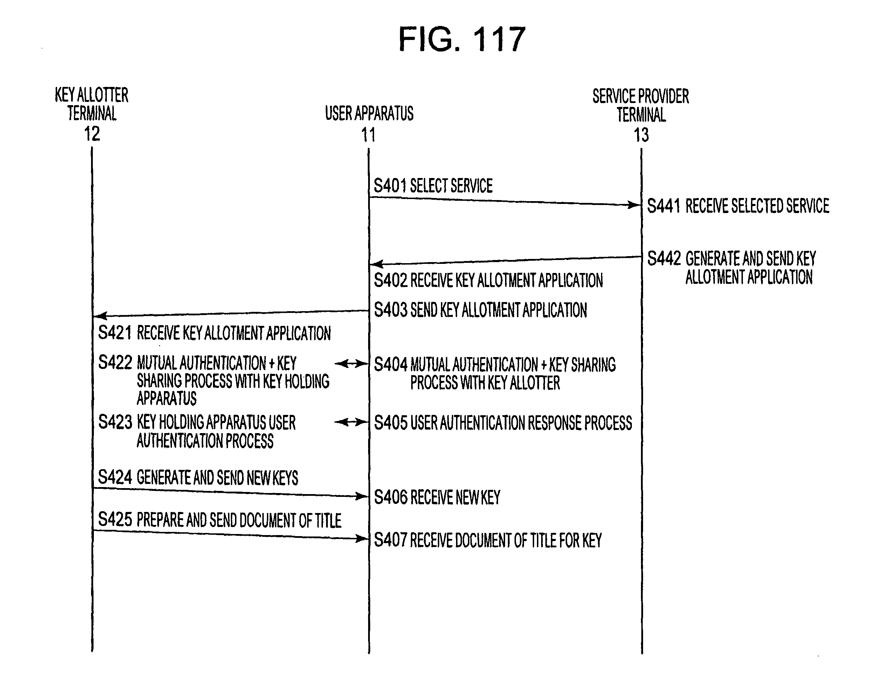

Details of such "service selection/key allotment process" in the fourth embodiment are shown in flowcharts of FIG. 114 to 116 and an arrow chart of FIG. 117. The flowcharts of FIGS. 114 to 116 represent "service selection/key allotment processes" by the respective apparatuses shown in the arrow chart of FIG. 117. That is, FIG. 114 represents the "service selection/key allotment process" by the user apparatus 11 (FIG. 72), FIG. 115 represents the "service selection/key allotment process" by the key allotter terminal 12 (FIG. 72), and FIG. 116 represents the "service selection/key allotment process" by the service provider terminal 13 (FIG. 72).

Therefore, referring to the arrow chart of FIG. 117, steps different from those of the third embodiment (or the first or second embodiment) will mainly be described below, while omitting here the descriptions of the steps described in the third embodiment, as appropriate.

In FIG. 117, first, the user terminal 21 (user apparatus 11) selects a service (selected service) , and sends it to the service provider terminal 13 in step S401.

The service provider terminal 13 receives the selected service in step S441, and generates a key allotment application for sending to the key holding apparatus 22 in step S442.

The key holding apparatus 22 (user apparatus 11) receives and holds this temporarily in step S403, and at the same time, sends it to the key allotter terminal 12 in step S402.

When receiving the key allotment application, the key allotter terminal 12 verifies a message authentication code of the service provider terminal 13 (service provider SP) in the key allotment application in step S421.

FIG. 104 represents an example of such a key allotment application.

In the key allotment application of FIG. 104, an application ID represents an identification number of the key allotment application added so as to be unique to the service provider terminal 13 (service provider SP) who issues this key allotment application.

An expiration date represents an expiration date necessary for an authentication technique the allotment for which is applied with this key allotment application.

Service content represents the content of a service which is planned.to be provided by the service provider terminal 13 (service provider SP) to a user User (user terminal 21) to whom key allotment will be performed.

An SP-ID represents an identification number of the service provider terminal 13 (service provider SP), and is agreed upon beforehand by the service provider terminal 13 (service provider SP) at the time the service provider concludes a contract with the key allotter terminal 12 (key allotter KA).

A message authentication code represents a code generated for the key allotment application data by utilizing the service provider unique cryptographic key, and prevents tampering of the key allotment application and proves that the key allotment application is generated by the service provider terminal 13 (service provider SP).

Returning to FIG. 117, when the key allotter terminal 12 receives the key allotment application, each of the key holding apparatus 22 and the key allotter terminal 12 perform a mutual authentication + key sharing process between the key holding apparatus 22 and the key allotter terminal 12 in step S422 (a "mutual authentication + key sharing process" on the key allotter terminal 12 side) or in step S404 (a "mutual authentication + key sharing process" on the key holding apparatus 22 side).

Note that each of steps S422 and S404 is supposed to be basically similar to a respective one of the above-mentioned steps S22 and S14 of FIG. 27, and thus that a description thereof will be omitted.

At this stage, the key holding apparatus 22 and the key allotter terminal 12 share a temporary cryptographic key Kses.

And each of the key holding apparatus 22 and the key allotter terminal 12 executes step S423 (a "key holding apparatus user authentication process" on the key allotter terminal 12 side) or step S405 (a "user authentication response process" on the key holding apparatus 22 side).

Note that each of steps S423 and S405 is supposed to be basically similar to a respective one of the above-mentioned steps S23 and S15 of FIG. 27, and thus that a description thereof will be omitted.

At this stage, the key allotter terminal 12 can identify the user User (user terminal 21) who holds the key holding apparatus 22.

The key allotter terminal 12 generates new keys for sending to the key holding apparatus 22 in step 424.

Specifically, the key allotter terminal 12 decides an identification number KID of an authentication technique to be allotted to the key holding apparatus 22 so as not to be duplicate with previous one(s) similarly to the above-mentioned third embodiment, and newly generates a pair (Kpr, Kpub) of a private key and a public key for the public key cryptography from a random number in an appropriate way. That is, this pair of keys (Kpr, Kpub) is supposed to be the new keys and used as a certifying key and a verifying key of the authentication technique to be newly allotted.

And the key allotter terminal 12 sends the identification number KID and the certifying key Kpr to the key holding apparatus 22. More specifically, the key allotter terminal 12 sends the identification number KID and the certifying key Kpr to the key holding apparatus 22 as encrypted data E (Kses, KID|| Kpr) , by using the temporary key shared with the key holding apparatus 22.

The key holding apparatus 22 receives the new key in step S406.

Specifically, the key holding apparatus 22 receives the encrypted data E(Kses, KID||Kpr), and decrypts the identification number KID and the certifying key Kpr. And it adds a new record to the certifying key table of FIG. 109 held by the key holding apparatus 22.

And the key allotter terminal 12 generates a document of title for sending to the key holding apparatus 22 in step S425.

That is, although the key allotter terminal 12 generates the key allotment report of FIG. 80 in the third embodiment (in the example of FIG. 95), it generates the document of title of FIG. 103 in the fourth embodiment (in the example of FIG. 117).

At this time, the key allotter terminal 12 adds to the key allotment table of FIG. 98, a record configured of the identification number KID of the authentication technique on which it performs allotment, the identification number Acc-ID of the allotted user, the identification number HWID of the allotted key holding apparatus, the document of title Rcert, and the certifying key Kpr. Further, the key allotter terminal 12 bills the user User (user terminal 21) identified in step S423 so as to correspond with the content of the service in the document of title and the total of commissions for the key allotment.

The key holding apparatus 22 receives the document of title in step S407.

And the key holding apparatus 22, after checking that the digital signature is generated by the key allotter terminal 12 (key allotter KA), on the received document of title, adds to the authentication information table of FIG. 110 a new record configured of the identification number KID included in the document of title and the document of title.

Returning to FIG. 23, after step S1 (the "service selection/key allotment process") ends in the above way, a "key use/service provision process" is executed in step S2.

A flow of the "key use/service provision process" in the fourth embodiment is basically similar to that of the third embodiment. That is, the "key use/service provision process" in the fourth embodiment is also executed according to the flowcharts of FIGS. 96 and 97.

Provided that, in the fourth embodiment, a document of title examination (examination performed on the document of title received by the service provider terminal 13 in step S381 of FIG. 97) is supposed to involve determination as to whether or not the document of title is correct in terms of the format of FIG. 103, verification of the digital signature, and inclusion or not of the Key-ID of the sent document of title in the invalidation key table of FIG. 106.

Returning to FIG. 23, after step S2 (the "key use/service provision process) ends, step 56 (a "key deletion process") or step S7 (a "key use termination process") is executed.

Step S6 (the "key deletion process") to which the fourth embodiment is applied is similar to the above-mentioned "key deletion process" to which the first embodiment is applied. That is, the "key deletion process" is executed according to any of the above-mentioned flowcharts of FIGS. 37 to 39.

Provided that, in the fourth embodiment, objects for deletion are supposed to be the key allotment table of FIG. 98 in the case of the key allotter terminal 12, the invalidation key table of FIG. 106 in the case of the service provider terminal 13, the authentication information table of FIG. 110 and the certifying key table of FIG. 109 in the case of the key holding apparatus 22.

Step S7 (the "key use termination process") to which the fourth embodiment is applied is similar to the above-mentioned "key use termination process" to which the second embodiment is applied. That is, the "key use termination process" is executed according to the above-mentioned flowcharts of FIGS. 40 and 41.

Provided that, in the "key user termination process" in the fourth embodiment, the service provider terminal 13 does not hold a table corresponding to the authentication information table of FIG. 53 in the second embodiment, and thus the process of deleting a record from the authentication information table will be omitted.

Further, the key use termination request generated by the key allotter terminal 12 and sent to the service provider terminal 13 in step S161 of FIG. 40 is supposed to have the format of FIG. 42 in the similarly first embodiment, whereas it may be either format of FIG. 42 or 43 in the fourth embodiment.

In this way, in the authentication key allotment system 301 to which the fourth embodiment is applied, the authentication technique to be allotted is supposed to be the public key authentication system, and thus the steps (steps S381 to S384 of FIG. 97) prior to the "service utilization process (step S364 of FIG. 96)" and the "service provision process (step S385 of FIG. 97)" of the "key use/service provision process" can be executed by an entity who is not the service provider SP (service provider terminal 13). As a result, the user User having the key holding apparatus 22 can verify by himself, with the key holding apparatus 22 held by himself, whether or not authentication by the allotted authentication technique for utilizing a service is successful, whereby an advantage is obtained that the user can feel secure.

Further, as compared with the third embodiment, an advantage can be obtained that the number of communication sessions required at the time of key allotment can be reduced. In the foregoing, the authentication key allotment systems to which the present invention is applied are described by division into the first to fourth embodiments. These authentication key allotment systems can provide advantages such as shown in items (1) to (6) below.
(1) It is arranged such that an exclusive authentication technique is allotted between two parties who require authentication to perform the authentication directly between the two parties, whereby the authentication can be performed efficiently compared to a method dependent on the authentication center such as the Kerberos system.
(2) It is arranged such that an exclusive authentication technique is allotted between two parties. Thus, even when the authentication technique needs to be revoked, the other party to be notified thereabout can be identified unlike in a case where only one authentication technique is used among an indefinite number of people such as in the public key authentication infrastructure. Consequently, the invalidation can be performed efficiently.
(3) It is arranged such that when an exclusive authentication technique is allotted between two parties, its intended use is fixed. Thus, the authenticating party does not have to directly identify the authenticated party thereby to limit services to be provided by each individual authentication technique. Consequently, damage can be suppressed when the authentication technique is abused, and the anonymity of the authenticated party can also be protected.
(4) It is arranged such that a user must be identified for billing purposes only when an exclusive authentication technique is allotted between two parties, and the user no longer have to be identified thereafter whenever using the authentication technique. This can help the user feel secure.
(5) A service provider no longer has to manage the content of a service to be provided and authentication means when the public key authentication is used as an authentication technique to be allotted between two parties.
(6) It is arranged such that a user can check an authentication technique allotted to the key holding apparatus by himself when the public key authentication is used as the authentication technique to be allotted between two parties. This permits the user to feel more secure.

### (Fifth Embodiment)

As mentioned above, the fifth embodiment is an embodiment corresponding to the second embodiment, and a configuration of an authentication key allotment system to which the fifth embodiment of the present invention is applied is similar to the configuration of FIG. 44, and thus a description thereof will be omitted. Therefore, FIG. 44 is also cited as the configuration of the authentication key allotment system to which the fifth embodiment of the present invention is applied.

By the way, in the second embodiment, the cryptographic keys for a new authentication technique are generated by the key allotter terminal 12, but in the fifth embodiment, the cryptographic keys for a new authentication technique are generated by the key holding apparatus 22 of the user apparatus 11.

Therefore, in the fifth embodiment, the key holding apparatus 22 further needs to have a function of generating cryptographic keys for a new authentication technique.

That is, also in the fifth embodiment, similar to the second embodiment, a pair of a private key and a public key for the public key cryptography (hereinafter called as a public key pair) (Kpr, Kpub) is used as the cryptographic keys for a new authentication technique. Therefore, the key holding apparatus 22 needs to further have a function of newly generating a public key pair (Kpr, Kpub) from a random number by, for instance, an appropriate method (methods are not particularly limited; a standard method is defined, for instance, in IEEE-P1363, and that method can be applied.)

Such a function is easily implementable also by the key holding apparatus 22 having the above-mentioned configuration of FIG. 16. In this case, the computation processing section 56 generates a random number utilizing software capable of generating random numbers, and generates a public key pair (Kpr, Kpub) from the generated random number for storage on the key storage section 54.

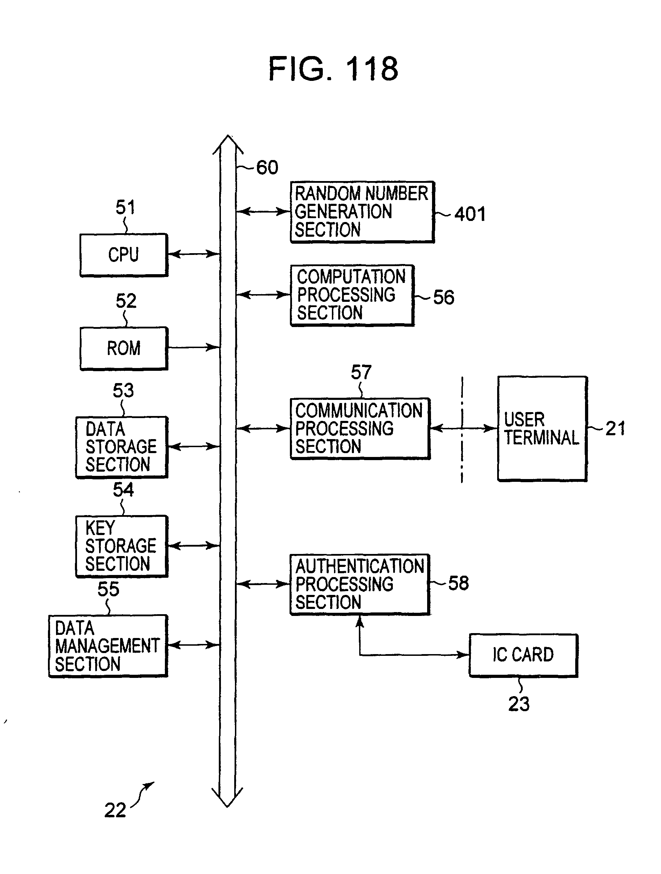

Such generation of a random number can also be executed by hardware. In this case, the key holding apparatus 22 is designed to have, for instance, the above-mentioned configuration shown in FIG. 118. That is, in the key holding apparatus 22 of FIG. 118, there is provided a random number generating section 401 as hardware, which can generate random numbers necessary for generating new cryptographic keys, further to that of FIG. 16.

Note that in the first to fourth embodiments, the descriptions are given on the assumption that the key allotter terminal 12 generates a random number utilizing software (the CPU 81 of FIG. 18 generates a random number) and that the cryptographic keys are generated based on that random number. However, the key allotter terminal 12 in the first to fourth embodiments can also be provided, of course, further with hardware (not shown) having a function and configuration basically similar to the random number generating section 401 to cause that hardware (hardware equivalent to the random number generating section 401) to generate random numbers, similarly to the key holding apparatus 22 of FIG. 118.

Each of the other apparatuses in the fifth embodiment, i.e., the user terminal 21, the IC card 23, the key allotter terminal 12, the service provider terminal 13, and the authentication center terminal 211 has a basically similar function and configuration to a respective one of the corresponding apparatuses of the second embodiment. Therefore, descriptions of the other apparatuses will be omitted.

Further, each of the apparatuses constituting the authentication key allotment system to which the fifth embodiment is applied has data basically similar to the data held by a respective one of the corresponding apparatuses of the second embodiment, but differ therefrom slightly.

Thus, data held by each of the apparatuses constituting the authentication key allotment system to which the fifth embodiment is applied will be described below.

That is, also in the fifth embodiment, the key allotter terminal 12 holds a service provider key table such as shown in FIG. 47 mentioned above, a key holding apparatus key table such as shown in FIG. 48 mentioned above, key allotter PKI information such as shown in FIG. 49 mentioned above, and CA public key information such as shown in FIG. 50 mentioned above.

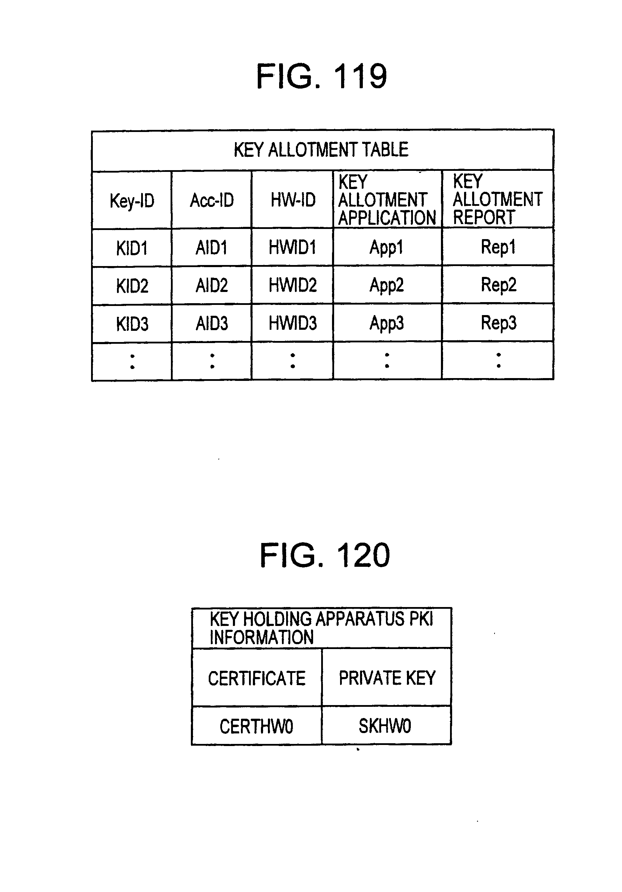

Provided that, in the fifth embodiment, a certifying key is generated by the key holding apparatus 22 kept by the user User, and thus the key allotter terminal 12 keeps a key allotment table such as shown in FIG. 119 (key allotment table not including an item for certifying key, as compared to the key allotment table of FIG. 46).

In the key allotment table of FIG. 119, each of a key allotment application and a key allotment report represents, similarly to the key allotment table of FIG. 46, a respective one of a key allotment application issued by the service provider terminal 13 (service provider SP) to whom allotment of the authentication technique corresponding to a record (row) is applied for, and a key allotment report therefor issued by the key allotter terminal 12 (key allotter KA).

That is, also in the fifth embodiment, for instance, each of the above-mentioned key allotment application shown in FIG. 51, and the above-mentioned key allotment report shown in FIG. 52 can be used.

The service provider terminal 13 keeps, also in the fifth embodiment, an authentication information table such as shown in FIG. 53 mentioned above, service provider unique information such as shown in FIG. 54 mentioned above, a invalidation key table such as shown in FIG. 55 mentioned above, service provider PKI information such as shown in FIG. 56 mentioned above, key sharing parameters such as shown in FIG. 57 mentioned above, and CA public key information such as shown in FIG. 58 mentioned above.

The key holding apparatus 22 or the IC card 23 (user User) keeps, also in the fifth embodiment, a certifying key table such as shown in FIG. 59 mentioned above, an authentication information table such as shown in FIG. 60 mentioned above, key holding apparatus unique information such as shown in FIG. 61 mentioned above, user PKI information such as shown in FIG. 62 mentioned above, and CA public key information such as shown in FIG. 63 mentioned above.

Furthermore, in the fifth embodiment, the key holding apparatus 22 keeps key holding apparatus PKI information such as shown in FIG. 120, as necessary.

The key holding apparatus PKI information of FIG. 120 represents information that allows the key holding apparatus 22 to generate digital signatures verifiable in the public key authentication infrastructure, and is configured of a certificate and a private key.

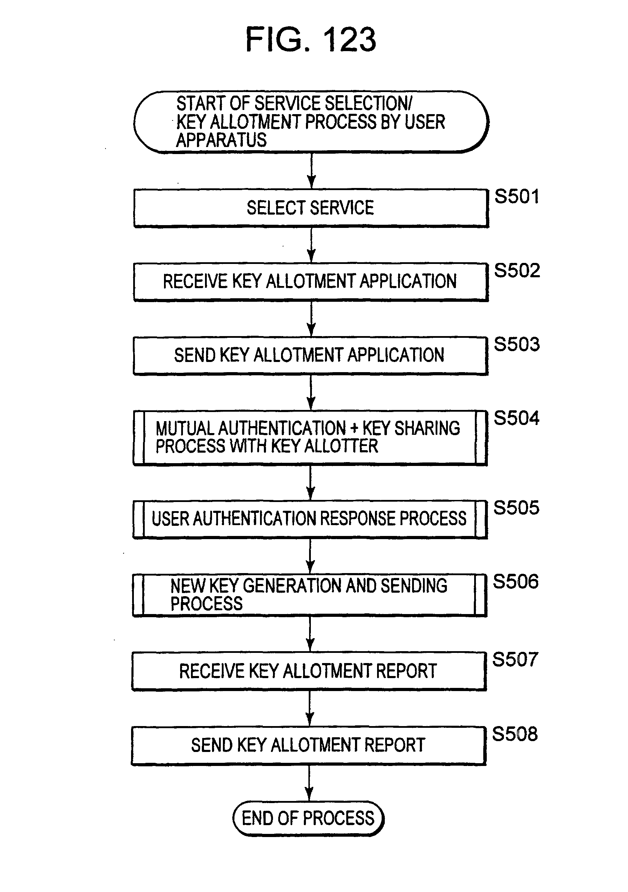

That is, when the key holding apparatus 22 performs mutual authentication with the key allotter terminal 12 using SSL (Secure Socket Layer) and TLS (Transport Layer) in a "mutual authentication + key sharing process with the key allotter" in step S504 of FIG. 123 to be described later, the key holding apparatus PKI information of FIG. 120 is utilized.

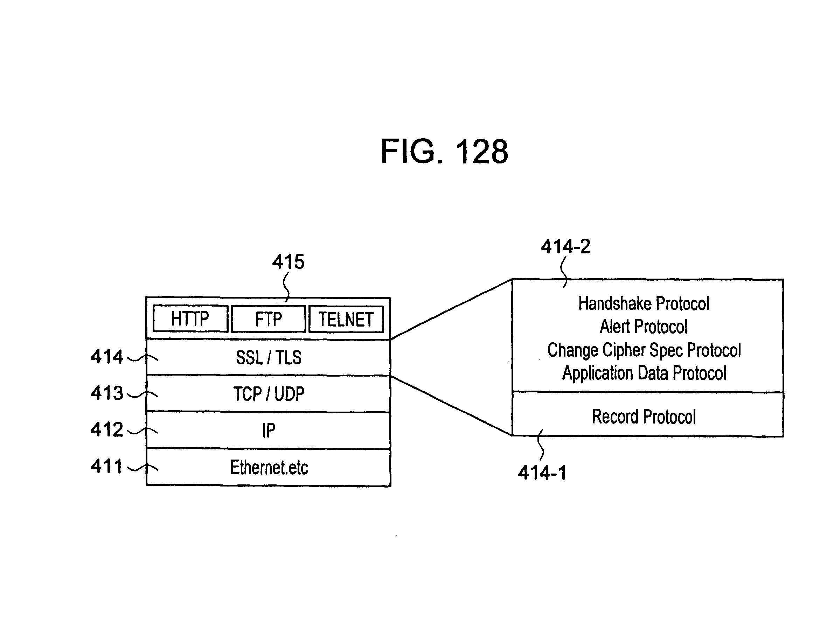

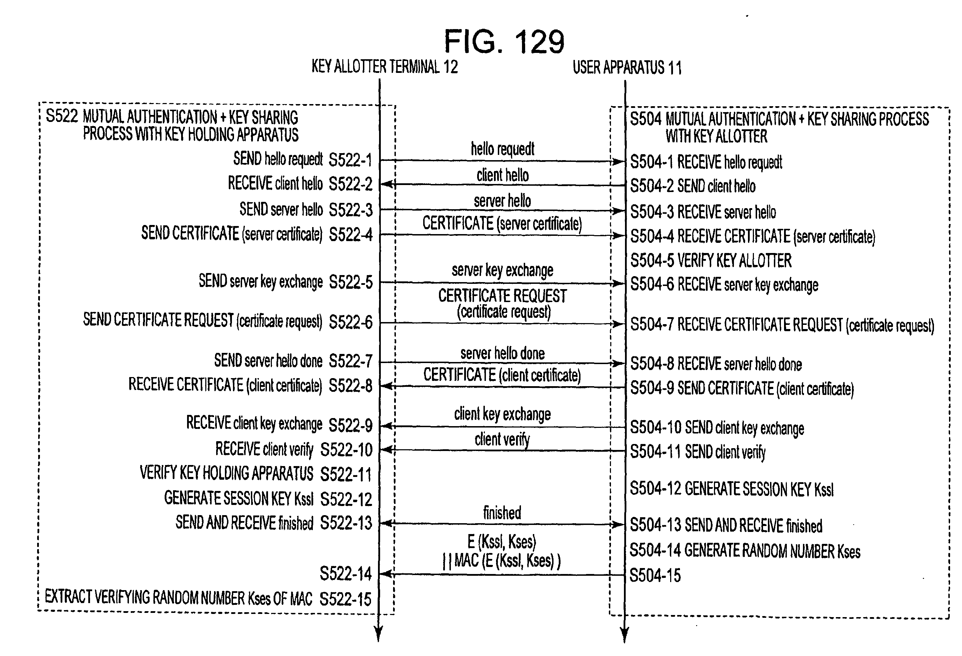

Note that details of the mutual authentication using SSL, TLS will be described later with reference to FIGS. 128 and 129.

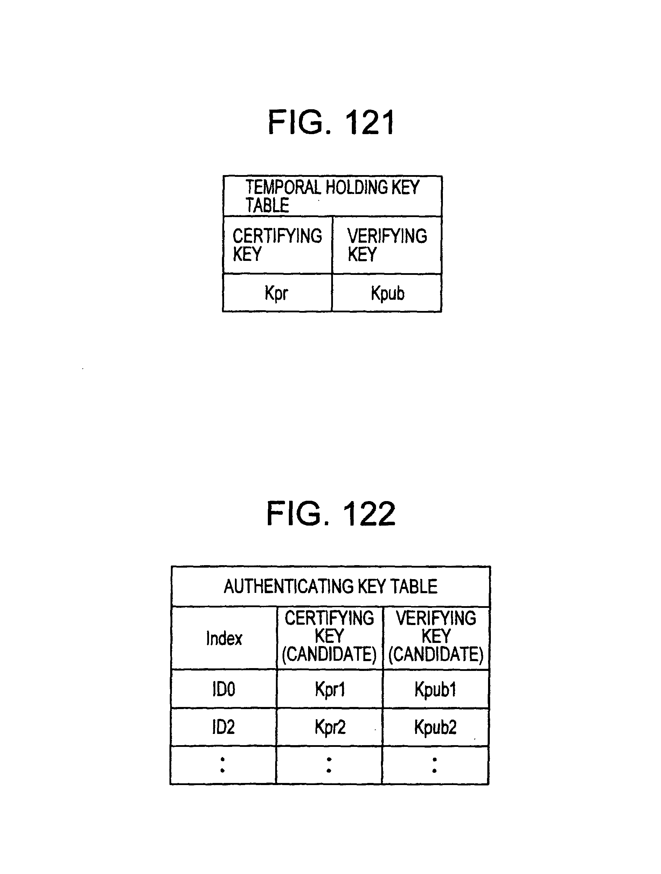

Further, in the fifth embodiment, the key holding apparatus 22 generates cryptographic keys (a certifying key and a verifying key to be paired therewith) by itself, and thus keeps a temporal holding key table shown in FIG. 121 in order to temporarily hold the generated cryptographic keys.

In detail, for instance, the key holding apparatus 22 generates the temporal holding key table of FIG. 121 (writes the generated cryptographic keys to a record in the temporal holding key table) and holds (keeps) the table the component of which is the generated cryptographic keys (a pair of cryptographic keys, which are a certifying key Kpr and a verifying key Kpub), when the cryptographic keys are generated on demand, i.e., the cryptographic keys are generated upon request for generating cryptographic keys (new keys) for a new authentication technique by the key allotter terminal 12.

Furthermore, the key holding apparatus 22 also keeps an authenticating key table such as shown in FIG. 122 if it holds a plurality of cryptographic key candidates beforehand. That is, the key holding apparatus 22 or another apparatus (not shown) different from the key holding apparatus 22 generates a plurality of cryptographic key candidates (public key pairs (Kprn, Kpubn) of certifying key (candidates) Kprn and verifying key (candidates) Kpubn (where n is the arbitrary integer value)) beforehand, and gives each of the generated plurality of cryptographic key candidates an Index (Idn). And the key holding apparatus 22 or another apparatus different from the key holding apparatus 22 writes the given plurality of Indexes (Idn) and the plurality of cryptographic key candidates (certifying key (candidates) Kprn and verifying key (candidates) Kpubn) corresponding thereto, to the corresponding records (rows) of the authenticating key table, respectively, whereby it generates the authenticating key table. That is, the authenticating key table is configured of an Index, a certifying key (candidate), and a verifying key (candidate).

In other words, in the authenticating key table of FIG. 122, as mentioned above, the cryptographic key candidates (the public key pairs (Kprn, Kpubn)) generated by the key holding apparatus 22 itself may be held, or the cryptographic key candidates (public key pairs (Kprn, Kpubn) ) generated by another apparatus different from the key holding apparatus 22 may be held. Alternatively, the cryptographic key candidates (the public key pairs (Kprn, Kpubn) ) generated by the key holding apparatus 22 itself, and the cryptographic key candidates (public key pairs (Kprn, Kpubn) ) generated by another apparatus different from the key holding apparatus 22 may be held as mixed.

The key holding apparatus 22 holds the thus generated authenticating key table of FIG. 122 beforehand, and extracts a predetermined one (public key pair (Kprk, Kpubk) (where k is a predetermined value of integers expressible by n) from the plurality of cryptographic key candidates (the public key pairs (Kprn, Kpubn) ) stored in the authenticating key table as new keys upon request for generating the cryptographic keys (new keys) for a new authentication technique by the key allotter terminal 12, whereby it generates the new keys.

And the key holding apparatus 22 generates and holds (keeps) the temporal holding key table of FIG. 121 the component of which is the extracted new keys (public key pair (Kprk, Kpubk)).

Note that when the key holding apparatus 22 generates new keys, much of its processing is executed by the computation processing section 56 within the key holding apparatus 22. Further, the temporal holding key table of FIG. 121 and the authenticating key table of FIG. 122 are held on the key storage section 54 (FIG. 16 or 118) within the key holding apparatus 22. Therefore, as mentioned above, at least the computation processing section 56 and the key storage section 54 may be made tamper-proof so that internally held or processed data thereof (in the current case, the new keys, or the temporal holding key table of FIG. 121 for holding the new keys or the authenticating key table of FIG. 122) will not be acquired or altered from outside.

The authentication center terminal 211 keeps, also in the fifth embodiment, a certificate table such as shown in FIG. 64 mentioned above, and CA key information such as shown in FIG. 65 mentioned above.

Further, the authentication center terminal 211 (authentication center CA) issues a certificate such as shown in FIG. 66.

Next, an operation of the authentication key allotment system 201 (FIG. 44) to which the fifth embodiment of the present invention is applied will be described.

An outline of the operation of the authentication key allotment system 201 in the fifth embodiment is basically similar to that of the second embodiment of the present invention.

Therefore, the operation of the authentication key allotment system 201 to which the fifth embodiment of the present invention is applied will be described with reference to the flowchart of FIG. 23, similarly to the description of the second embodiment.

First, a "service selection/key allotment process" is executed in step S1.

The "service selection/key allotment process" in the fifth embodiment is supposed to be basically similar to that of the second embodiment, but differs therefrom slightly.

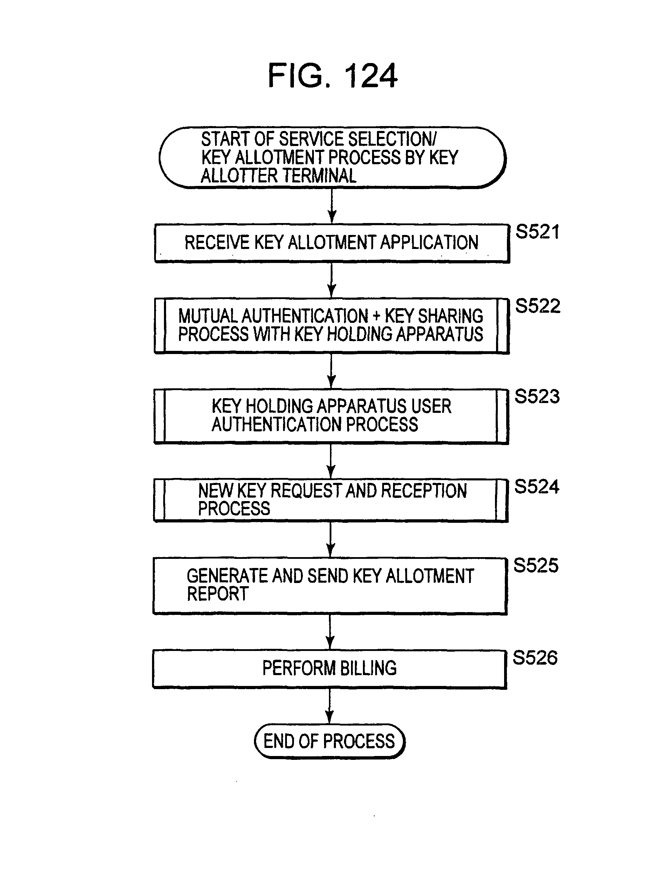

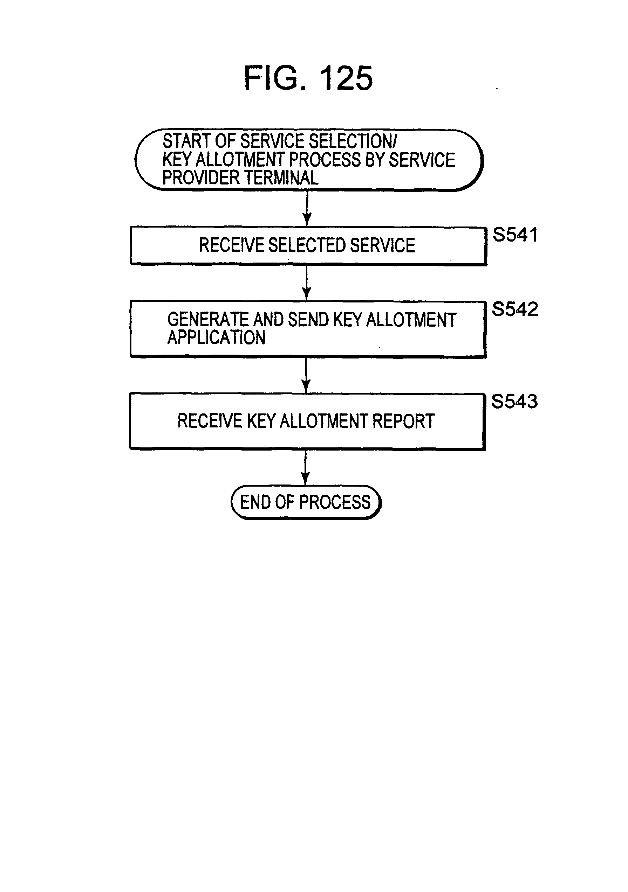

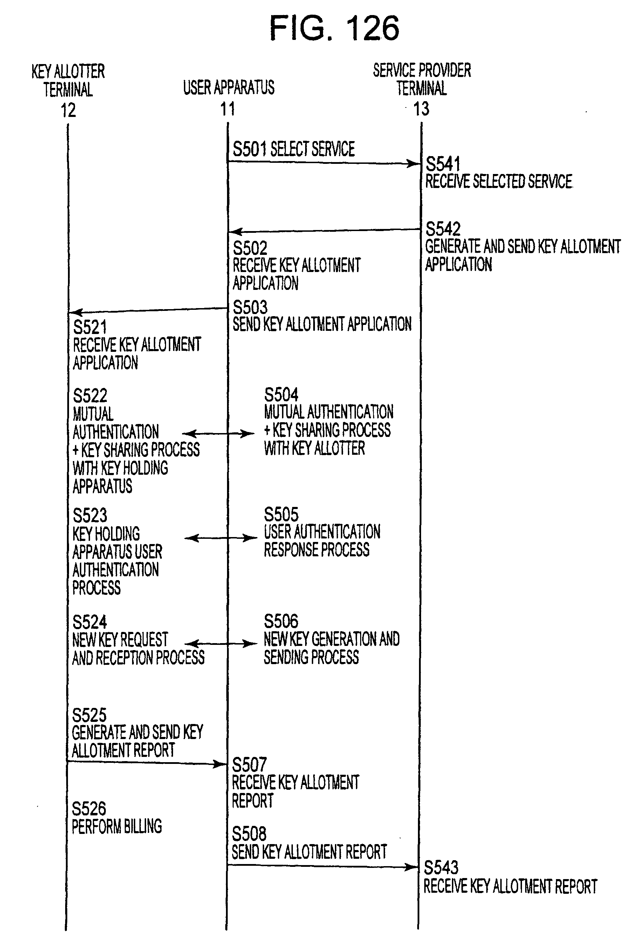

Details of such "service selection/key allotment process" in the fifth embodiment are shown in flowcharts of FIG. 123 to 125 and an arrow chart of FIG. 126. The flowcharts of FIGS. 123 to 125 represent "service selection/key allotment processes" of the respective apparatuses shown in the arrow chart of FIG. 126. That is, FIG. 123 represents the "service selection/key allotment process" by the user apparatus 11 (FIG. 44); FIG. 124 represents the "service selection/key allotment process" by the key allotter terminal 12 (FIG. 44); and FIG. 125 represents the "service selection/key allotment process" by the service provider terminal 13 (FIG. 44).

Thus, referring to the arrow chart of FIG. 126, steps different from those of the second embodiment will mainly be described below, while omitting here the descriptions of the steps described in the second embodiment, as appropriate.

As shown in FIG. 126, first, the user terminal 21 selects a service (selected service) and sends it to the service provider terminal 13 in step 501.

The service provider terminal 13 receives the selected service in step S541, and generates the key allotment application of FIG. 51, for sending to the key holding apparatus 22 (specifically, a certificate of the service provider terminal 13 (service provider SP) is also sent together with the key allotment application) in step S541.

The key holding apparatus 22 receives the key allotment application and holds it temporarily in step S502, and at the same time, sends it to the key allotter terminal 12 in step S503.

When receiving the key allotment application, the key allotter terminal 12 verifies the digital signature of the service provider terminal 13 in the key allotment application in step S521.

Each of the key holding apparatus 22 and the key allotter terminal 12 executes step S522 (a "mutual authentication + key sharing process with the key holding apparatus") or step S504 (a "mutual authentication + key sharing process with the key allotter").

In detail, for instance, if the key holding apparatus 22 does not keep the key holding apparatus PKI information of FIG. 120, step S522 (the "mutual authentication + key sharing process with the key holding apparatus") and step S504 (the "mutual authentication + key sharing process with the key allotter") in the fifth embodiment are supposed to be similar processes to those of the second embodiment. Therefore, descriptions thereof will be omitted.

On the other hand, for instance, when the key holding apparatus 22 keeps the key holding apparatus PKI information of FIG. 120, execution of mutual authentication utilizing SSL, TLS is also possible as step S522 (the "mutual authentication + key sharing process with the key holding apparatus") and step S504 (the "mutual authentication + key sharing process with the key allotter"), as mentioned above.

Note that step S522 (the "mutual authentication + key sharing process with the key holding apparatus") and step S504 (the "mutual authentication + key sharing process with the key allotter") by mutual authentication utilizing SSL, TLS will be described later with reference to FIGS. 128 and 129.

Thereafter, each of the key holding apparatus 22 and the key allotter terminal 12 executes step S523 (a "key holding apparatus user authentication process") or step S505 (a "user authentication response process").

Note that step S523 (the "key holding apparatus user authentication process") and step S505 (the "user authentication response process") are supposed to be similar to those of the above-mentioned second embodiment, and thus that descriptions thereof will be omitted.

By the way, as mentioned above, in the second embodiment, when the "key holding apparatus user authentication process (step S23 (FIG. 27) corresponding to step S523 (FIG. 126) of the fifth embodiment) " and the "user authentication response process (step S15 corresponding to step S505 (FIG. 126) of the fifth embodiment)" are executed, the key allotter terminal 12 generates new keys for sending to the user apparatus 11 (key holding apparatus 22) in step S24 (FIG. 27), and the user apparatus 22 (key holding apparatus 22) receives the new keys in step S16.

By contrast, in the fifth embodiment, as shown in FIG. 126, when the "key holding apparatus user authentication process (step S523)" and the "user authentication response process (step S505)" are executed in step S524 on the key allotter terminal 12 side and in step S506 on the user apparatus 11 (key holding apparatus 22) side, the key allotter terminal 12 generates request information for requesting the key holding apparatus 22 to generate new keys, for sending to the key holding apparatus 22. When receiving the request information, the key holding apparatus 22 generates and holds new keys by itself, and sends a verifying key of the generated new keys to the key allotter terminal 12.

Note that of such mutual processes (key allotment processes) by the key allotter terminal 12 and the key holding apparatus 22, the process on the key allotter terminal 12 side (step S524 in the example of FIG. 126) will be called as a "new key request and reception process", and the process on the user apparatus 11 (key holding apparatus 22) side (step S506 in the example of FIG. 126) will be called as a "new key generation and sending process", hereinafter.

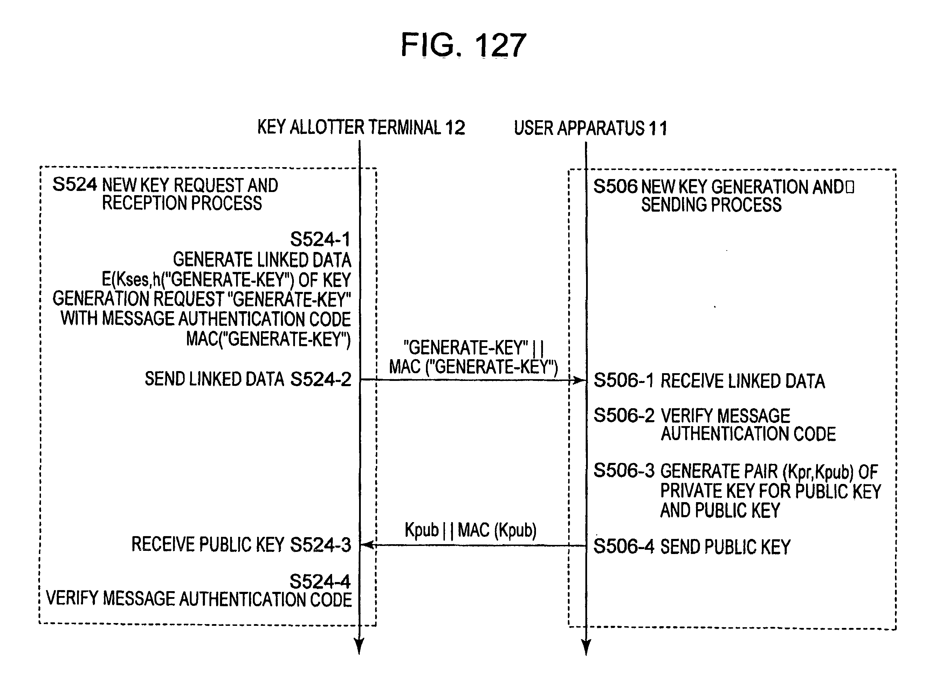

Details of these "new key request and reception process (step S524)" and "new key generation and reception process (step S506)" are shown in an arrow chart of FIG. 127.

Referring thus to the arrow chart of FIG. 127, the details of the "new key request and reception process (step S524) " and the "new key generation and reception process (step S506)" in the fifth embodiment will be described.

As shown in FIG. 127, first, the key allotter terminal 12 generates a key generation request "GENERATE-KEY" in step S524-1. The key allotter terminal 12 generates a message authentication code MAC("GENERATE-KEY") = E(Kses, h("GENERATE-KEY")) by using the generated key generation request "GENERATE-KEY" and the temporary cryptographic key Kses shared with the user apparatus 11 (key holding apparatus 22) as a result of the "mutual authentication + key sharing process with the key holding apparatus" in step S522 (FIG. 126). And the key allotter terminal 12 links the key generation request "GENERATE-KEY" with the message authentication code MAC("GENERATE-KEY") = E(Kses, h("GENERATE-KEY")). That is, the key allotter terminal 12 generates linked data "GENERATE-KEY"|| MAC("GENERA.TE-KEY") as request information for requesting generation of new keys.

When the key allotter terminal 12 sends the linked data "GENERATE-KEY" || MAC ("GENERATE-KEY") in step S524-2, the user apparatus 11 (key holding apparatus 22) receives it in step S506-1.

The key holding apparatus 22 verifies the message authentication code in step S506-2, to verify the tampering and validity of the key generation request "GENERATE-KEY".

When the verification is successful, the key holding apparatus 22 newly generates new keys, i. e., a public key pair (Kpr, Kpub) which is a pair of a private key and a public key for the public key cryptography in step S506-3. This public key pair (Kpr, Kpub) is used as a certifying key and a verifying key for an authentication technique to be newly allotted.

Specifically, for instance, when the key holding apparatus 22 is configured as shown in FIG. 118, the random number generating section 401 generates a random number, and the computation processing section 56 newly generates a public key pair (Kpr, Kpub) from the random number generated by the random number generating section 401, according to a method or the like specified by, for instance, IEEE-P1363.

And the computation processing section 56 generates the temporal holding key table of FIG. 121, the component of which is the generated two keys of the public key pair (Kpr, Kpub) , for storage on the key storage section 54.

Alternatively, for instance, when the key holding apparatus 22 is configured as shown in FIG. 118, the computation processing section 56 generates beforehand a plurality of public key pairs (Kprn, Kpubn) (n is the arbitrary integer value) respectively from a plurality of random numbers generated by the random number generating section 401 according to the method or the like specified by, for instance, IEEE-P1363, earlier timewise than the "new key generation and sending process" in step S506, and gives each of the generated plurality of public key pairs (Kprn, Kpubn) an Idn as an Index.

And the computation processing section 56 writes IDn to an item for Index, private keys Kprn of the generated plurality of public key pairs (Kprn, Kpubn) to an item for certifying key (candidate), and public keys Kpubn of the generated plurality of public key pairs (kprn, Kpubn) to an item for verifying key (candidate) in the respective n records (rows) in the authenticating key table of FIG. 122, after which it stores the authenticating key table on the key storage section 54.

Note that in this case, all the cryptographic key candidates (certifying key (candidates) Kprn and verifying key (candidates) Kpubn) included in the authenticating key table of FIG. 122 are generated by the key holding apparatus 22, but as mentioned above, at least part of the cryptographic key candidates (certifying key (candidates) Kprn and verifying key (candidates) Kpubn) included in the authenticating key table of FIG. 122 may be generated by another apparatus different from the key holding apparatus 22.

With the authenticating key table of FIG. 122 held on the key storage section 54 beforehand in this way, when receiving the linked data "GENERATE-KEY"|| MAC("GENERATE-KEY") sent from the key allotter terminal 12 in step S506-1, the key holding apparatus 22 verifies the message authentication code in step S506-2, to verify the tampering and validity of the key generation request "GENERATE-KEY".

When the verification is successful, the computation processing section 56 extracts a predetermined one (Kprk, Kpubk) (where k is a predetermined one of integer values represented by n) of the plurality of new key candidates, i.e., the plurality of public key pairs (Kprn, Kpubn) included in the respective records (rows) in the authenticating key table of FIG. 122 which is stored on the key storage section 54, in step S506.

And the computation processing section 56 generates the temporal holding key table of FIG. 121, the component of which is the two keys of the extracted public key pair (Kprk, Kpubk) , for storage on the key storage section 54, and also deletes the record (row k) in the authenticating key table of FIG. 122, which corresponds to the selected public key pair (Kprk, Kprk).

When the temporal holding key table of FIG. 121 is stored on the key storage section 54 in this way, the key holding apparatus 22 sends the public key, i.e., the verifying key Kpub in step S506-4. Then, the key allotter terminal 12 receives it in step S524-3.

Specifically, for instance, the key holding apparatus 22 generates a message authentication code MAC(Kpub) = E (Kses, h (Kpub) by using the verifying key Kpub of the public key pair (kpr, Kpub) generated in step S506-3 (held in the temporal holding key table of FIG. 121) and the temporary cryptographic key Kses shared with the key holding terminal 12 as a result of the "mutual authentication + key sharing process with the key allotter" in step S504 (FIG. 126). And the key holding apparatus 22 links the verifying key Kpub with the message authentication code MAC (Kpub). That is, the key holding apparatus 22 generates linked data Kpub|| MAC (Kpub) .

The generated linked data Kpub|| MAC (Kpub) is sent from the user apparatus 11, and received by the key allotter terminal 12.

Then, the key allotter terminal 12 verifies the message authentication code MAC(Kpub)in the linked data Kpub|| MAC(Kpub)in step S524-4.

Returning to FIG. 126, when the verification is successful, the key allotter terminal 12 generates the key allotment report of FIG. 52 for sending to the key holding apparatus 22 in step S525.

At the same time, the key allotter terminal 12 adds to the key allotment table of FIG. 119 a record configured of the unique identification number KID of the authentication technique on which allotment is performed, the identification number AID of the allotted user, the identification number HWID of the allotted key holding apparatus 22, the key allotment application App, and the key allotment report Rep.

And the key allotter terminal 12 bills the user User (who owns the IC card 23) having the identification number AID in step S526.

When receiving the key allotment report of FIG. 52 in step S507, the key holding apparatus 22 adds to the certifying key table of FIG. 59 held by itself a record configured of the identification number KID included in the key allotment report and the certifying key Kpr held in the temporal holding key table of FIG. 121 in step S507.

Further, the key holding apparatus 22 adds to the authentication information table of FIG. 60 a record configured of the identification number KID of the allotted authentication technique, the key allotment application App and the key allotment report Rep already received from the service provider.

And the key holding apparatus 22 sends the key allotment report received in step S507 to the service provider terminal 13 in step S508.

At the same time, the key holding apparatus 22 deletes the certifying key Kpr and the verifying key Kpub held in the temporal holding key table of FIG. 121.

The service provider terminal 13 receives the key allotment report in step S543. And the service terminator 13 verifies the key allotter's signature included in the key allotment report. When succeeding in the verification, the service provision terminal 13 adds to the authentication information table of FIG. 53 a record configured of the identification number KID of the authentication technique, the already sent key allotment application App, and the received key allotment report Rep.

Referring next to FIGS. 128 and 129, details of the "mutual authentication + key sharing process with the key holding apparatus (step S522) " and the "mutual authentication + key sharing process with the key allotter (step S504)" utilizing mutual authentication utilizing SSL, TLS will be described.

The SSL, TLS protocols are security technology capable of avoiding threat such as "eavesdropping", "tampering" or "spoofing" over the Internet.

The SSL protocol is developed by NetScap Communications Corporation and is now widespread as a cryptographic communication protocol over the Internet. The TLS protocol is developed and its standardization is conducted by IETF, with RFC2246 being made open to the public.

The SSL, TLS protocols have features indicated in (a) to (d) below.

(a) Authentication of servers and certification of transmission by digital certificates (b) authentication of clients and certification of transmission by digital certificates (c) protection of secrecy of data by encryption (d) prevention of tampering of data by message authentication code (MAC).

FIG. 128 shows an example of a protocol stack in a case where such SSL, TLS are utilized.

As shown in FIG. 128, the protocol stack in the case where the SSL, TLS protocols are utilized has a multi-layer structure configured, from the lower part, of a layer 411 for Ethernet (trademark) and the like, a layer 412 for IP (Internet Protocol) and the like, a transport layer 413 for TCP (transmission Control Protocol), UDP (User Datagram Protocol) and the like, a layer 414 for SSL, TLS and the like, and an application layer 415 for HTTP (Hyper Text Transfer Protocol), FTP (File Transfer Program), TELNET and the like.

In this way, the SSL, TLS protocols are positioned immediately above the transport layer 413 for TCP, UDP and the like, and immediately below the application layer 415. That is, the SSL, TLS protocols use a function (socket) or the like provided by TCP, UDP, whereby to operate to provide data obtained therefrom with a security function, and deliver the result to an application. Thus, the SSL, TLS protocols have a feature that they can be utilized without dependence on applications. For instance, World Wide Web browsers and the like have that function incorporated as their standard function.

The layer 414 for SSL, TLS is, as shown in FIG. 128, divided roughly into two layers, a lower layer 414-1 and an upper layer 414-2. The lower layer 414-1 is generally called as a Record Protocol, and is a layer for providing functions such as a message digest function that prevents encryption and tampering of data. On the other hand, the upper layer 414-2 is a layer in which four protocols, which are a Handshake Protocol, a Alert Protocol, a Change Cipher Spec Protocol, and an Application Data Protocol, are included. The upper layer 414-2 is provided with an authentication function for preventing spoofing and a negotiation function performed to start a SSL/TLS session.

The negotiation function is a function of executing some pre-processing such as checking that the other communicating party is an authentic party and checking cryptographic algorithms utilizable by both parties, prior to communication.

Referring now to an arrow chart of FIG. 129, details of the "mutual authentication + key sharing process with the key holding apparatus (step S522)" and the "mutual authentication + key sharing process with the key allotter (step S504) utilizing, for instance, the Handshake protocol of these four protocols will be described.

That is, FIG. 129 is the arrow chart illustrating the details of the "mutual authentication + key sharing process with the key holding apparatus (step S522)" and the "mutual authentication + key sharing process with the key allotter (step S504)" utilizing the Handshake protocol in ordinary SSL.

First, when the user apparatus 11 (key holding apparatus 22) establishes an SSL connection, the key allotter terminal 12 sends a hello request message to the key holding apparatus in step S522-1.

When receiving the hello request message in step S504-1, the key holding apparatus 22 sends a client hello message to the key allotter terminal 12 in step S504-2.

Note that the client hello message is a message for notifying the key allotter terminal of information including an SSL version, a supporting cryptographic algorithm, a compression algorithm, and a time stamp.

When receiving the client hello message in step S522-2, the key allotter terminal 12 sends a server hello message to the key holding apparatus 22 in step S522-3.

The key holding apparatus 22 receives the server hello message in step S504-3.

Note that the server hello message is a message representing a response to the client hello message, and includes a cryptographic algorithm, a compression algorithm, and a session ID selected by the key allotter terminal 12.

Successively, the key allotter terminal 12 sends a server certificate message to which a certificate CERTKA in the key allotter PKI information of FIG. 49 is attached, to the key holding apparatus 22 in step S522-4.

When receiving the certificate CERTKA (server certificate message) in step S504-4, the key holding apparatus 22 verifies the certificate CERTKA, i.e., verifies the key allotter KA in step S504-5, to check whether or not it is the key allotter KA depending on whether or not the authentication is successful.

Note that when the key allotter terminal 12 does not hold the certificate and the like, a message such as server key exchange is sent from the key allotter terminal 12 in step S522-5, and received by the key holding apparatus 22 in step S504-6.

When the key allotter terminal 12 sends a message for requesting a certificate (such a message will also be called as a certificate request) in order to check the key holding apparatus 22 in step S522-6, the key holding apparatus 22 receives the message in step S504-7.

When the key allotter terminal 12 sends a server hello done message representing the end of a server's response in step S522-7, the key holding apparatus 22 receives the message in step S504-8.

The key holding apparatus 22 sends to the key allotter terminal 12 a server certificate message to which a certificate CERTHW0 included in the key holding apparatus PKI information of FIG. 120 is attached, in step S504-9.

The key allotter terminal 12 receives the certificate CERTHW0 (server certificate message) in step S522-8.

When the key holding apparatus 22 sends information from which a temporary cryptographic key Kssl for performing SSL cryptographic communication as a client key exchange message is derived, in step S504-10, the key allotter terminal 12 receives the message in step S522-9. That is, the key holding apparatus 22 and the key allotter terminal 12 share the information from which the temporary cryptographic key Kssl for performing SSL cryptographic communication is derived.

The key holding apparatus 22 sends a digital signature of the key holding apparatus 22 to the key allotter terminal 12 as a client verify message in step S504-11.

When receiving the client verify message in step S522-10, the key allotter terminal 12 performs verification of the certificate CERTHW0 received in step S522-8, i.e., performs verification of the key holding apparatus 22 in step S522-11, to check whether or not it is the key holding apparatus 22 depending on whether or not the verification is successful.

The key allotter terminal 12 generates a temporary cryptographic key Kssl (a session key Kssel to be shared with the key holding apparatus 22) for performing SSL cryptographic communication, based on the information corresponding to the Client key exchange message received in step S522-9 (information shared with the key holding apparatus 22), in step S522-12.

On the other hand, the key holding apparatus 22 also generates a temporary cryptographic key Kssl (a session key Kssel to be shared with the key allotter terminal 12) for performing SSL cryptographic communication, based on the information corresponding to the Client key exchange message sent in step S504-10 (information shared with the key allotter terminal 12), in step S504-12.

When the above processing is executed, each of the key allotter terminal 12 and the key holding apparatus 22 mutually sends and receives a finished message indicating the fact that the Handshake protocol ends, in a respective one of step S522-13 and step S504-13.

In this way, in SSL, each of the key allotter terminal 12 and the key holding apparatus 22 shares the temporary cryptographic key Kssl for SSL cryptographic communication at this point of time (at the end of step S522-13 and step S504-13).

Note that each of the messages described above is specified in RFC2246.

Furthermore, in the present invention, the key holding apparatus 22 generates a random number (temporary cryptographic key) Kses in step S504-14. The key holding apparatus 22 encrypts the generated cryptographic key (random number) Kses, by the cryptographic key Kssl (temporary cryptographic key Kssl for performing SSL cryptographic communication generated in step S504-12) shared with the key allotter terminal 12 through the SSL protocol. That is, the key holding apparatus 22 generates data E(Kssl, Kses). Further, the key holding apparatus 22 generates a message authentication code MAC (E (Kssl, Kses)) = E(Kssl, E(Kssl, Kses) ) . The key holding apparatus 22 links data E (Kssl, Kses) with the message authentication code MAC(E(Kssl, Kses)). That is, the key holding apparatus 22 generates linked data E (Kssl, Kses) || MAC (E (Kssl, Kses)).

And the key holding apparatus 22 sends the linked data E(Kssl, Kses)|| MAC (E(Kssl, Kses)) to the key allotter terminal 12 in step S504-15.

Then, the key allotter terminal 12 receives the linked data E(Kssl, Kses) || MAC(E(Kssl, Kses) ) in step S522-14, and extracts the verifying random number Kses in the message authentication code MAC(E(Kssl, Kses)) (the temporary cryptographic key Kses generated by the key holding apparatus 22 in step S504-15). That is, the key allotter terminal 12 verifies the message authentication code MAC (E (Kssl, Kses)), and decrypts the verifying random number Kses for sharing with the key holding apparatus 22.

Note that the "mutual authentication + key sharing process with the key holding apparatus" and the "mutual authentication + key sharing process with the key allotter terminal" utilizing SSL, TLS shown in FIG. 129 is supposed to be applicable to any of not only the fifth embodiment but also the above-mentioned first to fourth embodiments and the sixth embodiment to be described later, if the key holding apparatus 22 holds the key holding apparatus PKI information shown in FIG. 120.

Returning to FIG. 23, after step S1 (the "service selection/key allotment process") is executed, a "key use/service provision process" is executed in step S2.

The key use/service provision process" in the fifth embodiment is similar to that of the second embodiment. That is, also in the fifth embodiment, the "key use/service provision process" is executed according to the above-mentioned flowcharts of FIGS. 68 and 69.

After step S2 (the "key use/service provision process") ends, step S6 (a "key deletion process") and step S7 (a "key use termination process") are executed, as necessary.

The "key deletion process" (step S6) in the fifth embodiment is similar to that of the above-mentioned second embodiment. That is, also in the fifth embodiment, the "key deletion process" is executed according to any of the above-mentioned flowcharts of FIGS. 37 to 39.

Provided that, in the fifth embodiment, objects for deletion are supposed to be the key allotment table of FIG. 119 in the case of the key allotter terminal 12, the authentication information table of FIG. 53 and the invalidation key table of FIG. 55 in the case of the service provider terminal 13, the certifying key table of FIG. 59 and the authentication information table of FIG. 60 in the case of the key holding apparatus 22.

The "key use termination process" (step S7) in the fifth embodiment is similar to that of the above-mentioned second embodiment. That is, also in the fifth embodiment, the "key use termination process" is executed according to the above-mentioned flowcharts of FIGS. 40 and 41.

In this way, the authentication key allotment system 201 to which the fifth embodiment is applied is an embodiment corresponding to the second embodiment, and thus, the advantages mentioned in (1) to (6) above can, of course, be provided.

Furthermore, the authentication key allotment system 201 to which the fifth embodiment is applied can provide the advantages shown in (7) to (10) below.

(7) An apparatus possessed by a user generates cryptographic keys (a public key pair) for an authentication technique when an exclusive authentication technique is allotted between two parties who require authentication, whereby there would be substantially no likelihood that a private key will be leaked out, and hence security can be improved.

(8) An apparatus possessed by the user generates cryptographic keys (a public key pair) for an authentication technique when an exclusive authentication technique is allotted between two parties who require authentication, whereby burden on the part of the key allotter can be reduced.

(9) Cryptographic keys for authentication are generated beforehand, whereby delay in processing key generation at the time of key allotment can be prevented.

(10) Should a private key be leaked, the location of the leakage source can be limited to the key holding apparatus possessed by the user.

### (Sixth Embodiment)

As mentioned above, the sixth embodiment is an embodiment corresponding to the fourth embodiment, and a configuration of an authentication key allotment system to which the sixth embodiment of the present invention is applied is similar to the configuration of FIG. 72, and thus a description thereof will be omitted. Therefore, FIG. 72 is also cited as the configuration of the authentication key allotment system to which the sixth embodiment of the present invention is applied.

By the way, in the fourth embodiment, the cryptographic keys for a new authentication technique are generated by the key allotter terminal 12, but in the sixth embodiment, the cryptographic keys for a new authentication technique are generated by the key holding apparatus 22 of the user apparatus 11.

Therefore, in the sixth embodiment, the key holding apparatus 22 further needs to have a function of generating cryptographic keys for a new authentication technique, similarly to the fifth embodiment.

That is, also in the sixth embodiment, similarly to the second and fifth embodiments, a public key pair (Kpr, Kpub) which is a pair of a private key and a public key for the public key cryptography is used as the cryptographic keys for a new authentication technique. Therefore, the key holding apparatus 22 needs to further have a function of newly generating a public key pair (Kpr, Kpub) from a random number by, for instance, an appropriate method (methods are not particularly limited; a standard method is defined, for instance, in IEEE-P1363, and that method can be applied.)

Such a function is easily implementable also by the key holding apparatus 22 having the above-mentioned configuration of FIG. 16. In this case, the computation processing section 56 generates a random number by utilizing software capable of generating random numbers, and generates a public key pair (Kpr, Kpub) from a generated random number for storage on the key storage section 54.

Note that also in the sixth embodiment, hardware can generate random numbers. In this case, the key holding apparatus 22 is designed to have the above-mentioned configuration shown in, for instance, FIG. 118. That is, the random number generating section 401 as the hardware generates random numbers.

Each of the other apparatuses in the sixth embodiment, i.e., the user terminal 21, the IC card 23, the key allotter terminal 12, the service provider terminal 13, the general-purpose account manager terminal 15, and the authentication center terminal 211 has a basically similar function and configuration to a respective one of the corresponding apparatuses of the fourth embodiment. Therefore, descriptions of the other apparatuses will be omitted.

Further, each of the apparatuses constituting the authentication key allotment system to which the sixth embodiment is applied has data basically similar to the data held by a respective one of the corresponding apparatuses of the fourth embodiment, but differ therefrom slightly.

Thus, the data held by each of the apparatuses constituting the authentication key allotment system to which the fifth embodiment is applied will be described below.

That is, the key allotter terminal 12 keeps, also in the sixth embodiment, a service provider key table such as shown in FIG. 99 mentioned above, a key holding apparatus key table such as shown in FIG. 100 mentioned above, key allotter PKI information such as shown in FIG. 101 mentioned above, and CA public key information such as shown in FIG. 102 mentioned above.

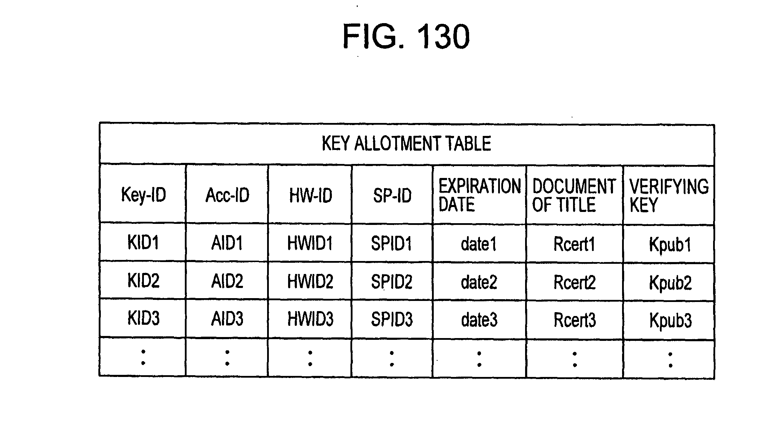

Provided that, in the sixth embodiment, a certifying key is generated by the key holding apparatus 22 kept by the user User, and thus the key allotter terminal 12 keeps a key allotment table such as shown in FIG. 130 (key allotment table not including an item for certifying key, as compared to the key allotment table of FIG. 73).

Note that in the key allotment table of FIG. 130, a document of title represents data generated by the service provider terminal 13 (service provider SP) in order to certify a service to be provided thereby, when key allotment is performed, similarly to the key allotment table of FIG. 73.

That is, also in the sixth embodiment, for instance, the above-mentioned document of title shown in FIG. 103 can be used.

The service provider terminal 13 keeps, also in the sixth embodiment, service provider unique information shown in FIG. 105 mentioned above, a invalidation key table such as shown in FIG. 106 mentioned above, key sharing parameters such as shown in FIG. 107 mentioned above, and CA public key information such as shown in FIG. 108 mentioned above.

Further, the service provider terminal 13 generates the key allotment application of FIG. 104 also in the sixth embodiment.

The key holding apparatus 22 or the IC card 23 (user User) keeps, also in the sixth embodiment, a certifying key table such as shown in FIG. 109 mentioned above, an authentication information table such as shown in FIG. 110 mentioned above, key holding apparatus unique information such as shown in FIG. 111 mentioned above, user count information as shown in FIG. 112 mentioned above, and CA public key information such as shown in FIG. 113 mentioned above.

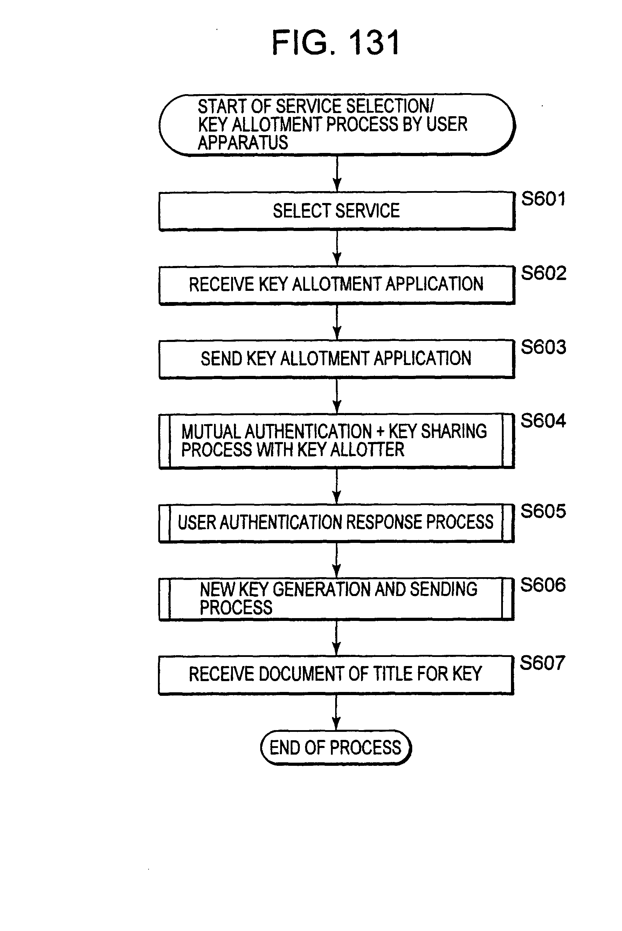

Furthermore, also in the sixth embodiment, the key holding apparatus 22 keeps the above-mentioned key holding apparatus PKI information such as shown in FIG. 120, when performing mutual authentication with the key allotter terminal 12 using SSL, TLS in a "mutual authentication + key sharing process with the key allotter" in step S604 of FIG. 131 to be described later.

Further, in the sixth embodiment, the key holding apparatus 22 generates cryptographic keys (a certifying key and a verifying key to be paired therewith) by itself, and thus keeps the above-mentioned temporal holding key table shown in FIG. 121 in order to temporarily hold the generated cryptographic keys.

That is, also in the sixth embodiment, the key holding apparatus 22 generates the temporal holding key table of FIG. 121 (writes the generated cryptographic keys to a record in the temporal holding key table) and holds (keeps) the table, the component of which is the generated cryptographic keys (two keys of a public key pair (Kpr,Kpub)), when the cryptographic keys are generated on demand, i.e., when the cryptographic keys (the public key pair (Kpr, Kpub)) are generated upon request for generating cryptographic keys (new keys) for a new authentication technique by the key allotter terminal 12.

Furthermore, also in the sixth embodiment, the key holding apparatus 22 also keeps an authenticating key table such as shown in FIG. 122 mentioned above if it holds a plurality of cryptographic key candidates beforehand.

That is, the key holding apparatus 22 holds beforehand the authenticating key table of FIG. 122 generated by itself or another apparatus (not shown), and extracts a predetermined one (a public key pair (Kprk, Kpubk) ) from the plurality of encrypting key candidates stored in the authenticating key table as new keys upon request for generating cryptographic keys (new keys) for a new authentication technique by the key allotter terminal 12, whereby it generates the new keys.

And the key holding apparatus 22 generates and holds (keeps) the temporal holding key table of FIG. 121, the component of which is the generated new keys (a public key pair (Kprk, Kpubk) which is the extracted new key candidates) .

The account manager terminal 15 keeps, also in the sixth embodiment, the above-mentioned account management table of FIG. 21, and the above-mentioned account manger unique key of FIG. 22.

The authentication center terminal 211 keeps, also in the sixth embodiment, CA key information such as shown in FIG. 65 mentioned above, and a certificate table such as shown in FIG. 64 mentioned above.

Further, the authentication center terminal 211 (authentication center CA) issues a certificate such as shown in FIG. 66.

Next, an operation of the authentication key allotment system 301 (FIG. 72) to which the sixth embodiment of the present invention is applied will be described.

An outline of the operation of the authentication key allotment system 301 in the sixth embodiment is basically similar to that of the fourth embodiment of the present invention.

Therefore, the operation of the authentication key allotment system 301 to which the sixth embodiment of the present invention is applied will also be described with reference to the flowchart of FIG. 23, similarly to the description of the fourth embodiment.

First, a "service selection/key allotment process" is executed in step S1.

The "service selection/key allotment process" in the sixth embodiment is supposed to be basically similar to that of the fourth embodiment, but differs therefrom slightly.

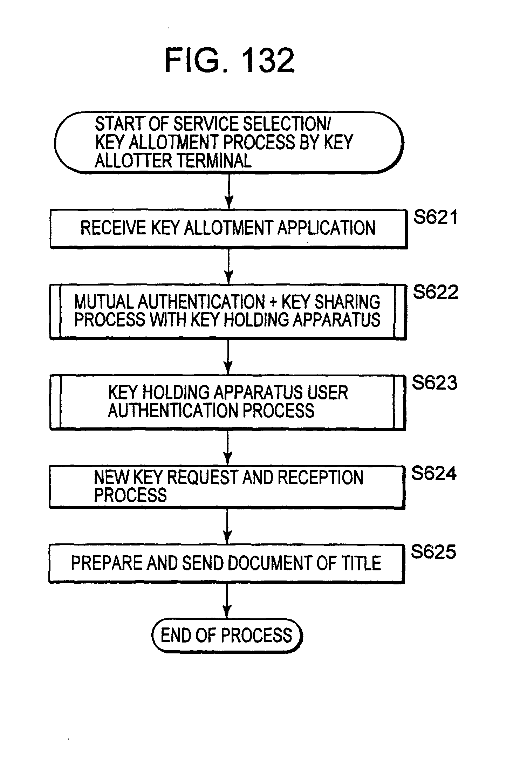

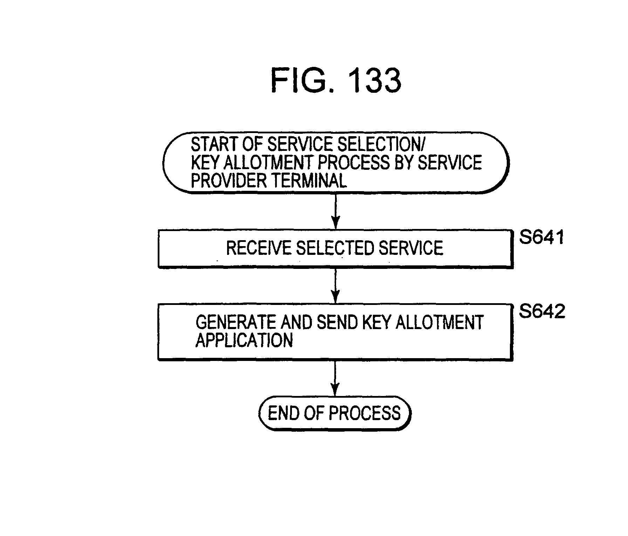

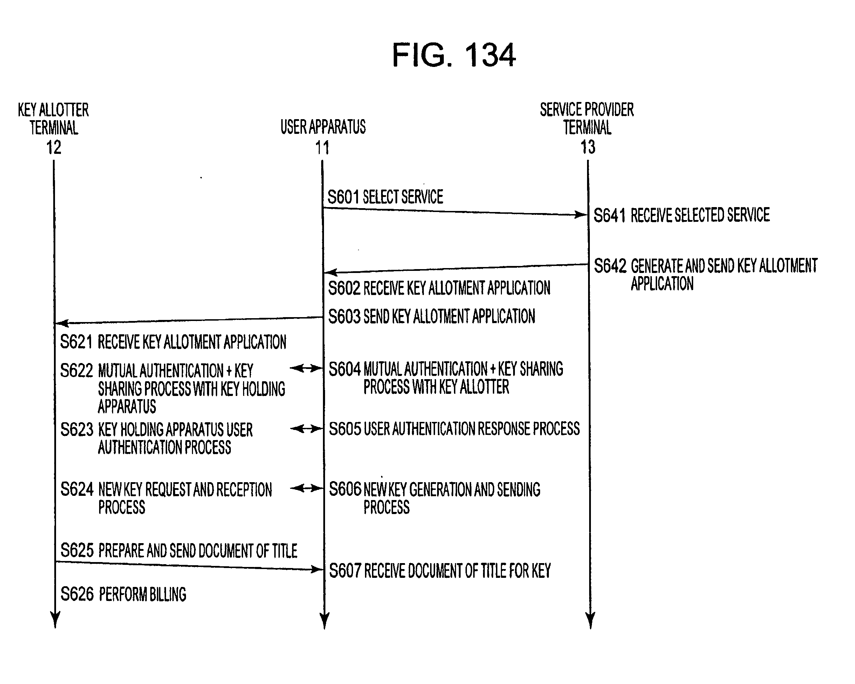

Details of such "service selection/key allotment process" in the sixth embodiment are shown in flowcharts of FIGS. 131 to 133 and an arrow chart of FIG. 134. The flowcharts of FIGS. 131 to 133 represent "service selection/key allotment processes" by the respective apparatuses shown in the arrow chart of FIG. 134. That is, FIG. 131 represents the "service selection/key allotment process" by the user apparatus 11 (FIG. 72); FIG. 132 represents the "service selection/key allotment process" by the key allotter terminal 12 (FIG. 72); and FIG. 133 represents the "service selection/key allotment process" by the service provider terminal 13 (FIG. 72).

Thus, referring to the arrow chart of FIG. 134, steps different from those of the fourth embodiment will mainly be described below, while omitting here the descriptions of the steps described in the fourth embodiment, as appropriate.

As shown in FIG. 134, first, the user terminal 21 selects a service (selected service) and sends it to the service provider terminal 13 in step 601.

The service provider terminal 13 receives the selected service in step S641, and generates the key allotment application of FIG. 104 for sending to the key holding apparatus 22 in step S642.

The key holding apparatus 22 receives the key allotment application and holds it temporarily in step S602, and at the same time, sends it to the key allotter terminal 12 in step S603.

When receiving the key allotment application, the key allotter terminal 12 verifies a message authentication code of the service provider terminal 13 in the key allotment application in step S621.

When the key allotter terminal 12 receives the key allotment application, each of the key holding apparatus 22 and the key allotter terminal 12 executes step S622 (a "mutual authentication + key sharing process with the key holding apparatus" on the key allotter terminal 12 side) or step S604 (a "mutual authentication + key sharing process with the key allotter" on the key holding apparatus 22 side).

In detail, for instance, if the key holding apparatus 22 does not keep the key holding apparatus PKI information of FIG. 120, then step S522 (the "mutual authentication + key sharing process with the key holding apparatus") and step S504 (the "mutual authentication + key sharing process with the key allotter") in the sixth embodiment are supposed to be similar processes to those of the above-mentioned fourth embodiment. Therefore, these descriptions will be omitted.

On the other hand, for instance, if the key holding apparatus 22 keeps the key holding apparatus PKI information of FIG. 120 in step S622 (the "mutual authentication + key sharing process with the key holding apparatus") and in step S604 (the "mutual authentication + key sharing process with the key allotter"), for instance, the above-mentioned processes shown in FIG. 129 (processes utilizing SSL, TLS) are executed, as mentioned above. Note that these processes utilizing SSL, TLS are also mentioned above, and thus that descriptions thereof will also be omitted.

And each of the key holding apparatus 22 and the key allotter terminal 12 executes step S623 (a "key holding apparatus user authentication process" on the key allotter terminal 12 side) or step S605 (a "user authentication response process" on the key holding apparatus 22 side).

Note that step S623 (the "key holding apparatus user authentication process") and step S605 (the "user authentication response process") in the sixth embodiment are supposed to be similar to those in the above-mentioned fourth embodiment, and thus that descriptions thereof will be omitted.

By the way, in the fourth embodiment, when the "key holding apparatus user authentication process (step S423 (FIG. 117) corresponding to step S623 (FIG. 134) of the sixth embodiment)" and the "user authentication response process (step S405 (FIG. 117) corresponding to step S605 (FIG. 134) of the sixth embodiment)" are executed, the key allotter terminal 12 generates new keys for sending to the user apparatus 22 in step S424 (FIG. 117), and the user apparatus 22 receives the new keys in step S406, as mentioned above.

By contrast, in the sixth embodiment, as shown in FIG. 134, similarly to the fifth embodiment, when the "key holding apparatus user authentication process (step S623)" and the "user authentication response process (step S605)" are executed, each of the key allotter terminal 12 and the user apparatus 11 (key holding apparatus 22) executes a "new key request and reception process (step S624)" or a "new key generation and sending process (step S606)".

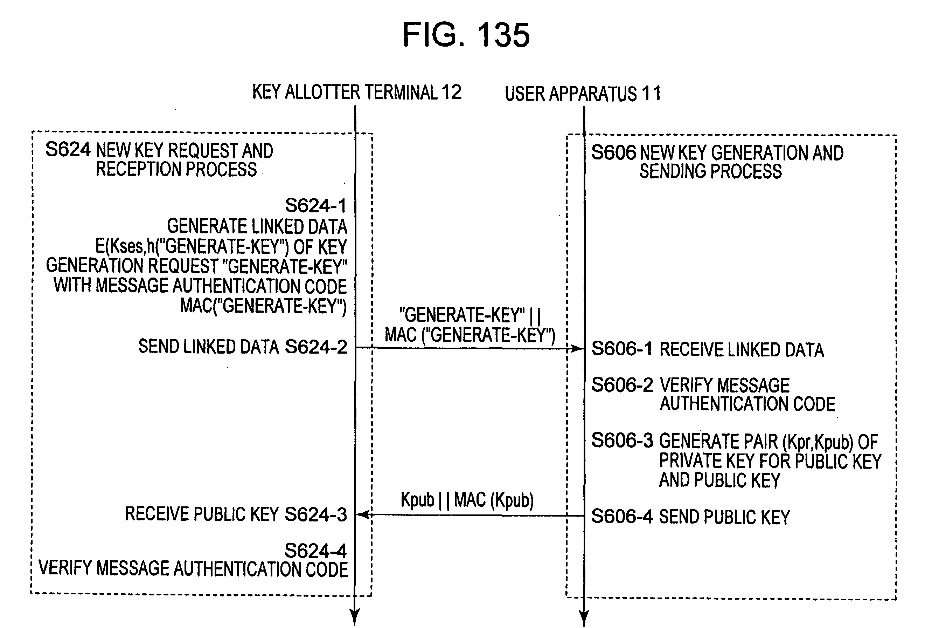

Details of the "new key request and reception process (step S624) " and the "new key generation and reception process (step S606)" in the sixth embodiment are shown in an arrow chart of FIG. 135.

Referring thus to the arrow chart of FIG. 135, the details of the "new key request and reception process (step S624)" and the "new key generation and reception process (step S606)" in the sixth embodiment will be described.

As shown in FIG. 135, first, the key allotter terminal 12 generates a key generation request "GENERATE-KEY" in step S624-1. The key allotter terminal 12 generates a message authentication code MAC("GENERATE-KEY") = E(Kses, h ("GENERATE-KEY")) by using the generated key generation request "GENERATE-KEY" and the temporary cryptographic key Kses shared with the user apparatus 11 (key holding apparatus 22) as a result of the "mutual authentication + key sharing process with the key holding apparatus" in step S622 (FIG. 134). And the key allotter terminal 12 links the key generation request "GENERATE-KEY" with the message authentication code MAC("GENERATE-KEY") = E(Kses, h("GENERATE-KEY")). That is, the key allotter terminal 12 generates linked data "GENERATE -KEY"|| MAC("GENERATE- KEY") as request information for requesting generation of new keys.

When the key allotter terminal 12 sends the linked data "GENERATE-KEY"||MAC ("GENERATE -KEY") in step S624-2, the user apparatus 11 (key holding apparatus 22) receives it in step S606-1.

And the key holding apparatus 22 verifies the message authentication code in step S606-2, to verify the tampering and validity of the key generation request "GENERATE-KEY". When the verification is successful, the key holding apparatus 22 newly generates new keys, i.e., a public key pair (Kpr, Kpub) which is a pair of a private key and a public key for the public key cryptography in step S506-3. This public key pair (Kpr, Kpub) is used as a certifying key and a verifying key for an authentication technique to be newly allotted.

Specifically, for instance, if the key holding apparatus 22 is configured as shown in FIG. 118, the random number generating section 401 generates a random number, and the computation processing section 56 newly generates a public key pair (Kpr, Kpub) from the random number generated by the random number generating section 401, according to a method specified by, for instance, IEEE-P1363 or the like.

And the computation processing section 56 generates the temporal holding key table of FIG. 121, the component of which is the two keys of the generated public key pair (Kpr, Kpub) , for storage on the key storage section 54.

Alternatively, for instance, if the key holding apparatus 22 is configured as shown in FIG. 118, the computation processing section 56 generates beforehand a plurality of public key pairs (Kprn, Kpubn) respectively from a plurality of random numbers generated by the random number generating section 401 according to the method specified by, for instance, IEEE-P1363 or the like, earlier timewise than the "new key generation and sending process" in step S606, and gives each of the generated plurality of public key pairs (Kprn, Kpubn) an Idn as an Index.

And the computation processing section 56 writes IDn to an item for Index, private keys Kprn of the generated plurality of public key pairs (Kprn, Kpubn) to an item for certifying key, and public keys Kpubn of the generated plurality of public key pairs (kprn, Kpubn) to an item for verifying key in the respective n records (rows) in the authenticating key table shown in FIG. 122, for storage on the key storage section 54.

Note that in the current case, all the cryptographic key candidates (certifying key (candidates) Kprn and verifying key (candidates) Kpubn) included in the authenticating key table of FIG. 122 are generated by the key holding apparatus 22, but as mentioned above, at least part of the cryptographic key candidates (certifying key (candidates) Kprn and verifying key (candidates) Kpubn) included in the authenticating key table of FIG. 122 may be generated by another apparatus different from the key holding apparatus 22.

With the authenticating key table of FIG. 122 held on the key storage section 54 beforehand in this way, when receiving the linked data "GENERATE-KEY"||MAC("GENERATE-KEY") sent from the key allotter terminal 12 in step S606-1, the key holding apparatus 22 verifies the message authentication code in step S606-2, to verify the tampering and validity of the key generation request "GENERATE-KEY".

When the verification is successful, the computation processing section 56 extracts a predetermined one (Kprnk, Kpubk) (where k is a predetermined one of integer values represented by n) of the plurality of new key candidates, i. e. , the plurality of public key pairs (Kprn, Kpubn) included in the respective records (rows) in the authenticating key table of FIG. 122 which is stored on the key storage section 54 in step S560-3, whereby it generates the new keys. That is, the generated new keys (extracted public key pair (Kprnk, Kpubk) ) are used as a certifying key and a verifying key for an authentication technique to be newly allotted.

And the computation processing section 56 generates the temporal holding key table of FIG. 121, the component of which is the two keys of the selected public key pair (Kprnk, Kpubk) , for storage on the key storage section 54, and also deletes the record (row k) in the authenticating key table of FIG. 122, which corresponds to the selected public key pair (Kprnk, Kprk).

When the temporal holding key table of FIG. 121 is stored on the key storage section 54 in this way, the key holding apparatus 22 sends the public key, i.e., the verifying key Kpub in step S606-4. Then, the key allotter terminal 12 receives it in step S624-3.

Specifically, for instance, the key holding apparatus 22 generates a message authentication code MAC (Kpub) = E (Kses, h(Kpub)) by using the verifying key Kpub of the public key pair (Kpr, Kpub) generated in step S606-3 (held in the temporal holding key table of FIG. 121) and the temporary cryptographic key Kses shared with the key holding terminal 12 as a result of the "mutual authentication + key sharing process with the key allotter" in step S604 (FIG. 134). And the key holding apparatus 22 links the verifying key Kpub with the message authentication code MAC (Kpub). That is, the key holding apparatus 22 generates linked data Kpub||MAC(Kpub) .

The generated linked data Kpub|| MAC (Kpubj is sent from the user apparatus 11, and received by the key allotter terminal 12.

Then, the key allotter terminal 12 verifies the message authentication code MAC(Kpub) of the linked data Kpub||MAC (Kpub). in step S624-4.

Returning to FIG. 134, when the verification is successful, the key allotter terminal 12 generates the document of title of FIG. 103 for sending to the key holding apparatus 22 in step S625.

At the same time, the key allotter terminal 12 adds to the key allotment table of FIG. 130 a record configured of the unique identification number KID of the authentication technique on which allotment is performed, the identification number AID of the allotted user, the identification number HWID of the allotted key holding apparatus, the document of title Rcert, the verifying key Kpub, and the like.

And the key allotter terminal 12 bills the user User (user terminal 21) identified in the "mutual authentication + key sharing process with the key holding apparatus" in step S622 so as to correspond with the content of the service in the document of title and the total of commissions for the key allotment, in step S626.

The key holding apparatus 22 receives the document of title in step S607.

And the key holding apparatus 22, after checking that the digital signature is generated by the key allotter terminal 12 (key allotter KA), on the received document of title, adds a new record configured of the identification number KID included in the document of title and the document of title Rcert to the authentication information table of FIG. 110.

Further, the key holding apparatus 22 adds to the certifying key table of FIG. 109 a new record configured of the identification number KID included in the document of title and the certifying key Kpr held in the temporal holding key table of FIG. 121.

Thereafter, the key holding apparatus 22 deletes the certifying key Kpr and the verifying key Kpub held in the temporal holding key table of FIG. 121. Returning to FIG. 23, after step S1 (the "service selection/key allotment process") is executed, a "key use/service provision process" is executed in step S2. The key use/service provision process" of the sixth embodiment is similar to that of the fourth embodiment. That is, also in the sixth embodiment, the "key use/service provision process" is executed according to the above-mentioned flowcharts of FIGS. 114 and 116 (arrow chart of FIG. 117).

After step S2 (the "key use/service provision process") ends, step S6 (a "key deletion process") and step S7 (a "key use termination process") are executed, as necessary.

The "key deletion process" (step S6) of the sixth embodiment is similar to that of the above-mentioned fourth embodiment (i.e., that of the second embodiment). That is, also in the sixth embodiment, the "key deletion process" is executed according to any of the above-mentioned flowcharts of FIGS. 37 to 39.

Provided that, in the sixth embodiment, objects for deletion are supposed to be the key allotment table of FIG. 130 in the case of the key allotter terminal 12, the invalidation key table of FIG. 106 in the case of the service provider terminal 13, and the certifying key table of FIG. 109 and the authentication information table of FIG. 110 in the case of the key holding apparatus 22.

The "key use termination process" (step S7) of the sixth embodiment is similar to that of the above-mentioned fourth embodiment. That is, also in the fifth embodiment, the "key use termination process" is executed according to the above-mentioned flowcharts of FIGS. 40 and 41.

Provided that, in the "key use termination process" in the sixth embodiment, similarly to the fourth embodiment, the service provider terminal 13 does not hold a table corresponding to the authentication information table of FIG. 53 in the second embodiment, and thus the step of deleting a record from the authentication information table will be omitted.

Further, the format of a key use termination request generated by the key allotter terminal 12 and sent to the service provider terminal 13 in step S161 of FIG. 40 is supposed to be the format of FIG. 42 in the similarly first embodiment, whereas in the sixth embodiment, similarly to the fourth embodiment, it is supposed to be any of the formats of FIGS. 42, 43.

In this way, the authentication key allotment system 301 to which the sixth embodiment is applied is an embodiment corresponding to the fourth embodiment, and thus, the advantages mentioned in (1) to (6) above can, of course, be provided.

Furthermore, the authentication key allotment system 301 to which the sixth embodiment is applied causes the key holding apparatus 22 kept by the user User to generate new keys similarly to that of the fifth embodiment, and thus it can, of course, provide the advantages shown in (7) to (10) above.

Further, an embodiment which corresponds to the first and third embodiments, and in which the key holding apparatus 22 held by the user User generates new keys is also easily implemental, similarly to the fifth and sixth embodiments.

That is, a technique by which the key holding apparatus 22 kept by the user User generates new keys can be applied further to the first and third embodiments, similarly to the fifth and sixth embodiments.

Note that a program for executing the above-mentioned series of processes is installed from a network and a recording medium. This recording medium is constituted by not only a program-recorded removable recording medium (package media) 41, 91, 111, 131, or 231, such as a magnetic disk (including a floppy disk), an optical disk (including a CD-ROM (Compact Disk-Read Only Memory), and a DVD (Digital Versatile Disk)), a magneto-optical disk (including a MD (Mini-Disk) ) , or a semiconductor memory, which is distributed in order to provide programs to owners and the like, separately from the main body of the apparatus as shown in FIGS. 15, 18, 19, 20, and 45, to be attached to the drive 40, 90, 110, 130, or 230, but also the program-recorded ROM 32, 82, 102, 122, or 222, and a hard disk included in the storage section 38, 88, 108, 128, or 228, or the like which is provided to the user as incorporated into the main body of the apparatus beforehand.

Note that in the present specification, the steps of executing the above-mentioned series or processes include not only processes performed time-serially in the written order, but also processes executed in parallel or individually, even through they are not necessarily processed time-serially.

Further, in the present specification, a system represents the entire part of an apparatus constituted by a plurality of apparatuses and processing sections.

### Industrial Applicability

As in the foregoing, according to the present invention, the service provider can authenticate the user. Further, according to the present invention, when the service provider authenticates the user, the efficiency and security of its authentication can be enhanced.

## Claims

1. In an information processing system configured of first to third information processing apparatuses, said information processing system is **characterized in that**:
said first information processing apparatus generates a first cryptographic key and a second cryptographic key to be paired with said first cryptographic key which can be utilized by a predetermined authentication technique, sends said generated first cryptographic key to said second information processing apparatus, and also sends said generated second cryptographic key to said third information processing apparatus;
said second information processing apparatus receives said first cryptographic key sent by said first information processing apparatus, and holds;
said third information processing apparatus receives said second cryptographic key sent by said first information processing apparatus, and holds; and
said second information processing apparatus authenticates said third information processing apparatus by utilizing said held first cryptographic key and said second cryptographic key held by said third information processing apparatus, based on said authentication technique.

2. The information processing system according to claim 1, **characterized in that**:
said authentication technique is common key authentication; and
said first cryptographic key and said second cryptographic key are identical cryptographic keys.

3. The information processing system according to claim 1, **characterized in that**:
said authentication technique is public key authentication; and
said first cryptographic key and said second cryptographic key are different cryptographic keys.

4. In an information processing method for an information processing system configured of first to third information processing apparatuses, said information processing method is **characterized in that**:
said first information processing apparatus generates a first cryptographic key and a second cryptographic key to be paired with said first cryptographic key which can be utilized by a predetermined authentication technique, sends said generated first cryptographic key to said second information processing apparatus, and sends said generated second cryptographic key to said third information processing apparatus;
said second information processing apparatus receives said first cryptographic key sent by said first information processing apparatus, and holds;
said third information processing apparatus receives said second cryptographic key sent by said first information processing apparatus, and holds; and
said second information processing apparatus authenticates said third information processing apparatus by utilizing said held first cryptographic key and said second cryptographic key held by said third information processing apparatus.

5. An information processing apparatus **characterized by** comprising:
generation means for generating a first cryptographic key and a second cryptographic key to be paired with said first cryptographic key which are utilized when another first information processing apparatus authenticates another second information processing apparatus based on a predetermined authentication technique; and
sending means for sending said first cryptographic key generated by said generation means to said another first information processing apparatus, and sending said second cryptographic key generated by said generation means to said another second information processing apparatus.

6. The information processing apparatus according to claim 5, **characterized in that**:
said authentication technique is common key authentication; and
said first cryptographic key and said second cryptographic key generated by said generation means are identical cryptographic keys.

7. The information processing apparatus according to claim 5, **characterized in that**:
said authentication technique is public key authentication; and
said first cryptographic key and said second cryptographic key generated by said generation means are different cryptographic keys.

8. The information processing apparatus according to claim 5, **characterized by** further comprising
identification means for identifying, when information for authentication is inputted or a predetermined apparatus utilized for authentication is connected, to said another second information processing apparatus, a user who inputs said information or said connected apparatus,
wherein said generation means generates said first and said second cryptographic keys when said user who inputs said information to said another second information processing apparatus or said apparatus connected to said another second information processing apparatus is identified by said identification means.

9. The information processing apparatus according to claim 8, **characterized in that**
said identification means identifies said user who inputs said information to said another second information processing apparatus or said apparatus connected to said another second information processing apparatus, by using SSL (Secure Socket Layer), or TLS (Transport Layer Security).

10. The information processing apparatus according to claim 5, **characterized by** further comprising
billing means for fixing a fee for a service provided to said another second information processing apparatus to be authenticated by said another first information processing apparatus, which is other party to whom said first cryptographic key is sent by said sending means, by utilizing said first and said second keys when said first and said second cryptographic keys are generated by said generation means, and billing said user who inputs said information to said another second information processing apparatus, identified by said identification means, or a user identified by said apparatus connected to said another second information processing apparatus, identified by said identification means, for said fee for said service.

11. The information processing apparatus according to claim 10, **characterized in that**
said billing means bills said another second information processing apparatus for said fee for said service, and further, for a fee for said first and said second cryptographic keys generated by said generation means.

12. In an information processing method for an information processing apparatus, said information processing method is **characterized by** comprising:
a generation step of generating a first cryptographic key and a second cryptographic key to be paired with said first cryptographic key which are utilized when another first information processing apparatus authenticates another second information processing apparatus based on a predetermined authentication technique; and
a sending step of sending said first cryptographic key generated by said generation step to said another first information processing apparatus, and sending said second cryptographic key generated by said generation means to said another second information processing apparatus.

13. A recording medium being recorded therein a computer-readable program, said program for a computer that controls an information processing apparatus is **characterized by** comprising: .
a generation step of generating a first cryptographic key and a second cryptographic key to be paired with said first cryptographic key which are utilized when another first information processing apparatus authenticates another second information processing apparatus based on a predetermined authentication technique; and
a sending step of sending said first cryptographic key generated by said generation step to said another first information processing apparatus, and further sending said second cryptographic key generated by said generation means to said another second information processing apparatus.

14. A program **characterized by** causing a computer that controls an information processing apparatus to execute:
a generation step of generating a first cryptographic key and a second cryptographic key to be paired with said first cryptographic key which are utilized when another first information processing apparatus authenticates another second information processing apparatus based on a predetermined authentication technique; and
a sending step of sending said first cryptographic key generated by said generation step to said another first information processing apparatus, and sending said second cryptographic key generated by said generation means to said another second information processing apparatus.

15. An information processing apparatus **characterized by** comprising:
receiving means for receiving, of a first cryptographic key and a second cryptographic key to be paired with said first cryptographic key which are sent by another first information processing apparatus and which can be utilized by a predetermined authentication technique, at least said first cryptographic key;
holding means for holding said first cryptographic key received by said receiving means; and
authentication means for authenticating said another second information processing apparatus by utilizing said first cryptographic key held by said holding means and said second cryptographic key held by said another second information processing apparatus, based on said authentication technique.

16. The information processing apparatus according to claim 15, **characterized in that**:
said authentication technique is common key authentication; and
said first cryptographic key and said second cryptographic key are identical cryptographic keys.

17. The information processing apparatus according to claim 15, **characterized in that**:
said authentication technique is public key authentication; and
said first cryptographic key and said second cryptographic key are different cryptographic keys.

18. In an information processing method for an information processing apparatus, said information processing method is **characterized by** comprising:
a receiving step of receiving, of a first cryptographic key and a second cryptographic key to be paired with said first cryptographic key which are sent by another first information processing apparatus and which can be utilized by a predetermined authentication technique, at least said first cryptographic key;
a holding step of holding said first cryptographic key received by said receiving step; and
an authentication step of authenticating said another second information processing apparatus by utilizing said first cryptographic key held by said holding step and said second cryptographic key held by said another second information processing apparatus, based on said authentication technique.

19. A recording medium being recorded therein a computer-readable program, said program for a computer that controls an information processing apparatus is **characterized by** comprising:
a receiving step of receiving, of a first cryptographic key and a second cryptographic key to be paired with said first cryptographic key which are sent by another first information processing apparatus and which can be utilized by a predetermined authentication technique, at least said first cryptographic key;
a holding step of holding said first cryptographic key received by said receiving step; and
an authentication step of authenticating said another second information processing apparatus by utilizing said first cryptographic key held by said holding step and said second cryptographic key held by said another second information processing apparatus, based on said authentication technique.

20. A program **characterized by** causing a computer that controls an information processing apparatus to execute:
a receiving step of receiving, of a first cryptographic key and a second cryptographic key to be paired with said first cryptographic key which are sent by another first information processing apparatus and which can be utilized by a predetermined authentication technique, at least said first cryptographic key;
a holding step of holding said first cryptographic key received by said receiving step; and
an authentication step of authenticating said another second information processing apparatus by utilizing said first cryptographic key held by said holding step and said second cryptographic key held by said another second information processing apparatus, based on said authentication technique.

21. An information processing apparatus **characterized by** comprising:
receiving means for receiving, of a first cryptographic key and a second cryptographic key to be paired with said first cryptographic key which are sent by another first information processing apparatus and which can be utilized by a predetermined authentication technique, at least said second cryptographic key;
holding means for holding said second cryptographic key received by said receiving means; and
response means for sending a predetermined response to another second information processing apparatus by utilizing said second cryptographic key held by said holding means, when said information processing apparatus is authenticated by said another second information processing apparatus which holds said first cryptographic key, based on said authentication technique.

22. The information processing apparatus according to claim 21, **characterized in that**:
said authentication technique is common key authentication; and
said first cryptographic key and said second cryptographic key are identical cryptographic keys.

23. The information processing apparatus according to claim 21, **characterized in that**:
said authentication technique is public key authentication; and
said first cryptographic key and said second cryptographic key are different cryptographic keys.

24. The information processing apparatus according to claim 21, **characterized by** further comprising
input means for inputting information for authentication by said another second information processing.

25. The information processing apparatus according to claim 21, **characterized by** further comprising
connection means for connecting a predetermined apparatus which is utilized when authenticated by said another second information processing apparatus.

26. The information processing apparatus according to claim 21, **characterized in that**
said apparatus connected to said connection means is an IC card.

27. The information processing apparatus according to claim 21, **characterized in that**
said holding means is tamper-proof.

28. In an information processing method for an information processing apparatus, said information processing method is **characterized by** comprising:
a receiving step of receiving, of a first cryptographic key and a second cryptographic key to be paired with said first cryptographic key which are sent by another first information processing apparatus and which can be utilized by a predetermined authentication technique, at least said second cryptographic key;
a holding control step of controlling holding of said second cryptographic key received by said receiving step; and
a response step of sending a predetermined response to another second information processing apparatus by utilizing said second cryptographic key, holding of which is controlled by said holding control step, when said information processing apparatus is authenticated by said another second information processing apparatus which holds said first cryptographic key, based on said authentication technique.

29. A recording medium being recorded therein a computer-readable program, said program for a computer that controls an information processing apparatus is **characterized by** comprising:
a receiving step of receiving, of a first cryptographic key and a second cryptographic key to be paired with said first cryptographic key which are sent by another first information processing apparatus and which can be utilized by a predetermined authentication technique, at least said second cryptographic key;
a holding control step of controlling holding of said second cryptographic key received by said receiving step; and
a response step of sending a predetermined response to another second information processing apparatus by utilizing said second cryptographic key, holding of which is controlled by said holding control step, when said information processing apparatus is authenticated by said another second information processing apparatus which holds said first cryptographic key, based on said authentication technique.

30. A program **characterized by** causing a computer that controls an information processing apparatus to execute:
a receiving step of receiving, of a first cryptographic key and a second cryptographic key to be paired with said first cryptographic key which are sent by another first information processing apparatus and which can be utilized by a predetermined authentication technique, at least said first cryptographic key;
a holding control step of controlling holding of said second cryptographic key received by said receiving step; and
a response step of sending a predetermined response to another second information processing apparatus by utilizing said second cryptographic key, holding of which is controlled by said holding control step, when said information processing apparatus is authenticated by said another second information processing apparatus which holds said first cryptographic key, based on said authentication technique.

31. In an information processing system configured of first to third information processing apparatuses, said information processing system is **characterized in that**:
said first information processing apparatus generates request information for requesting generation of a first cryptographic key and a second cryptographic key to be paired with said first cryptographic key which can be utilized by a predetermined authentication technique, for sending to said second information processing apparatus;
said second information processing apparatus generates, when receiving said request information from said first information processing apparatus, each of said first cryptographic key and said second cryptographic key, sends said generated first cryptographic key to said third information processing apparatus, and holds said generated second cryptographic key;
said third information processing apparatus receives said first cryptographic key sent by said second information processing apparatus, and holds; and
said third information processing apparatus authenticates said second information processing apparatus by utilizing said held first cryptographic key and said second cryptographic key held by said second information processing apparatus, based on said authentication technique.

32. The information processing apparatus according to claim 31, **characterized in that**:
said authentication technique is public key authentication; and
said first cryptographic key and said second cryptographic key are different cryptographic keys.

33. In an information processing method for an information processing system configured of first to third information processing apparatuses, said information processing method is **characterized in that**:
said first information processing apparatus generates request information for requesting generation of a first cryptographic key and a second cryptographic key to be paired with said first cryptographic key which can be utilized by a predetermined authentication technique, for sending to said second information processing apparatus;
said second information processing apparatus generates, when receiving said request information from said first information processing apparatus, each of said first cryptographic key and said second cryptographic key, sends said generated first cryptographic key to said third information processing apparatus, and holds said generated second cryptographic key;
said third information processing apparatus receives said first cryptographic key sent by said second information processing apparatus, and holds; and
said third information processing apparatus authenticates said second information processing apparatus by utilizing said held first cryptographic key and said second cryptographic key held by said second information processing apparatus, based on said authentication technique.

34. An information processing apparatus **characterized by** comprising:
generation means for generating request information for requesting generation of a first cryptographic key and a second cryptographic key to be paired with said first cryptographic key which are utilized when another first information processing apparatus authenticates another second information processing apparatus based on a predetermined authentication technique; and
sending means for sending said request information generated by said generation means to said another second information processing apparatus.

35. The information processing apparatus according to claim 34, **characterized in that**:
said authentication technique is public key authentication; and
said first cryptographic key and said second cryptographic key generated by said generation means are different cryptographic keys.

36. The information processing apparatus according to claim 34, **characterized by** further comprising
identification means for identifying, when information for authentication is inputted or a predetermined apparatus utilized for authentication is connected, to said another second information processing apparatus, a user who inputs said information or said connected apparatus,
wherein said generation means generates said request information when said user who inputs said information to said another second information processing apparatus or said apparatus connected to said another second information processing apparatus is identified.

37. The information processing apparatus according to claim 36, **characterized in that**
said identification means identifies said user who inputs said information to said another second information processing apparatus or said apparatus connected to said another second information processing apparatus, by using SSL (Secure Socket Layer), or TLS (Transport Layer Security).

38. The information processing apparatus according to claim 34, **characterized by** further comprising
billing means for fixing a fee for a service provided to said another second information processing apparatus to be authenticated by said another first information processing apparatus by utilizing said first key and said second key when said request information is sent to said another second information processing apparatus by said sending means, and billing said user who inputs said information to said another second information processing apparatus, identified by said identification means, or a user identified by said apparatus connected to said another second information processing apparatus, identified by said identification means, for said fee for said service.

39. The information processing apparatus according to claim 38, **characterized in that**
said billing means bills said another second information processing apparatus for said fee for said service, and further, for a fee for said first and said second cryptographic keys generated by said another second information processing apparatus in response to said request information sent to said another second information processing apparatus by said sending means.

40. In an information processing method for an information processing apparatus, said information processing method is
**characterized by** comprising:
a generation step of generating request information for requesting generation of a first cryptographic key and a second cryptographic key to be paired with said first cryptographic key which are utilized when another first information processing apparatus authenticates another second information processing apparatus based on a predetermined authentication technique; and
a sending step of sending said request information generated by said generation step to said another second information processing apparatus.

41. A recording medium being recorded therein a computer-readable program, said program for a computer that controls an information processing apparatus is **characterized by** comprising
a generation step of generating request information for requesting another second information processing apparatus to generate a first cryptographic key and a second cryptographic key to be paired with said first cryptographic key which are utilized when another first information processing apparatus authenticates said another second information processing apparatus based on a predetermined authentication technique.

42. A program **characterized by** causing a computer that controls an information processing apparatus to execute
a generation step of generating request information for requesting another second information processing apparatus to generate a first cryptographic key and a second cryptographic key to be paired with said first cryptographic key which are utilized when another first information processing apparatus authenticates said another second information processing apparatus based on a predetermined authentication technique.

43. An information processing apparatus **characterized by** comprising:
receiving means for receiving, when another second processing apparatus generates a first cryptographic key and a second cryptographic key to be paired with said first cryptographic key which can be utilized by a predetermined authentication technique and sends said generated first cryptographic key at a request of another first information processing apparatus, said first cryptographic key;
holding means for holding said first cryptographic key received by said receiving means; and
authentication means for authenticating said another second information processing apparatus by utilizing said first cryptographic key held by said holding means and said second cryptographic key held by said another second information processing apparatus, based on said authentication technique.

44. The information processing apparatus according to claim 43, **characterized in that**:
said authentication technique is public key authentication; and
said first cryptographic key and said second cryptographic key are different cryptographic keys.

45. In an information processing method for an information processing apparatus, said information processing method is **characterized by** comprising:
a receiving step of receiving, when another second processing apparatus generates a first cryptographic key and a second cryptographic key to be paired with said first cryptographic key which can be utilized by a predetermined authentication technique and sends said generated first cryptographic key at a request of another first information processing apparatus, said first cryptographic key;
a holding step of holding said first cryptographic key received by said receiving step; and
an authentication step of authenticating said another second information processing apparatus by utilizing said first cryptographic key held by said holding step and said second cryptographic key held by said another second information processing apparatus, based on said authentication technique.

46. A recording medium being recorded therein a computer-readable program, said program for a computer that controls an information processing apparatus is **characterized by** comprising
an authentication step of authenticating another second information processing apparatus by utilizing, of a first cryptographic key and a second cryptographic key to be paired with said first cryptographic key which can be utilized by a predetermined technique and which are generated by said another second information processing apparatus based on a request by another first information processing apparatus, said first cryptographic key held by said information processing apparatus itself and said second cryptographic key held by said another second information processing apparatus, based on said authentication technique.

47. A program **characterized by** causing a computer that controls an information processing apparatus to execute
an authentication step of authenticating another second information processing apparatus by utilizing, of a first cryptographic key and a second cryptographic key to be paired with said first cryptographic key which can be utilized by a predetermined technique and which are generated by said another second information processing apparatus based on a request by another first information processing apparatus, said first cryptographic key held by said information processing apparatus itself and said second cryptographic key held by said another second information processing apparatus, based on said authentication technique.

48. An information processing apparatus **characterized by** comprising:
receiving means for receiving request information, sent by another first information processing apparatus, for requesting generation of a first cryptographic key and a second cryptographic key to be paired with said first cryptographic key which can be utilized by a predetermined authentication technique;
key generation means for generating said first cryptographic key and said second cryptographic key based on said request information received by said receiving means;
sending means for sending said first cryptographic key of said first cryptographic key and said second cryptographic key generated by said key generation means, to another second information processing apparatus;
holding means for holding said second cryptographic key of said first cryptographic key and said second cryptographic key generated by said key generation means; and
response means for generating a predetermined response by utilizing said second cryptographic key held by said holding means, when said information processing apparatus is authenticated by said another second information processing apparatus which holds said first cryptographic key sent by said sending means based on said authentication technique,
wherein said sending means sends said response generated by said response generation means to said another second information processing apparatus.

49. The information processing apparatus according to claim 48, **characterized in that**:
said authentication technique is public key authentication; and
said first cryptographic key and said second cryptographic key are different cryptographic keys.

50. The information processing apparatus according to claim 48, **characterized in that**
said key generation means newly generates said first cryptographic key and said second cryptographic key after said request information is received by said receiving means.

51. The information processing apparatus according to claim 48, **characterized in that**:
said holding means holds a plurality of first cryptographic key candidates and a plurality of second cryptographic key candidates to be paired respectively with said plurality of first cryptographic key candidates beforehand; and
said key generation means extracts a predetermined first cryptographic key candidate and a second cryptographic key candidate to be paired therewith, of said plurality of first cryptographic key candidates and plurality of second cryptographic key candidates held by said holding means beforehand, to make said extracted first cryptographic key candidate said first cryptographic key and make said extracted second cryptographic key candidate said second cryptographic key, whereby to generate said first cryptographic key and said second cryptographic key.

52. The information processing apparatus according to claim 51, **characterized in that**
said key generation means generates said plurality of first cryptographic key candidates and said plurality of second cryptographic key candidates.

53. The information processing apparatus according to claim 48, **characterized by** further comprising
input means for inputting information for authentication by said another second information processing apparatus.

54. The information processing apparatus according to claim 48, **characterized by** further comprising
connection means for connecting a predetermined apparatus which is utilized when authenticated by said another second information processing apparatus.

55. The information processing apparatus according to claim 54, **characterized in that**
said apparatus connected to said connection means is an IC card.

56. The information processing apparatus according to claim 48, **characterized in that**
said holding means is tamper-proof.

57. In an information processing method for an information processing apparatus, said information processing method is **characterized by** comprising:
a receiving step of receiving request information, sent by another first information processing apparatus, for requesting generation of a first cryptographic key and a second cryptographic key to be paired with said first cryptographic key which can be utilized by a predetermined authentication technique;
a key generation step of generating said first cryptographic key and said second cryptographic key based on said request information received by said receiving step;
a key sending step of sending said first cryptographic key of said first cryptographic key and said second cryptographic key generated by said key generation step, to another second information processing apparatus;
a holding step of holding said second cryptographic key of said first cryptographic key and said second cryptographic key generated by said key generation step;
a response generation step of generating a predetermined response by utilizing said second cryptographic key held by said holding step, when said information processing apparatus is authenticated by said another second information processing apparatus which holds said first cryptographic key sent by said key sending step, based on said authentication technique; and
a response sending step of sending said response generated by said response step, to said another second information processing apparatus.

58. A recording medium being recorded therein a computer-readable program, said program for a computer that controls an information processing apparatus is **characterized by** comprising:
a key generation step of generating, based on request information sent from another second information processing apparatus to said information processing apparatus for requesting generation of a first cryptographic key and a second cryptographic key to be paired with said first cryptographic key which can be utilized by a predetermined authentication technique, said first cryptographic key to be transmitted to another second information processing apparatus, and said second cryptographic key to be held by said information processing apparatus; and
a response generation step of generating a predetermined response by utilizing said second cryptographic key held by said information processing apparatus, when said information processing apparatus is authenticated by said another second information processing apparatus which holds said transmitted first cryptographic key, based on said authentication technique.

59. A program **characterized by** causing a computer that controls an information processing apparatus to execute:
a key generation step of generating, based on request information sent from another second information processing apparatus to said information processing apparatus for requesting generation of a first cryptographic key and a second cryptographic key to be paired with said first cryptographic key which can be utilized by a predetermined authentication technique, said first cryptographic key to be transmitted to another second information processing apparatus, and said second cryptographic key to be held by said information processing apparatus; and
a response generation step of generating a predetermined response by utilizing said second cryptographic key held by said information processing apparatus, when said information processing apparatus is authenticated by said another second information processing apparatus which holds said transmitted first cryptographic key, based on said authentication technique.
